# EUROPEAN PATENT APPLICATION

(11) **EP 4 583 494 A1**
(43) Date of publication of application: **09.07.2025**
(21) Application number: 23865319.0
(22) Date of filing: 31.08.2023
(51) Int. Cl.: H04L 67/567, G06Q 50/10

(54) **INFORMATION PROCESSING DEVICE, INFORMATION PROCESSING METHOD, AND PROGRAM**

(30) Priority: 12.09.2022 JP 2022144561
(71) Applicant: Sony Group Corporation, Tokyo 108-0075 (JP)
(72) Inventor: OKA, Takeshi, Tokyo 108-0075 (JP); MURATA, Yuki, Tokyo 108-0075 (JP); CHIBA, Ayako, Tokyo 108-0075 (JP); BAMBA, Sadamichi, Tokyo 108-0075 (JP); YAMAGAMI, Rui, Tokyo 108-0075 (JP); KOBAYASHI, Sho, Tokyo 108-0075 (JP); NUNOMAKI, Takashi, Tokyo 108-0075 (JP); NAKA, Daisuke, Tokyo 108-0075 (JP); KASA, Masanori, Tokyo 108-0075 (JP); KAZAMA, Ryouta, Tokyo 108-0075 (JP); KAWATA, Haruka, Tokyo 108-0075 (JP); KODAMA, Hirotoshi, Tokyo 141-0022 (JP); SASAKI, Yusuke, Tokyo 141-0022 (JP); NAKAYAMA, Ryosuke, Tokyo 108-0075 (JP)
(74) Representative: D Young & Co LLP
(86) International application number: PCT/JP2023/031940
(87) International publication number: WO 2024/057964

(57) **Abstract**

An information processing apparatus includes a control unit that acquires predetermined information from a specific storage that commonly manages the predetermined information used in a plurality of services each of which is capable of browsing information via application software or a website, and executes information presentation using the predetermined information by each of the plurality of services.

## Description

### TECHNICAL FIELD

The present technology relates to an information processing apparatus, an information processing method, and a program, and relates to a technology that can be applied to, for example, a service that provides various types of information.

### BACKGROUND ART

Recently, various information providing services in the form of access to application software or a website have been realized using a terminal apparatus such as a personal computer (PC), a smartphone, or tablet equipment.

Patent Document 1 below describes a service for creating an image collection based on image data captured in an event.

### CITATION LIST

### PATENT DOCUMENT

Patent Document 1: WO 2022/070825 A

### SUMMARY OF THE INVENTION

### PROBLEMS TO BE SOLVED BY THE INVENTION

A user is in an environment in which he/she can use various services using a smartphone or a PC. However, in a case where consideration is given to using a plurality of services, provision of more effective information for a user who browses the services and usability with high operation efficiency are required.

Therefore, the present disclosure proposes a technique for improving accuracy of information to be provided and usability at the time of browsing in a case where use of a plurality of services by a user is assumed.

### SOLUTIONS TO PROBLEMS

An information processing apparatus according to the present technology includes a control unit that acquires predetermined information from a specific storage that commonly manages the predetermined information used in a plurality of services each of which is capable of browsing information via application software or a website, and executes information presentation using the predetermined information by each of the plurality of services.

For example, in an information processing apparatus as a terminal apparatus used by a user, processing of presenting screens of a plurality of services to the user is performed. The predetermined information used for information presentation in the plurality of services is acquired from, for example, a specific storage managed by a server.

Furthermore, for example, an information processing apparatus as a server of a service provides (transmits) and presents screens of a plurality of services to a terminal apparatus on a user side. The predetermined information used for information presentation in the plurality of services is acquired from, for example, a specific storage managed by a server.

### BRIEF DESCRIPTION OF DRAWINGS

Fig. 1 is an explanatory diagram of a system configuration of an embodiment of the present technology.
Fig. 2 is an explanatory diagram of an example of a plurality of services of the embodiment.
Fig. 3 is an explanatory diagram of a portal service of the embodiment.
Fig. 4 is an explanatory diagram of a camera registration function in a service of the embodiment.
Fig. 5 is an explanatory diagram of a camera self-diagnosis function in a service of the embodiment.
Fig. 6 is an explanatory diagram of a camera update function in a service of the embodiment.
Fig. 7 is an explanatory diagram of storage contents of a storage of the embodiment.
Fig. 8 is a block diagram of a hardware configuration of a server apparatus and a terminal apparatus of the embodiment.
Fig. 9 is a flowchart of processing at the time of activation of a portal service of the embodiment.
Fig. 10 is a flowchart of processing from a home screen of the portal service of the embodiment.
Fig. 11 is a flowchart of processing of camera initial setting of the portal service of the embodiment.
Fig. 12 is an explanatory diagram of a screen related to wireless communication connection of the embodiment.
Fig. 13 is an explanatory diagram of a screen related to camera initial setting of the embodiment.
Fig. 14 is an explanatory diagram of a screen related to camera initial setting of the embodiment.
Fig. 15 is an explanatory diagram of the home screen of the portal service of the embodiment.
Fig. 16 is an explanatory diagram of an announcement screen of the embodiment.
Fig. 17 is a flowchart of processing of a device screen of the embodiment.
Fig. 18 is a flowchart of processing of a device screen of the embodiment.
Fig. 19 is a flowchart of processing of a device screen of the embodiment.
Fig. 20 is an explanatory diagram of the device screen of the embodiment.
Fig. 21 is an explanatory diagram of an owned equipment list screen of the embodiment.
Fig. 22 is an explanatory diagram of a view/import screen of the embodiment.
Fig. 23 is an explanatory diagram of a remote operation screen of the embodiment.
Fig. 24 is an explanatory diagram of a setup screen and a transfer notification setting screen of the embodiment.
Fig. 25 is an explanatory diagram of a position information linkage setting screen of the embodiment.
Fig. 26 is an explanatory diagram of an update notification screen of the embodiment.
Fig. 27 is a flowchart of processing of a store screen of the embodiment.
Fig. 28 is an explanatory diagram of the store screen of the embodiment.
Fig. 29 is a flowchart of processing of a storage screen of the embodiment.
Fig. 30 is an explanatory diagram of the storage screen of the embodiment.
Fig. 31 is an explanatory diagram of an image selection screen of the embodiment.
Fig. 32 is a flowchart of processing of a network service of the embodiment.
Fig. 33 is an explanatory diagram of a gallery screen of the embodiment.
Fig. 34 is a flowchart of processing of a discovery screen of the embodiment.
Fig. 35 is an explanatory diagram of the discovery screen of the embodiment.
Fig. 36 is an explanatory diagram of a search character input on the discovery screen of the embodiment.
Fig. 37 is a flowchart of processing of an article screen of the embodiment.
Fig. 38 is an explanatory diagram of the article screen of the embodiment.
Fig. 39 is a flowchart of processing of a project detail screen of the embodiment.
Fig. 40 is a flowchart of processing of the project detail screen of the embodiment.
Fig. 41 is an explanatory diagram of the project detail screen of the embodiment.
Fig. 42 is an explanatory diagram of a full display screen of the embodiment.
Fig. 43 is an explanatory diagram of the full display screen of the embodiment.
Fig. 44 is a flowchart of processing of project creation of the embodiment.
Fig. 45 is an explanatory diagram of a project creation screen of the embodiment.
Fig. 46 is a flowchart of processing of a project editing screen of the embodiment.
Fig. 47 is an explanatory diagram of the project editing screen of the embodiment.
Fig. 48 is a flowchart of processing of My Page of the embodiment.
Fig. 49 is an explanatory diagram of a My Page screen of the embodiment.
Fig. 50 is an explanatory diagram of the My Page screen of the embodiment.
Fig. 51 is an explanatory diagram of the My Page screen of the embodiment.
Fig. 52 is a flowchart of processing of profile editing of the embodiment.
Fig. 53 is an explanatory diagram of a profile editing screen of the embodiment.
Fig. 54 is a flowchart of processing of My Page of the embodiment.
Fig. 55 is an explanatory diagram of the My Page screen of the embodiment.

### MODE FOR CARRYING OUT THE INVENTION

Hereinafter, an embodiment will be described in the following order.
<1. System configuration and service>
<2. Configuration of information processing apparatus>
<3. Processing example and screen example>
[3-1: Processing until sign-in]
[3-2: Processing of home screen of portal service]
[3-3: Processing of device screen]
[3-4: Processing of store screen]
[3-5: Processing of storage screen]
[3-6: Processing of top screen of network service]
[3-7: Processing of discovery screen]
[3-8: Processing of article screen]
[3-9: Processing of project detail screen]
[3-10: Processing of project creation screen]
[3-11: Processing of project editing screen]
[3-12: Processing of My Page]
<4. Summary and modification example>

Note that the service described in the embodiment is exemplified by an imaging apparatus or a service that provides information related to a captured image. The imaging apparatus is also referred to as a "camera".

Furthermore, in the present disclosure, "image" includes both a still image and a moving image, and "image data" includes both still image data and moving image data.

Note that, to the extent that a person skilled in the art can normally understand, the term "image" refers not only to an image displayed on a display but also to image data in a state of not being displayed on the display in some cases.

### <1. System configuration and service>

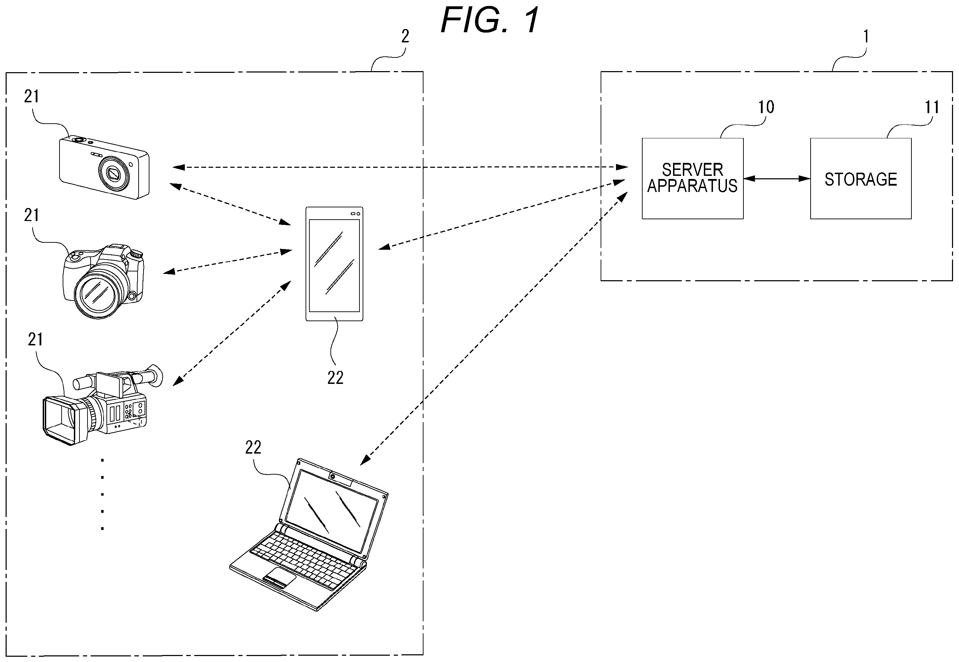

Fig. 1 illustrates a system configuration example of an embodiment. Fig. 1 illustrates a server system 1 and user equipment 2.

The server system 1 includes a server apparatus 10 and a storage 11. The server system 1 functions as a so-called cloud server via a public network. However, the server may not necessarily be in the cloud server form, and may be a server in a local network such as an organization, an association, or a home.

The server apparatus 10 includes one or a plurality of information processing apparatuses, and performs processing of transmitting information to the user equipment 2, receiving upload of information from the user equipment 2, and the like. In particular, the server apparatus 10 performs processing for providing the user side with functions of various services to be described later.

The storage 11 is a so-called cloud storage that stores information necessary for functioning as a cloud server of various services. The storage 11 includes one or a plurality of storage devices. Note that the storage 11 is not limited to the cloud storage, and may have any form as long as it is a storage device that can be accessed by the server apparatus 10.

In the case of the present embodiment, the storage 11 is a common storage corresponding to a plurality of services to be described later, and stores information used in the plurality of services. Details will be described later.

As the user equipment 2 in Fig. 1, an example of equipment owned (or used) by a certain user is exemplified, and a camera 21 and a terminal apparatus 22 such as a smartphone, a PC, or tablet equipment are illustrated.

For example, a user who owns the terminal apparatus 22 such as a smartphone and one or a plurality of cameras 21 owned by the user are assumed. The camera 21 is an imaging apparatus as, for example, a digital still camera, a digital video camera, or the like. Furthermore, the camera 21 may be in any form of a commercial camera, a compact camera, a single-lens reflex camera, a mirrorless camera, a surveillance camera, a fixed installation camera, or the like.

The terminal apparatus 22 can communicate with the server apparatus 10 via, for example, the Internet, a home network, a local area network (LAN), a mobile communication network, or other various networks.

As a result, the user can receive the service provided by the server system 1 using the terminal apparatus 22.

The service in the present disclosure comprehensively refers to an information presentation service in which a user presents various types of information by application software or web browsing in the terminal apparatus 22, and various types of functions implemented in association with the presented information.

In the present embodiment, an example in which a plurality of services provided by the server system 1 cooperate with each other and each service has a function related to the camera 21 owned (or used) by the user will be described.

A user using the camera 21 can transfer an image and various types of information from the camera 21 to the terminal apparatus 22 by communication between the camera 21 and the terminal apparatus 22. Furthermore, various types of information can be transferred from the terminal apparatus 22 to the camera 21.

Furthermore, the user can upload an image and various types of information to the server system 1 by the terminal apparatus 22.

Note that the camera 21 may directly upload images and various types of information to the server system 1.

Furthermore, the user can browse a screen of a service page provided by the server apparatus 10 and execute processing of various functions prepared in the service by activating application software or activating a web browser in the terminal apparatus 22.

It is sufficient that the camera 21 and the terminal apparatus 22 can communicate images, metadata, programs, or the like by any communication method. For example, mutual information communication may be performed by short-range wireless communication such as Bluetooth (registered trademark), wireless fidelity (Wi-Fi: registered trademark), near field communication (NFC: registered trademark), or the like, infrared communication, or the like.

Moreover, the camera 21 and the terminal apparatus 22 may be communicable with each other by wired connection communication such as a wired LAN.

Although the camera 21 and the terminal apparatus 22 are illustrated as the user equipment 2 of one user in Fig. 1, for example, a large number of users having the camera 21 and the terminal apparatus 22 can enjoy information browsing and processing functions by the service provided by the server system 1.

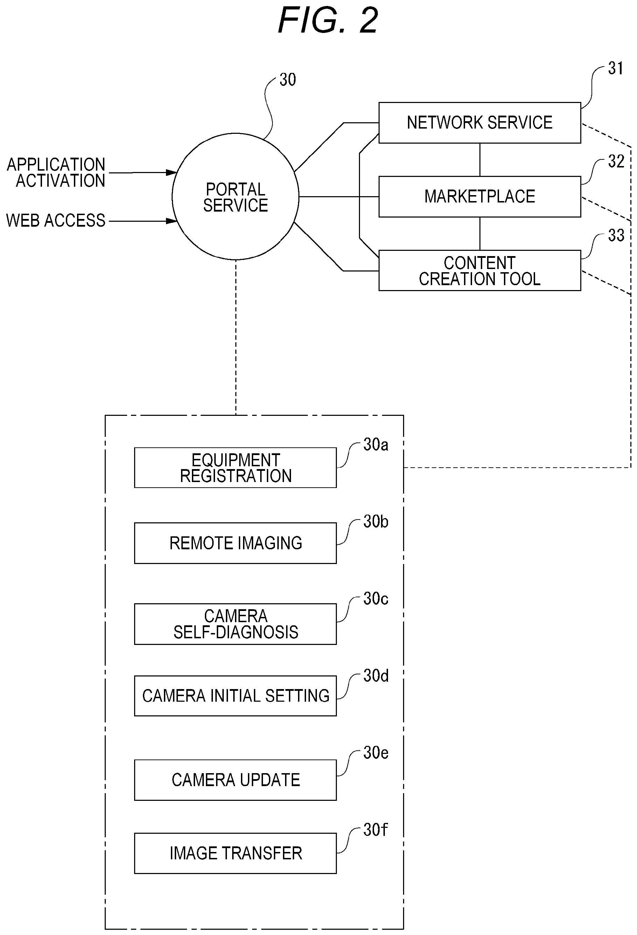

Fig. 2 schematically illustrates a portal service 30, a network service 31, a marketplace 32, and a content creation tool 33 as a plurality of services provided by the server system 1.

Although four services are exemplified, these services are independent services, and users can sign in to each service and use the services. However, the user can arbitrarily transition from the portal service 30 to the network service 31, the marketplace 32, and the content creation tool 33, for example, in a state where the user has signed in to the portal service 30. It is desirable that the sign-in is not required again at the time of the transition. Similarly, for example, in a state where the user is signed in to the network service 31, it is possible to arbitrarily transition to the portal service 30, the marketplace 32, and the content creation tool 33. That is, if the user signs in to one of the services, the user can be in a state of being signed in to another service.

Each of these services is a service having a function of cooperating with the camera 21 used by the user who signs in.

For example, the portal service 30 has a function of uploading image data captured by the camera 21 and performing cloud storage, and a function of facilitating setting related to the camera 21.

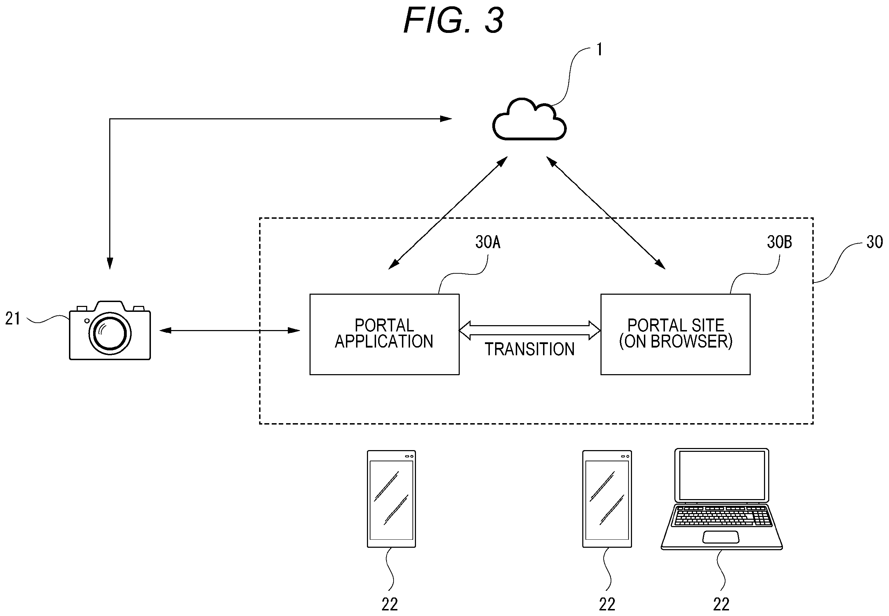

Fig. 3 schematically illustrates a use example of the portal service 30 which is one of service starting points.

For example, the portal service 30 provided by the server system 1 as a cloud server is realized by a portal application 30A which is application software installed in the terminal apparatus 22. Furthermore, for example, it is realized as a portal site 30B by web browsing by a browser in the terminal apparatus 22.

For example, the terminal apparatus 22 can execute the camera cooperative function using the portal application 30A in a state where the communication connection between the terminal apparatus 22 and the camera 21 is established.

Furthermore, for example, even in a state where the terminal apparatus 22 is not communicably connected to the camera 21, the terminal apparatus can also execute browsing of various types of information, account management, presentation of a notice, and the like by the portal site 30B.

Although the above is an example of the usage mode, the portal service 30 may be implemented only by the portal application 30A or may be implemented only by the portal site 30B.

Furthermore, the portal application 30A and the portal site 30B may mutually transition according to a processing function to be executed.

Fig. 2 illustrates functions related to the camera 21 included in the portal service 30. An equipment registration function 30a, a remote imaging function 30b, a camera self-diagnosis function 30c, a camera initial setting function 30d, a camera update function 30e, and an image transfer function 30f.

The equipment registration function 30a is a function of performing processing of registering the camera 21 used by the user on the cloud side.

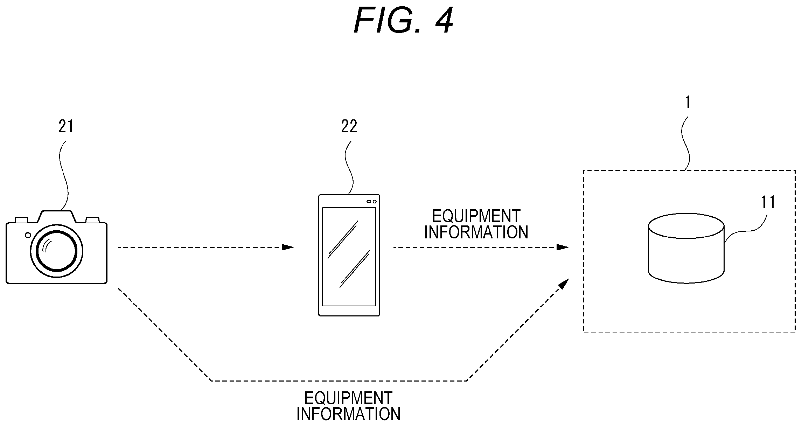

For example, as illustrated in Fig. 4, the terminal apparatus 22 used by the user who has signed in to the portal service 30 can transmit the equipment information of the camera 21 being connected for communication to the server system 1 and store the equipment information in the storage 11 as the information of the camera 21 used by the individual user. Such registration processing may be automatically executed in accordance with the sign-in from the terminal apparatus 22 and the communication connection with the camera 21, or may be performed in accordance with the operation of the user.

Alternatively, during sign-in from the terminal apparatus 22, the camera 21 may directly communicate with the server system 1 to transmit the equipment information and store the equipment information in the storage 11.

The device information transmitted for registration includes, for example, information such as a model name, a model number, a serial number, a name (a default name of the individual or a name set by the user), a version of main body software of the camera 21, and a thumbnail of the device for each individual of the camera 21.

Furthermore, the equipment information is not limited to the camera 21, and may be, for example, a model name, a model number, a year of manufacture, a manufacturer, a name, and the like of a lens barrel as an interchangeable lens and another camera peripheral equipment (so-called accessory equipment).

The user can register equipment such as one or a plurality of the cameras 21 and the lens barrel owned and used by the user in association with the identification information of the user by the portal service 30.

The remote imaging function 30b illustrated in Fig. 2 is a function of displaying an operation image of the camera 21 and transmitting operation information to the camera 21 according to the operation on the terminal apparatus 22 used by the user sign-in to the portal service 30. As a result, the user can remotely operate the camera 21 using the terminal apparatus 22.

In this case, the content of the operation image of the camera 21 can correspond to the model and operation function of the camera 21 to be operated during the communication connection.

The camera self-diagnosis function 30c is a function of diagnosing the state, malfunction, and the like of the camera 21.

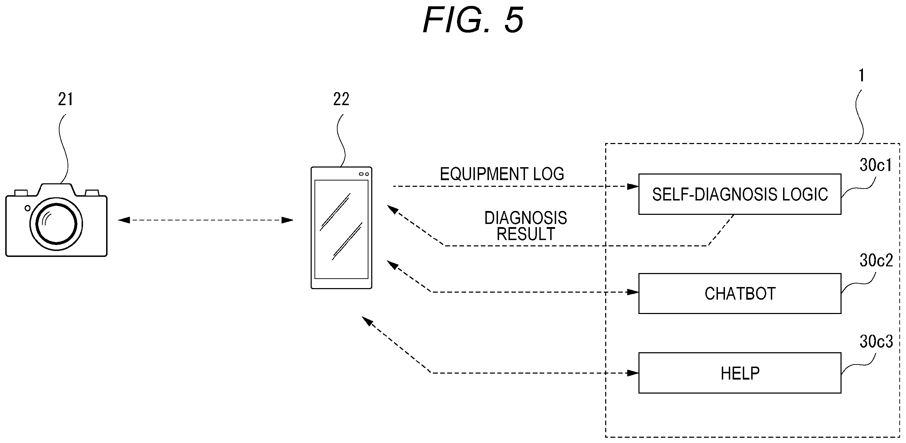

As illustrated in Fig. 5, the terminal apparatus 22 transmits, for example, the equipment log of the camera 21 being connected for communication to the server system 1. The equipment log is log information recorded in a memory inside the camera according to a sequential operation by a microprocessor on the camera 21 side. The terminal apparatus 22 receives the equipment log from the camera 21 side and transfers the equipment log to the server system 1.

In response to this, in the server apparatus 10 of the server system 1, the diagnosis function by the program as a self-diagnosis logic 30c1 is activated, and the diagnosis processing is executed. For example, information of a diagnosis result, information of a necessary handling method, information of a repair recommendation, or the like is generated on the basis of an error record of an equipment log or the like. Furthermore, the server apparatus 10 can perform diagnosis using image data (moving image/still image) captured by the diagnosis target camera 21, uploaded, and stored in the storage 11, and can generate information of a diagnosis result, information of a necessary countermeasure, information of a repair recommendation, or the like. Then, the server apparatus 10 transmits information such as a diagnosis result to the terminal apparatus 22.

The terminal apparatus 22 displays a diagnosis result. For example, a display indicating that no error has been detected, or information indicating a necessary countermeasure or repair recommendation in a case where there is a problem is displayed.

In this case, it is also possible to cooperate with a chatbot function 30c2 and a help function 30c3 prepared by the server apparatus 10.

For example, appropriate help information is provided to the terminal apparatus 22 according to the diagnosis result. In particular, since the equipment information is registered regarding the camera 21, the server apparatus 10 can select frequently asked questions (FAQ), support information, and the like according to the model and function of the diagnosed camera 21 and provide the selected frequently asked questions, support information, and the like to the terminal apparatus 22. Furthermore, the server apparatus 10 can select help information related to the diagnosis result by the self-diagnosis logic 30c1 and provide the selected help information to the terminal apparatus 22.

Furthermore, the terminal apparatus 22 can display a conductive line to the chatbot function 30c2 together with the diagnosis result, and can provide appropriate support information with reference to the diagnosis result in a case where the user needs a chat guide.

A camera initial setting function 30d illustrated in Fig. 2 is a function of performing an initial setting operation of the camera 21 using the terminal apparatus 22. In general, since the camera 21 is designed to give priority to an operation for imaging, operability for a setting operation is lower than that of the terminal apparatus 22 such as a smartphone. For example, in the camera 21, a menu operation or a selection operation is performed using a cross key, a cursor key, or the like, and the operation tends to be troublesome. By providing the camera initial setting function 30d in the portal service 30, the user can perform an initial setting operation of the camera 21 by an operation from the terminal apparatus 22 in a state where the camera 21 and the terminal apparatus 22 are communicably connected. As a result, the initial setting operation of the user can be simplified.

The camera update function 30e is a function of enabling update of the main body software of the camera 21 to be executed via the terminal apparatus 22.

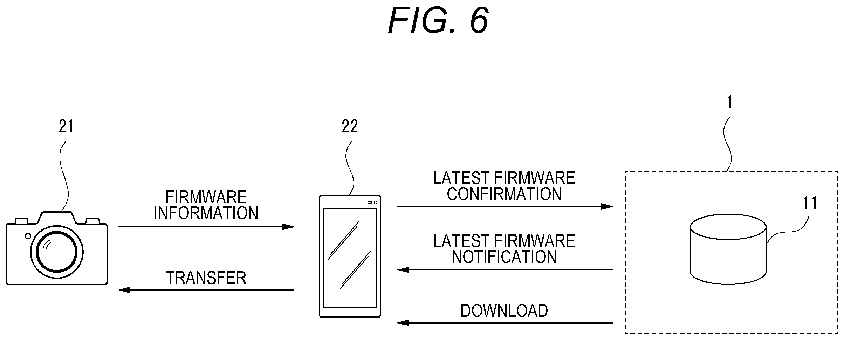

For example, as illustrated in Fig. 6, the terminal apparatus 22 acquires main body software information (name, version, and the like of main body software) from the camera 21 being connected for communication. Then, when using the portal service 30, the terminal apparatus 22 transmits the main body software information to the server system 1 and requests the server system 1 to confirm the latest main body software. In a case where the latest main body software to be updated is present, the server system 1 notifies the terminal apparatus 22 of the presence of the latest main body software. The terminal apparatus 22 presents the fact to the user, downloads the main body software in response to the user performing the update operation, transfers the main body software to the camera 21, and completes the update.

An image transfer function 30f illustrated in Fig. 2 is a function of transferring various images among the camera 21, the terminal apparatus 22, and the server system 1. For example, an image captured by the camera 21, a project created by the user in the network service 31, and the like are transferred to the server system 1. In the server system 1, an image (content), a project including an image, and the like can be stored in the storage 11 in association with the user.

Note that, although details of the project will be described later, the present disclosure is an image work including one or a plurality of images (still images and moving images), a link to a video site, and the like. For example, an example such as an image collection in which images and links (content) selected by the user are arranged according to themes is assumed.

The network service 31, the marketplace 32, and the content creation tool 33 illustrated in Fig. 2 can cooperate with the portal service 30 having the above functions.

The network service 31 is an example of a so-called social networking service (SNS), and is a service that enables a user to create a personal page and transmit information. In the case of the present embodiment, the network service 31 has an aspect as an SNS particularly related to the camera 21, and is a service in which a camera operator/creator can disclose a work as a still image or a moving image or browse a work of another person. Therefore, the network service 31 is regarded as an information transmission tool and an information browsing tool of a camera operator/creator.

The marketplace 32 is a service for goods trading. In the embodiment, the service is a service that provides a place to trade image content captured by the camera 21 or a produced project. Alternatively, application software or a license that is applied to the camera 21 or the terminal apparatus 22 to realize an imaging function, an image processing function, or the like can be used as goods. In particular, this is a service for developing goods suitable for a user who uses the camera 21.

The content creation tool 33 is a service that performs automatic processing on an image material or the like stored in the storage 11.

For example, it is a service that assists content/project creation of a user by causing scene cutting and volume adjustment of a moving image, color adjustment of a moving image and a still image, image size adjustment, and other various types of processing to be executed by artificial intelligence (AI) processing or the like.

The network service 31, the marketplace 32, and the content creation tool 33 cooperate mainly with the portal service 30, for example, and perform information provision and processing of various functions while sharing information.

For example, the equipment registration function 30a, the remote imaging function 30b, the camera self-diagnosis function 30c, the camera initial setting function 30d, the camera update function 30e, and the image transfer function 30f included in the portal service 30 can be appropriately activated from the network service 31, the marketplace 32, and the content creation tool 33.

Furthermore, the information accumulated in the storage 11 in the course of execution of each service can be shared and used by each service.

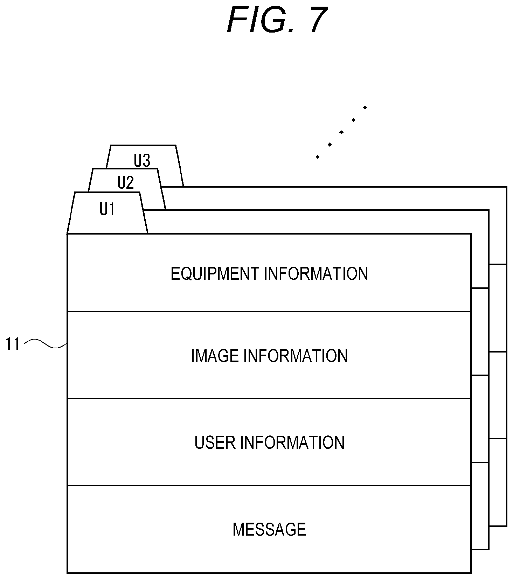

For example, Fig. 7 illustrates an example of information content stored in the storage 11. Equipment information, image information, user information, a message, and the like are stored for each user indicated as identification information U1, U2, U3 ··· of each user.

The equipment information is information regarding the camera 21, the lens barrel, and the like used by the user, registered by the equipment registration function 30a as described above.

Such equipment information is referred to in each function in the portal service 30, referred to for presentation in the network service 31, or referred to for goods selection to be presented in the marketplace 32.

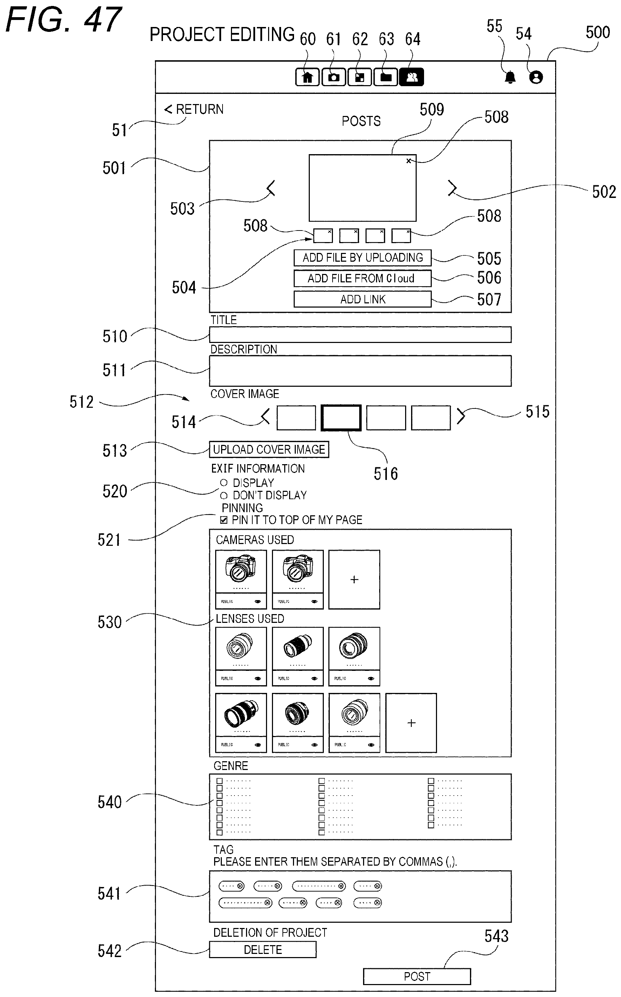

The image information includes content which is an individual image as a still image or a moving image captured by the user, information of a project produced including an image (content), and information related to the content or the project. The information related to the content or the project is assumed to be metadata associated with the content, detailed information of the project (described later with reference to Fig. 47), sales information such as during sale or end of sale of the content or the project in the marketplace 32, processing information by the content creation tool 33, or the like.

These pieces of image information are used as a presentation image in the network service 31, goods in the marketplace 32, a processing target in the content creation tool 33, or the like.

The user information is sign-in information (including account, password, etc.), history information of use of each service of the user, attributes of the user, an activity base, and information regarding various other users.

The user information is used for sign-in of each service, display of a welcome screen, presentation of My Page in the network service 31, and the like.

The message is various kinds of notification information transmitted to the user. For example, a notification generated by the portal service 30, a notification such as "like" for a project created in the network service 31, a notification of follow by another person, a notification regarding sales or purchase in the marketplace 32, a notification regarding image processing by the content creation tool 33, and the like are stored in association with the user.

Note that, in Fig. 7, as an illustrative example, the equipment information, the image information, the user information, the message, and the like are stored according to the identification information of the user in one storage, but the equipment information, the image information, the user information, and the message may be stored in a distributed manner in a separate storage. However, in any case, the server system 1 adopts a structure in which the equipment information, the image information, the user information, and the message are stored for each individual user by being associated with the identification information U1, U2, ···.

### <2. Configuration of information processing apparatus>

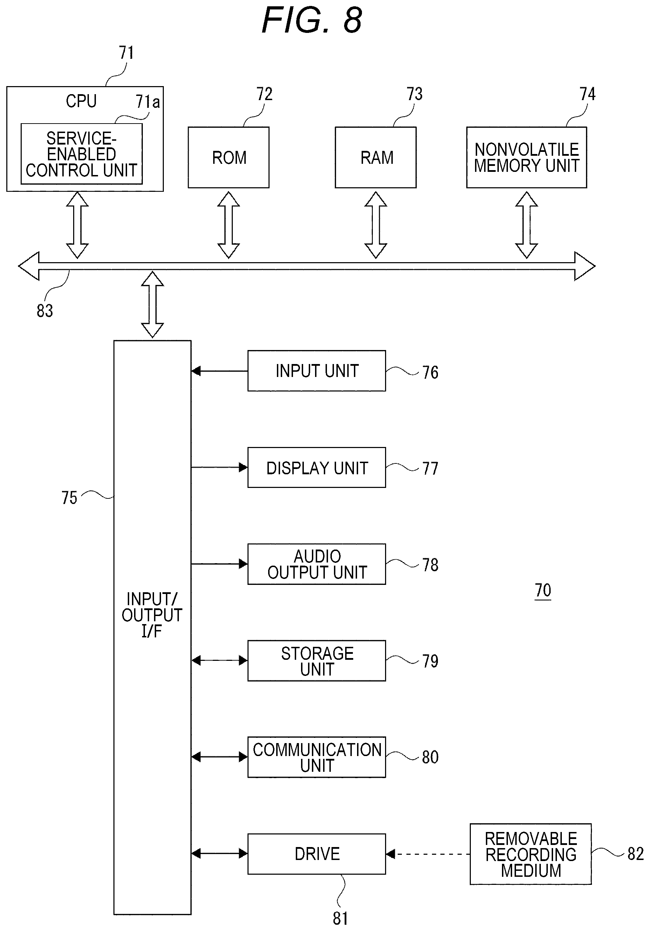

Fig. 8 illustrates a configuration example of an information processing apparatus 70 that can be configured as the server apparatus 10 or the terminal apparatus 22 in Fig. 1. The server apparatus 10 and the terminal apparatus 22 can execute processing to be described later by including the following configuration of the information processing apparatus 70. Furthermore, the camera 21 can also execute processing similar to that of the terminal apparatus 22 by including the following configuration of the information processing apparatus 70.

Specifically, the information processing apparatus 70 in Fig. 8 is a personal computer, a workstation, a portable terminal apparatus such as a smartphone or a tablet, or a computer apparatus configured as a server apparatus or an arithmetic apparatus in cloud computing.

A central processing unit (CPU) 71 of the information processing apparatus 70 executes various types of processing in accordance with a program stored in a non-volatile memory unit 74 such as a read only memory (ROM) 72 or, for example, an electrically erasable programmable read only memory (EEP-ROM), or a program loaded from the storage unit 79 to a random access memory (RAM) 73. The RAM 73 also stores, as appropriate, data and the like necessary for the CPU 71 to perform the various types of processing.

The CPU 71 has a function as a service-enabled control unit 71a. In a case where the CPU 71 accesses the portal service 30, the network service 31, the marketplace 32, and the content creation tool 33 by, for example, an application program or a browser function, the service-enabled control unit 71a represents a control unit that executes a processing function provided by these services.

Note that instead of the CPU 71 or together with the CPU 71, a graphics processing unit (GPU), generalpurpose computing on graphics processing units (GPGPU), an artificial intelligence (AI) processor, or the like may be provided.

The CPU 71, the ROM 72, the RAM 73, and the non-volatile memory unit 74 are connected to each other via a bus 83. Furthermore, an input/output interface 75 is also connected to the bus 83.

An input unit 76 including an operation element and an operation device is connected to the input/output interface 75. As the input unit 76, for example, one of various operators and operation devices including a keyboard, a mouse, a key, a dial, a touch panel, a touch pad, a remote controller, and the like is assumed.

A user operation is detected by the input unit 76, and a signal corresponding to an input operation is interpreted by the CPU 71.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing apparatus 70, a separate display device connected to the information processing apparatus 70, and the like. When the terminal apparatus 22 is a smartphone or tablet equipment, the display unit 77 is provided on a housing thereof. In a case where the terminal apparatus 22 is a PC, the display unit 77 is provided in a main body housing thereof or is realized in a form of a separate monitor device or the like.

The display unit 77 performs display of various images, operation menus, icons, messages, and the like, that is, display as a graphical user interface (GUI), on a display screen on the basis of an instruction from the CPU 71.

In some cases, the storage unit 79 including a hard disk drive (HDD), a solid-state memory, or the like or a communication unit 80 is connected to the input/output interface 75.

The storage unit 79 can store various data and programs. A database can be configured in the storage unit 79.

For example, in a case where the information processing apparatus 70 is an apparatus constituting the server system 1, the storage unit 79 can be used to construct the storage 11.

The communication unit 80 performs communication processing via a transmission path such as the Internet, short-range wireless communication, wired communication with peripheral equipment, or communication based on bus communication or the like.

Furthermore, to the input/output interface 75, as necessary, a drive 81 is connected, and a removable recording medium 82 such as a magnetic disk, an optical disk, an optical magnetic disk, a memory card, or a USB memory is appropriately mounted.

The drive 81 enables image data, various computer programs, and the like to be read from the removable recording medium 82. The read data is stored in the storage unit 79, and an image and audio included in the data are output by the display unit 77 or the audio output unit 78. Furthermore, the computer program and the like read from the removable recording medium 82 are installed in the storage unit 79, as necessary.

In the information processing apparatus 70, for example, a program for the processing in the present embodiment can be installed via network communication by the communication unit 80 or the removable recording medium 82. Alternatively, the program may be stored in advance in the ROM 72, the storage unit 79, or the like.

### <3. Processing example and screen example>

Hereinafter, specific processing examples and screen examples accompanying the functions of the portal service 30 and the network service 31 will be mainly described.

Note that the following processing and screen transition do not indicate all the processing and screen transition realized by the above-described four services, and are only some processing described for the sake of description.

Furthermore, the screen example displayed on the terminal apparatus 22 is an example of a screen displayed on the display unit 77 in Fig. 8, and specifically, is an example of a screen displayed on the display unit 77 on the housing of the smartphone or an integrated or separate display unit 77 in the PC.

Furthermore, the processing example described below will be described as processing in which the terminal apparatus 22 causes the display unit 77 to execute information presentation, but each processing example can also be understood as a processing example of the server apparatus 10, that is, a processing example in which the server apparatus 10 causes the terminal apparatus 22 to execute information presentation.

Furthermore, the above-described four services may be executed as apparently independent services from the user, for example, separate application programs or separate web pages, but may not be apparently independent.

In the present disclosure, each service in a plurality of services is, for example, defined as
· services differentiated by executable function
· services independently provided as billing system
· sign-in (login) independently executable service or the like.

It is assumed that the portal service 30, the network service 31, marketplace 32, and the content creation tool 33 in the present embodiment are services that users can independently sign in and use. However, in a case where the user signs in to one of the services, the sign-in state can be maintained without performing the sign-in operation again for the other services. Note that page browsing and other limited functions can be executed without sign-in.

Furthermore, the portal service 30, the network service 31, the marketplace 32, and the content creation tool 33 according to the present embodiment have different functions, and can be said to be services classified according to executable functions.

Moreover, the portal service 30, the network service 31, the marketplace 32, and the content creation tool 33 may be available for free, or may be available with different fee systems.

### [3-1: Processing until sign-in]

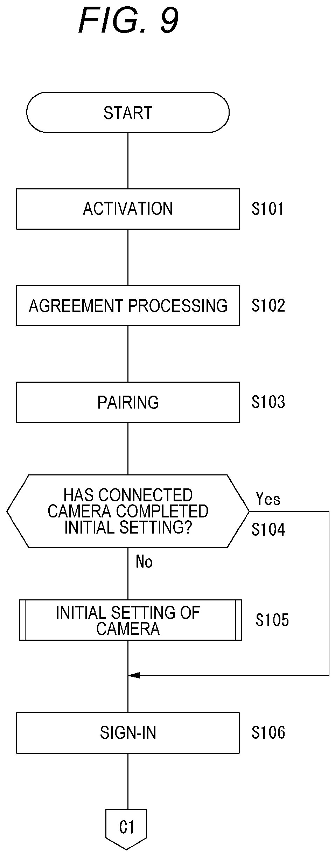

Figs. 9, 10, and 11 are processing examples at the time of execution of the portal service 30 in the terminal apparatus 22 having the configuration as the information processing apparatus 70 in Fig. 8. The processing of the terminal apparatus 22 in the following description is processing of the CPU 71 of the information processing apparatus 70 as the terminal apparatus 22. In particular, the following processing of the terminal apparatus 22 can be said to be processing of the service-enabled control unit 71a in Fig. 8. Furthermore, the processing of the server apparatus 10 is processing of the CPU 71 of the information processing apparatus 70 serving as the server apparatus 10.

Note that, in each flowchart in the present disclosure, "c1" to "c15" indicate connection of processing.

First, Fig. 9 illustrates processing from activation of an application program as the portal service 30 in the terminal apparatus 22 to sign-in.

In step S101, the terminal apparatus 22 starts the application program of the portal service 30. Note that a browser may be activated in the terminal apparatus 22 to access the web page of the portal service 30.

In step S102, the terminal apparatus 22 performs necessary agreement processing. For example, processing of obtaining the user's permission to use the software and agreement of the privacy policy is performed as necessary.

In step S103, the terminal apparatus 22 performs pairing processing with the camera 21. For example, communication between the terminal apparatus 22 and the camera 21 is established by short-range wireless communication such as Bluetooth.

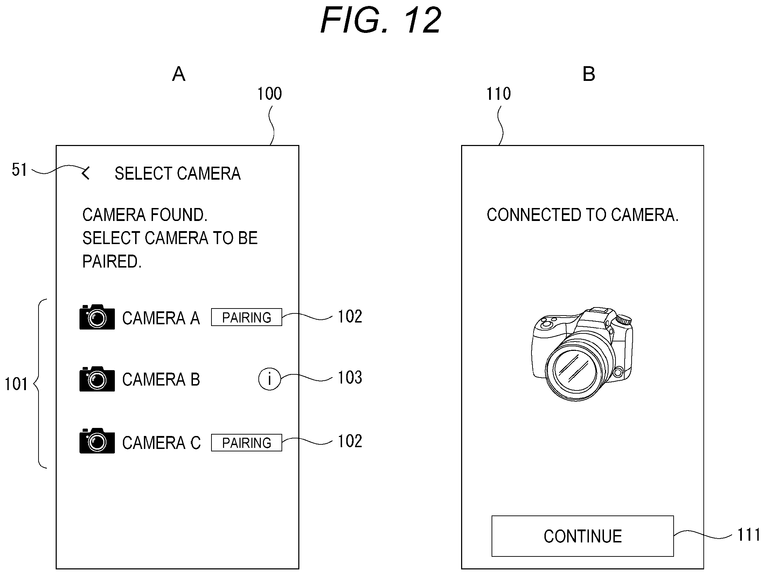

At the time of communication connection, the camera 21 capable of communication, that is, the camera 21 existing around the terminal apparatus 22 and having a wireless communication function is searched for. Then, on a screen of the terminal apparatus 22, for example, as illustrated in Fig. 12A, a camera selection screen 100 is displayed, and a list of the searched communicable cameras 21 is displayed. In this case, the terminal apparatus 22 displays a pairing button 102 and an information button 103 for the detected camera 21. The pairing button 102 indicates the camera 21 in a pairable state and serves as a selection button. The information button 103 is a button for notifying that the camera 21 has a wireless communication function but is not in the pairing mode capable of wireless communication. In this case, pairing may be enabled by an operation on a side of the camera 21.

When the user operates the pairing button 102 for a certain camera 21, the terminal apparatus 22 executes pairing with the camera 21, and displays a connection completion screen 110 as illustrated in Fig. 12B when the pairing is completed. A continue button 111 is prepared on the connection completion screen 110, and when the user performs an operation such as tapping the continue button 111, the terminal apparatus 22 proceeds from step S103 to step S104 in Fig. 9.

In step S104, the terminal apparatus 22 determines whether or not the camera 21 connected for communication has completed the initial setting. The terminal apparatus 22 confirms the state of the camera 21 by communication with the camera 21, and performs camera initial setting processing in step S105 in a case where the initial setting has not been completed.

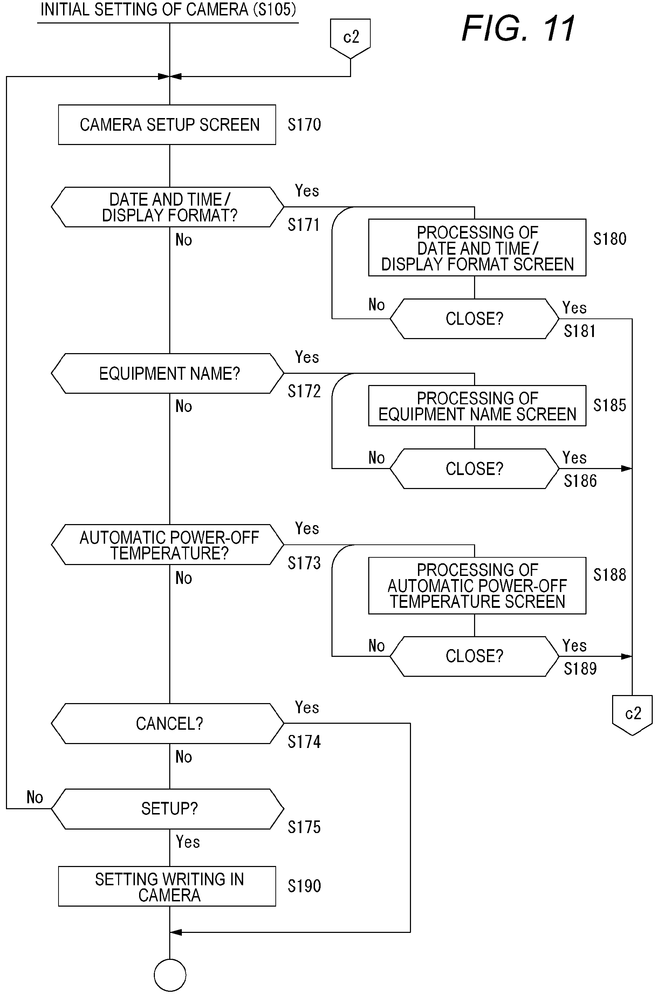

The camera initial setting processing in step S105 is illustrated in detail in Fig. 11.

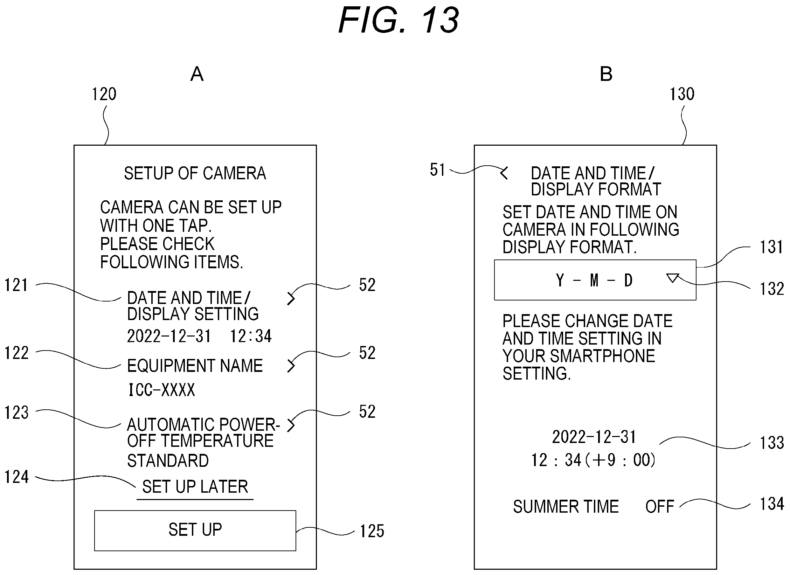

In step S170, the terminal apparatus 22 displays a camera setup screen 120. Fig. 13A illustrates an example of the camera setup screen 120.

On the camera setup screen 120, a date and time/display setting section 121, an equipment name setting section 122, an automatic power-OFF temperature setting section 123, a cancel section 124, and a setup button 125 are displayed.

The date and time/display setting section 121 is a display item for setting the date and time of the internal clock of the camera 21.

The equipment name setting section 122 is a display item for the user to set an arbitrary name for the camera 21.

The automatic power-OFF temperature setting section 123 is a display item for the user to set a mode for the automatic power-off temperature of the camera 21. There is processing of automatically turning off the power when the temperature of the camera 21 becomes high, and the automatic power-off temperature setting is a setting of a temperature at which the power is automatically turned off.

The cancel section 124 is a display item for canceling the current initial setting.

The setup button 125 is an execution button for initial setting.

In a state where the camera setup screen 120 is displayed, the terminal apparatus 22 performs operation standby from step S171 to step S175 in Fig. 11.

In a case where the user operates a forward button 52 for the date and time/display setting section 121, the terminal apparatus 22 proceeds from step S171 to step S180.

Note that the "operation" on the screen in the embodiment is mainly a tap operation or a click operation, but an actual operation mode is not limited. The operation may be an operation such as swiping, flicking, double tapping, or dragging, or may be an operation using a touch pen or the like.

In step S180, the terminal apparatus 22 displays a date and time/display setting screen 130 in Fig. 13B. On the date and time/display setting screen 130, an input field 131 for inputting a display format, a pull-down button 132 thereof, a date and time 133, and a summer time mode 134 are displayed.

For the input field 131, for example, the user can select "Y-M-D", "M (English)-D-Y", "M-D-Y", "D-M-Y", and the like as display formats by operating the pull-down button 132. "Y" is the year (Anno Domini), "M" is the month, "M (English)" is the English notation of the month such as "JANUARY", and "D" is the day.

In the date and time 133, the current date and time is displayed. This displays the current date and time of the internal clock of the terminal apparatus 22. The date and time is displayed in the display format currently selected in the input field 131.

The summer time mode 134 displays "ON" or "OFF" of the summer time mode of the terminal apparatus 22 at present. Therefore, the user does not need to input the current date and time and the summer time mode.

In step S180 of Fig. 11, the terminal apparatus 22 monitors an operation on the input field 131 by the user, that is, a selection operation from the pull-down button 132 and the pull-down menu. Then, the display format of the date and time 133 is changed and stored according to the operation.

Furthermore, in step S180, the terminal apparatus 22 also monitors the operation of a return button 51 by the user, and in a case where there is the operation, returns from step S181 to step S170, and displays the camera setup screen 120 of Fig. 13A. Therefore, the user can return to the original screen after setting the display format or without changing the display format.

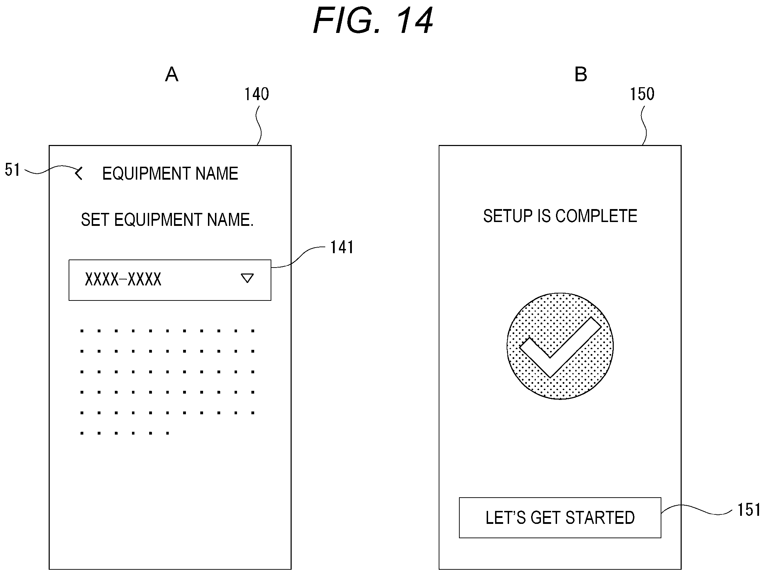

In a case where the user operates the forward button 52 of the equipment name setting section 122 on the camera setup screen 120, the terminal apparatus 22 proceeds from step S172 to step S185. In step S185, the terminal apparatus 22 displays an equipment name setting screen 140 in Fig. 14A. On the equipment name setting screen 140, an input field 141 for inputting an equipment name is displayed.

For the input field 141, the user can arbitrarily input the name of the camera 21. Note that a name acquired by communication from the camera 21 is displayed as a default name in the input field 141.

In step S185, the terminal apparatus 22 performs character display and storage processing in response to an input operation on the input field 141 by the user. For example, the terminal apparatus 22 displays an operation keyboard or the like according to a tap of the input field 141 or the like so that the user can input characters and symbols and stores a character string according to the input. Note that voice input may be possible.

Furthermore, in step S185, the terminal apparatus 22 also monitors the operation of the return button 51 by the user, and in a case where there is the operation, returns from step S186 to step S170, and returns the display to the camera setup screen 120 in Fig. 13A. Therefore, the user can return to the original screen after inputting the camera name or without inputting the camera name, leaving the default.

In a case where the user operates the forward button 52 of the automatic power-OFF temperature setting section 123 on the camera setup screen 120, the terminal apparatus 22 proceeds from step S173 to step S188.

In step S188, the terminal apparatus 22 displays an automatic power-OFF temperature setting screen (not illustrated). On the automatic power-OFF temperature setting screen, the user can arbitrarily select "standard" or "high" as the setting of the temperature at which the camera 21 is automatically turned off.

For example, when an image is captured using a tripod or the like, if the automatic power-OFF temperature is set to "high", the recording time can be lengthened.

In step S188, the terminal apparatus 22 monitors the user's selection operation of "standard" or "high" and stores the selected state.

Furthermore, in step S188, the terminal apparatus 22 monitors the operation of the return button by the user, and in a case where there is the operation, returns from step S189 to step S170 and displays the camera setup screen 120 of Fig. 13A. Therefore, the user can return the screen to the original screen after selecting the automatic power-OFF temperature or while keeping the default.

In a case where the operation of the cancel section 124 by the user is detected, the terminal apparatus 22 ends the processing of Fig. 11 from step S174, and proceeds to step S106 of Fig. 9.

In a case where the operation of the setup button 125 by the user is detected, the terminal apparatus 22 proceeds from step S175 to step S190 in Fig. 11, and performs processing of setting writing in the camera 21. That is, the terminal apparatus 22 transmits the date and time, the display format of the date and time, the summer time mode, the equipment name, and the automatic power-OFF temperature setting stored at that time to the camera 21. As a result, initial setting based on the transmission information is executed in the camera 21. Then, the terminal apparatus 22 displays a setup completion screen 150 as illustrated in Fig. 14B in response to the notification of the completion of the initial setting in the camera 21.

A start button 151 is displayed on the setup completion screen 150. When the user checks the setup completion screen 150 and operates the start button 151, the terminal apparatus 22 ends the processing of step S190 of Fig. 11 and proceeds to step S106 of Fig. 9.

Since the initial setting of the camera 21 is performed in the terminal apparatus 22 as described above, the user only needs to select the display format for the date and time of the internal clock of the camera 21. This is because the current time and the summer time mode of the internal clock of the terminal apparatus 22 are reflected on the current date and time and the summer time mode.

Furthermore, the user can input a character string as the name of the camera 21 using the terminal apparatus 22. Therefore, the user can use a keyboard or the like on the screen of the terminal apparatus 22 when inputting a character string.

Moreover, the automatic power-OFF temperature setting can be performed by simple selection on the screen.

By using the terminal apparatus 22 in this manner, the initial setting of the camera 21 can be executed by a simple and smooth operation.

In step S106 of Fig. 9, the terminal apparatus 22 executes sign-in processing. For example, the terminal apparatus 22 executes the sign-in processing on the portal service 30 in response to an input of the user's own account or password.

### [3-2: Processing of home screen of portal service]

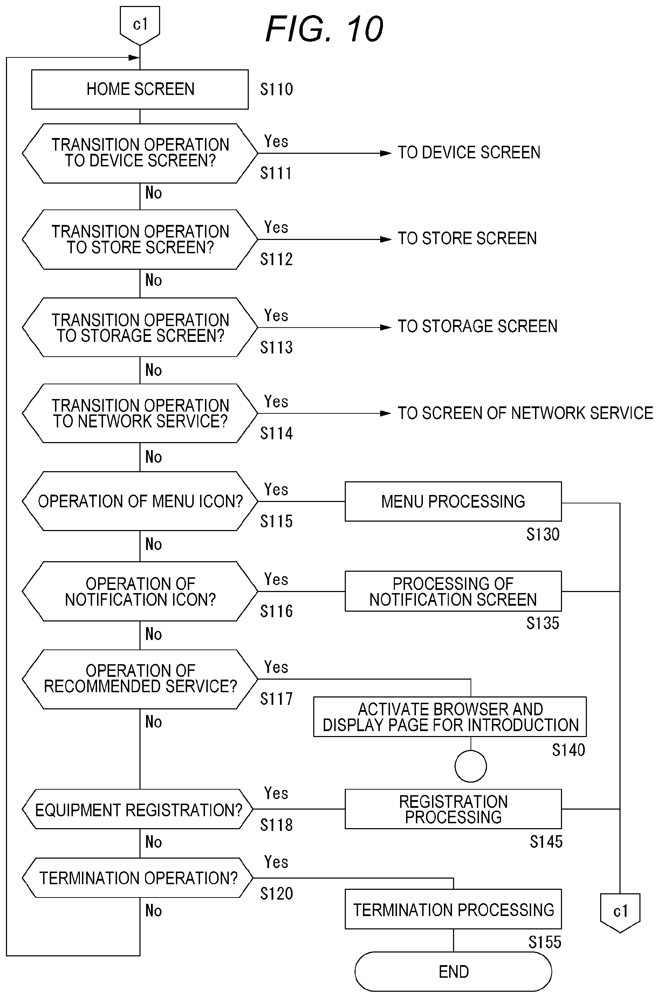

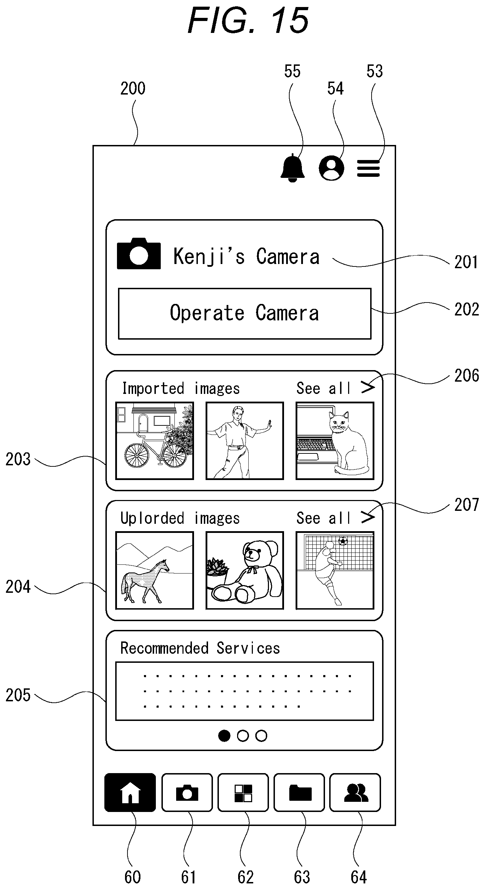

Upon completion of the sign-in, the terminal apparatus 22 proceeds to step S110 in Fig. 10 and displays a home screen 200 as illustrated in Fig. 15. That is, the home screen is a home screen as the portal service 30.

Note that the user can also select not to sign in. In a case where the user does not sign in, the terminal apparatus 22 displays a screen as a so-called catalog page.

On the home screen 200 of Fig. 15 in a case where the user has signed in, a title section 201, an operation camera button 202, an imported image area 203, an uploaded image area 204, a recommended service area 205, and the like are displayed.

In the title section 201, the account name of the user who has signed in, the equipment name of the camera 21 being connected, and the like are displayed.

The operation camera button 202 is a button for transitioning to a device screen 230 to be described later.

The imported image area 203 displays a part of the image previously imported from the camera 21 to the terminal apparatus 22 by the sign-in user. Furthermore, a browse button 206 for viewing all the imported images is also displayed.

In the uploaded image area 204, a part of the image uploaded to the server system 1 by the sign-in user in the past is displayed. Furthermore, a browse button 207 for viewing all the uploaded images is also displayed.

In the recommended service area 205, information about a service recommended to the sign-in user is displayed.

Note that a common menu and icon are displayed on the home screen 200 and each screen to be described below as necessary.

For example, in Fig. 15, there are a menu icon 53, a user icon 54, and a notification icon 55 at the upper part of the screen. Furthermore, a home icon 60, a camera icon 61, an app icon 62, a storage icon 63, a network icon 64, and the like are also displayed at the lower part of the screen.

Note that the home icon 60, the camera icon 61, the app icon 62, the storage icon 63, and the network icon 64 displayed on each screen are icons for executing screen or service transition.

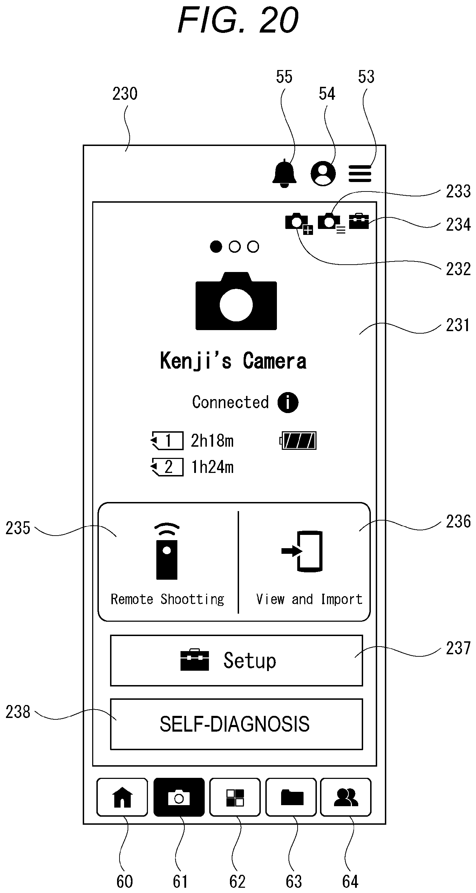

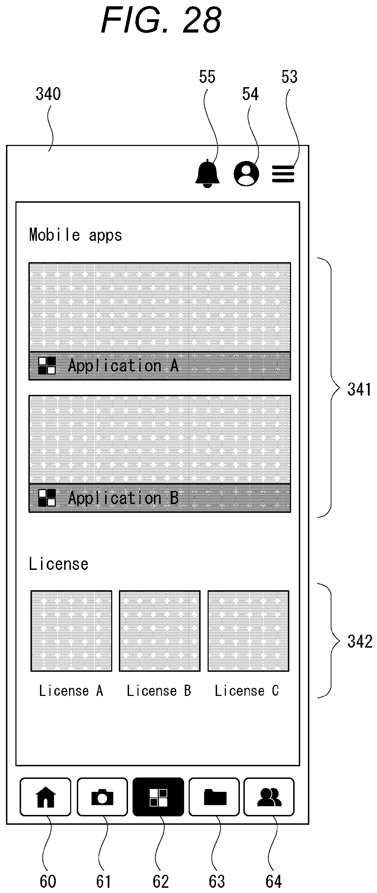

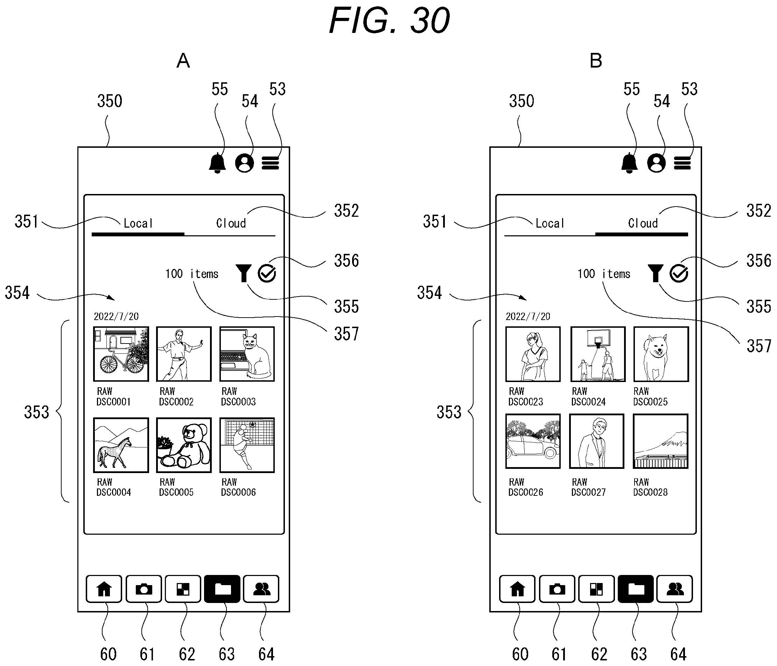

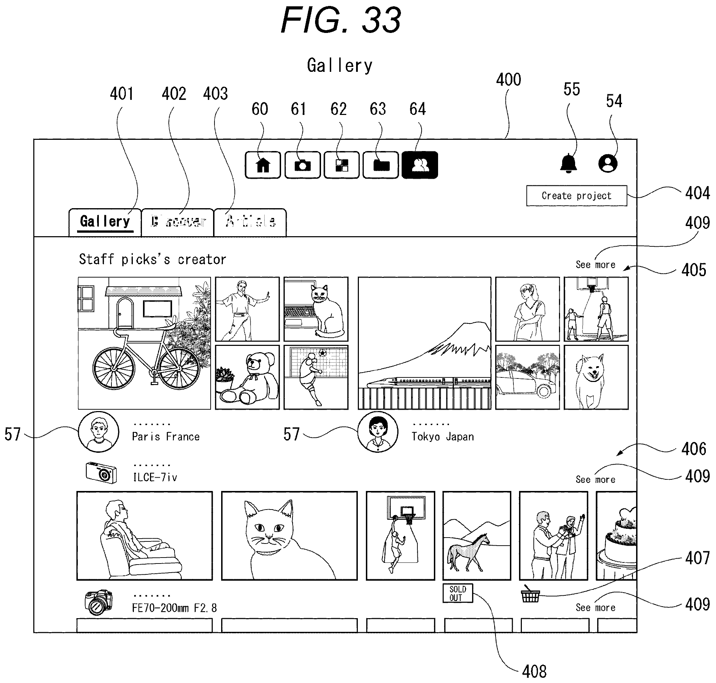

The home icon 60 is an icon for transitioning to the home screen 200. The camera icon 61 is an icon for transitioning to the device screen 230 of Fig. 20. The app icon 62 is an icon for transitioning to the store screen 340 of Fig. 28. The storage icon 63 is an icon for transitioning to a storage screen 350 of Fig. 30A or 30B. The network icon 64 is an icon for transitioning to the screen of the network service 31 of Fig. 33.

The home screen 200 of Fig. 15 indicates that the display mode of the home icon 60 is set to be different from the others, the home screen 200 is currently displayed, and screen transition by the operation of the home icon 60 is not performed.

At the time of such display of the home screen 200, the terminal apparatus 22 performs operation monitoring loop processing from step S111 to step S120 in Fig. 10.

In the case of detecting the transition operation to the device screen 230, the terminal apparatus 22 transitions from step S111 to a device screen 230 to be described later. The transition operation to the device screen 230 is, for example, an operation of the operation camera button 202 or an operation of the camera icon 61.

In a case where the transition operation to the store screen 340 is detected, the terminal apparatus 22 transitions from step S112 to a store screen 340 to be described later. The transition operation to the store screen 340 is, for example, an operation of the app icon 62. The store screen 340 is, for example, a goods trading page provided by the marketplace 32.

In the case of detecting the transition operation to the storage screen 350, the terminal apparatus 22 transitions from step S113 to the storage screen 350 to be described later. The transition operation to the storage screen 350 is an operation of the browse buttons 206 and 207 or an operation of the storage icon 63. An operation such as tapping on an image in the imported image area 203 or an image in the uploaded image area 204 may be used as a transition operation to the storage screen 350.

In the case of detecting the transition operation to the network service 31, the terminal apparatus 22 transitions from step S114 to a screen of the network service 31 (for example, a gallery screen 400 to be described later). The transition operation to the network service 31 is, for example, an operation of the network icon 64.

In the case of detecting the operation of the menu icon 53, the terminal apparatus 22 proceeds from step S115 to the menu processing of step S130. For example, the terminal apparatus 22 performs display of a menu item, screen display according to an operation, setting change of a menu item, and the like, and returns to step S110 according to a predetermined operation.

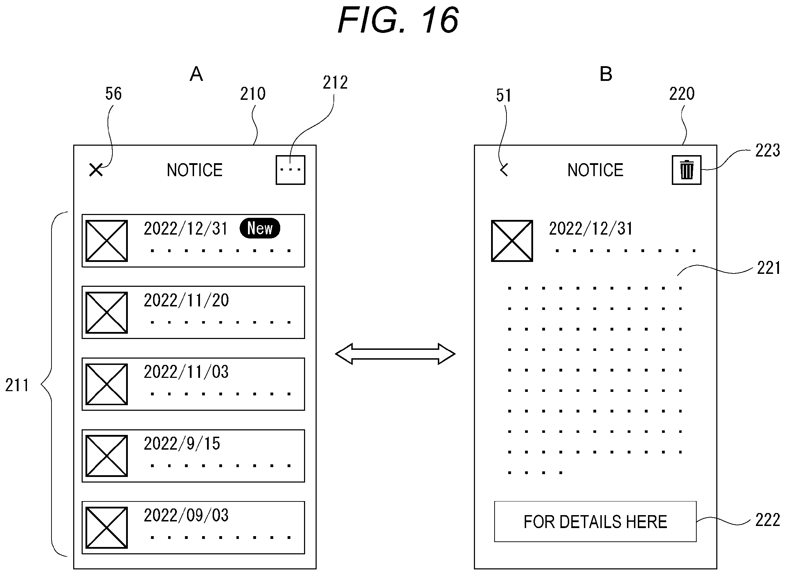

In the case of detecting the operation of the notification icon 55, the terminal apparatus 22 proceeds from step S116 to the processing of the notification screen in step S135. For example, the terminal apparatus 22 displays an announcement screen 210 as illustrated in Fig. 16A. On the announcement screen 210, for example, a list of messages is displayed in a list section 211. Furthermore, a setting button 212 and a close button 56 are displayed on the announcement screen 210.

In step S135, the terminal apparatus 22 performs processing according to the user operation on the announcement screen 210. For example, the terminal apparatus 22 displays an announcement detail screen 220 as illustrated in Fig. 16B and displays detailed contents of a message according to an operation of selecting a certain message in the list section 211. For example, the terminal apparatus 22 displays the detailed contents as text or the like in the announcement detail 221. Furthermore, in a case where there is a web site or the like browsable by the browser, the terminal apparatus 22 enables screen transition by a transition button 222. Furthermore, the terminal apparatus 22 displays a trash box icon 223, and performs deletion processing of the message in a case where the trash box icon 223 is operated. Furthermore, in a case where the return button 51 is operated, the terminal apparatus 22 returns the display to the announcement screen 210.

Furthermore, in step S135, the terminal apparatus 22 displays the setting contents according to the operation of the setting button 212 on the announcement screen 210, changes the setting according to the operation, and the like. Furthermore, in response to the operation of the close button 56, the terminal apparatus 22 returns to step S110 and returns to the display of the home screen 200.

In the announcement screen 210 and the announcement detail screen 220 described above, the terminal apparatus 22 collectively displays not only the message by the portal service 30 but also a message which is another service. For example, a notification such as "like" for a project created in the network service 31 to be described later, a notification of follow by another person, a notification regarding sales or purchase in the marketplace 32, a notification regarding image processing by the content creation tool 33, and the like are also notified on the announcement screen 210 in the portal service 30.

That is, the terminal apparatus 22 reads a message stored in the storage 11 for the user who is signed in and displays the list section 211 of the announcement screen 210. As described above, since the messages generated in the respective services are stored in the storage 11 for each user, the terminal apparatus 22 displays the messages stored in the storage 11 so that the user can collectively view the notifications by the plurality of services on the announcement screen 210 of the portal service 30.

In a case where the operation of a recommended service is detected on the home screen 200, the terminal apparatus 22 proceeds from step S117 to the browser activation processing in step S140. The information displayed in the recommended service area 205 includes a link of a web page or the like, and the terminal apparatus 22 activates a browser in response to an operation and displays a related web page for introduction or the like.

As a result, the user can know detailed contents of the recommended service. Note that, after that, the browsing is continued according to the user's operation, or the screen returns to the home screen in step S110 by closing or minimizing the browser.

Although not illustrated in the example of the home screen 200 of Fig. 15, equipment registration may be performed by executing predetermined display from the home screen 200.

For example, the terminal apparatus 22 acquires, from the camera 21 being connected for communication, camera information, information of a lens barrel being mounted, information of peripheral equipment being connected, or the like. Then, referring to the equipment information of the storage 11, if the detected equipment is not registered in the storage 11, the process proceeds from step S118 to step S145 to perform registration processing. As the registration processing, first, a notification and an operation button indicating that registration is possible to the user are displayed. For example, the fact that the camera 21 having the name "∘ ∘ ∘" can be registered and a registration execution button are displayed. Then, when the user operates the registration execution button, the equipment information of the detected camera 21 is transmitted to the server apparatus 10, and is stored in the storage 11 as the equipment information associated with the user. Then, the process returns to step S110.

Note that an equipment registration button may be prepared on the home screen 200, and when the user operates the equipment registration button, the process may proceed from step S118 to step S145. For example, when the user operates the equipment registration button, in step S145, the terminal apparatus 22 first acquires camera information, information of the lens barrel being mounted, information of the peripheral equipment being connected, or the like from the camera 21 being connected for communication. Then, with reference to the equipment information of the storage 11, if the detected equipment is not registered in the storage 11, the equipment information of the camera 21 or the like is transmitted to the server apparatus 10, and is stored in the storage 11 as the equipment information associated with the user. If the currently connected camera 21 or the like has already been registered, the user is notified of the registration. Then, the process returns to step S110.

In step S120, the terminal apparatus 22 monitors the termination processing. For example, in a case where a termination operation or a sign-out operation of the portal service 30 is performed, the terminal apparatus 22 proceeds from step S120 to step S155, performs termination processing, and terminates the processing related to the portal service 30.

### [3-3: Processing of device screen]

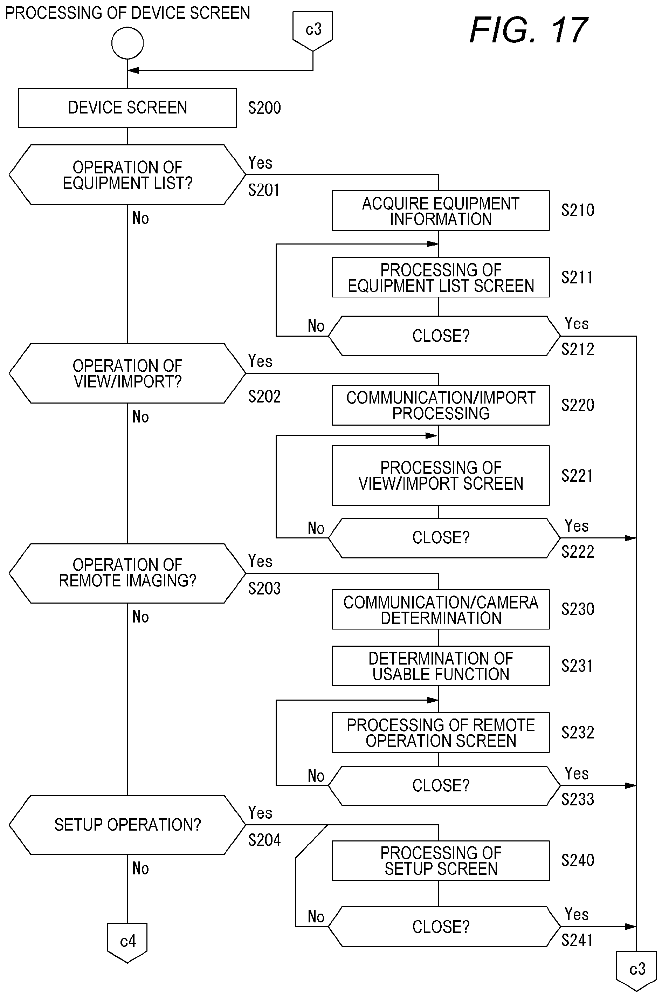

Next, processing in the case of transition to the device screen will be described with reference to Figs. 17, 18, and 19.

For example, the terminal apparatus 22 proceeds from step S111 in Fig. 10 to step S200 in Fig. 17 in response to the operation of transitioning to the device screen on the home screen 200, and displays the device screen 230. An example of the device screen 230 is illustrated in Fig. 20.

Note that the process may proceed to step S200 in Fig. 17 from a screen other than the home screen 200 (store screen 340, storage screen 350, screen of network service 31, etc.).

Similarly to the home screen 200, the device screen 230 also displays a menu icon 53, a user icon 54, a notification icon 55, a home icon 60, a camera icon 61, an app icon 62, a storage icon 63, a network icon 64, and the like.

These icons are also displayed on each screen described below including the device screen 230. Although redundant description on the operation of these icons is avoided, processing similar to the processing described on the home screen 200 is performed.

Note that, on the device screen 230, the display mode of the camera icon 61 is made different from the others, and it is indicated that the current display mode is the device screen 230 and that screen transition by operation of the camera icon 61 is not performed.

On the device screen 230, a camera information display section 231 displays information of the camera 21 received from the camera 21 being connected for communication. For example, a thumbnail and an icon of the camera 21, a name of the camera 21 set in the above-described initial setting and the like, a current connection state, a remaining recording amount, a remaining battery amount, and the like are displayed on the camera information display section 231. As a result, the user can recognize the state of the camera 21 being connected for communication.

Furthermore, the device screen 230 also displays a camera addition icon 232, an equipment list icon 233, a setup icon 234, a remote button 235, a view/import button 236, a setup button 237, and a self-diagnosis button 238.

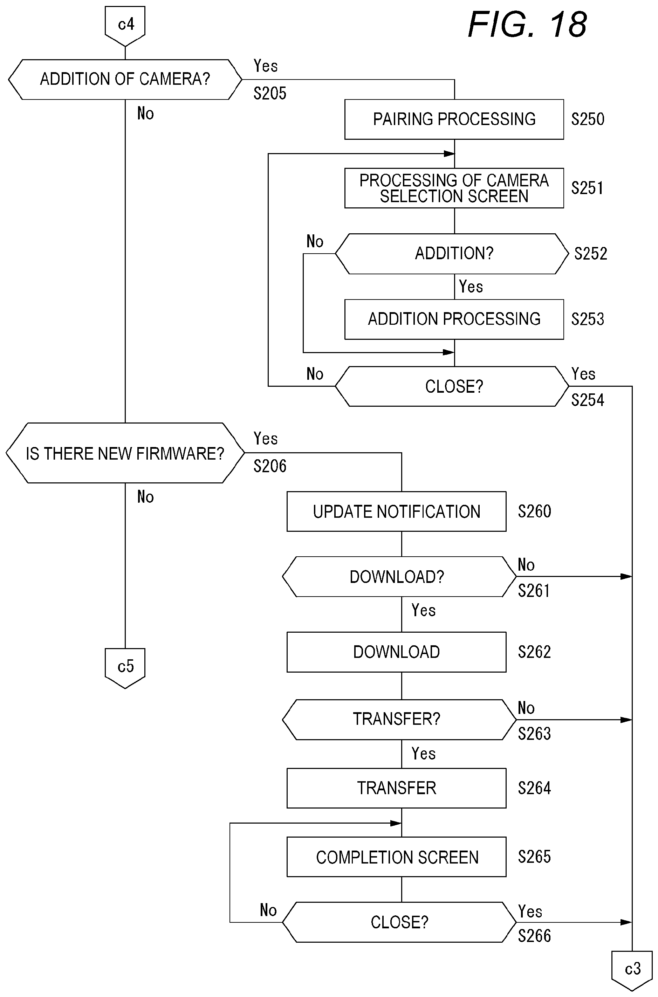

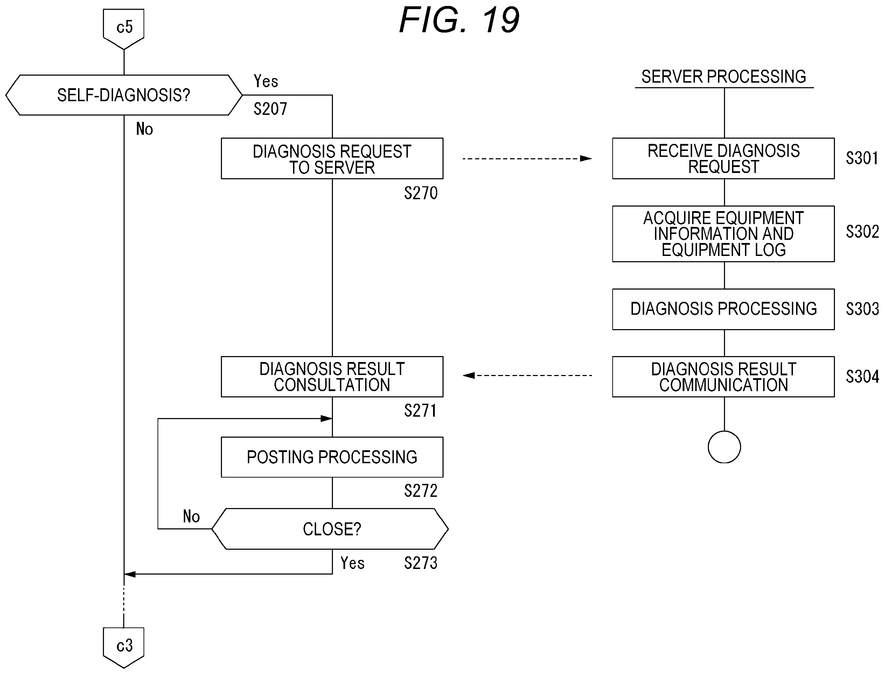

In a state where such a device screen 230 is displayed, the terminal apparatus 22 performs processing of the operation monitoring loop of steps S201, S202, S203, and S204 of Fig. 17, steps S205 and S206 of Fig. 18, and step S207 of Fig. 19.

Note that Figs. 17, 18, and 19 do not illustrate processing corresponding to all user operations on the device screen 230. For example, the processing corresponding to the operations of the home icon 60, the camera icon 61, the app icon 62, the storage icon 63, and the network icon 64 is omitted.

Figs. 17, 18, and 19 illustrate processing extracted according to a part of the operations on the device screen 230.

In a case where the operation of the equipment list icon 233 is detected on the device screen 230, the terminal apparatus 22 proceeds from step S201 to step S210 in Fig. 17 and acquires the equipment information. That is, the terminal apparatus 22 communicates with the server apparatus 10, and acquires equipment information stored in the storage 11 in association with the user.

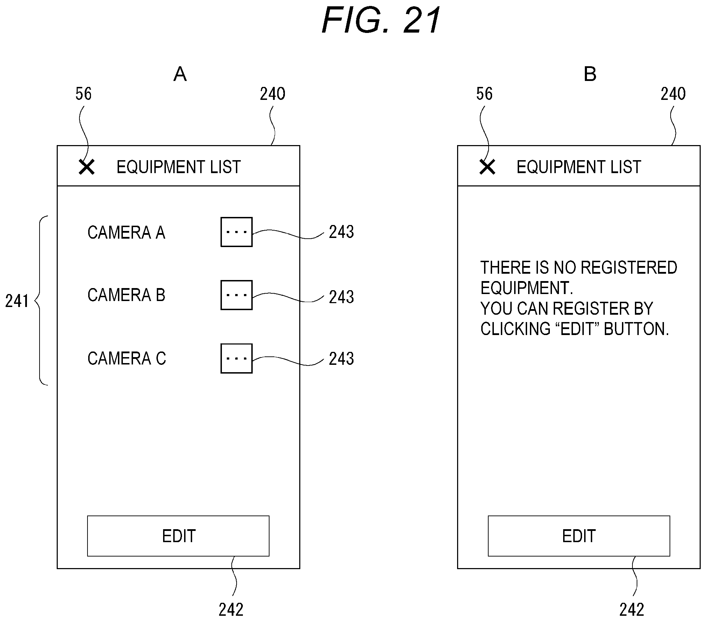

In step S211, the terminal apparatus 22 displays an owned equipment list screen 240 as illustrated in Fig. 21A on the basis of the acquired equipment information, and performs processing according to the operation on the screen.

On the owned equipment list screen 240, a list of registered equipment such as the camera 21 is displayed in an equipment list section 241. Furthermore, a menu button 243 is displayed for each equipment listed in the equipment list section 241. In step S211, the terminal apparatus 22 performs processing prepared in the menu according to the operation of the menu button 243. As the menu item, for example, display of a description of a function executable by the portal service 30 corresponding to the equipment, transition of an instruction manual of the equipment to a website, display of lens compatibility information, display of compatibility information of an accessory (peripheral equipment), and the like are assumed.

Furthermore, an edit button 242 is displayed on the owned equipment list screen 240. In step S211, the terminal apparatus 22 displays an edit screen of the equipment list in response to the operation of the edit button 242, and performs processing corresponding to the edit operation.

Furthermore, in response to the operation of the close button 56, the terminal apparatus 22 returns from step S212 to step S200, and returns to the display of the device screen 230.

In a case where the user operates the equipment list icon 233 in a state where the equipment information is not registered, the terminal apparatus 22 displays that there is no registered equipment as illustrated in Fig. 21B in step S210. Then, in response to the operation of the close button 56, the process returns from step S212 to step S200, and returns to the display of the device screen 230.

Note that registration, deletion, and the like of equipment such as the camera 21 are assumed to be performed from the operation of the camera addition icon 232, but for example, deletion, change of registered contents, and the like may be enabled from the owned equipment list screen 240.

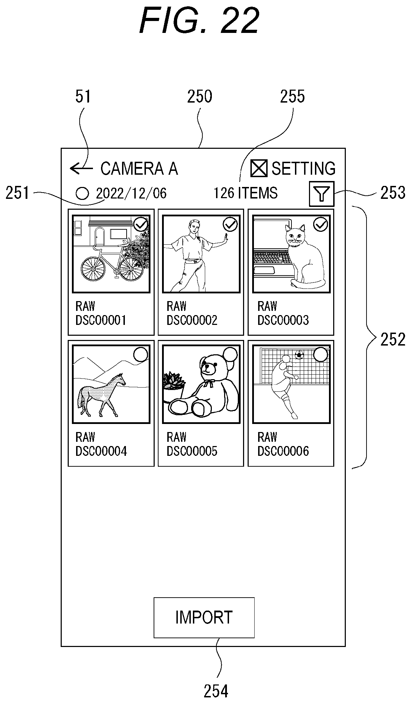

In a case where the operation of the view/import button 236 is detected on the device screen 230, the terminal apparatus 22 proceeds from step S202 to step S220, and acquires information of image data stored in the camera 21 by communication with the camera 21. Then, in step S221, a view/import screen 250 as illustrated in Fig. 22 is displayed.

On the view/import screen 250, a condition display section 251, the number of images 255, a filter button 253, an image list section 252, an import button 254, and the like are displayed.

The filter condition applied in the condition display section 251 is displayed. For example, an imaging date, an imaging date range, an image format, and the like are displayed as conditions. The filter condition is selected according to the operation of the filter button 253.

The image list section 252 displays a list of thumbnails of image data extracted under the filter condition among the images recorded in the camera 21. For each thumbnail, the user can perform a check on/check off operation by a tap operation or the like.

As the processing of step S221, the terminal apparatus 22 displays the view/import screen 250 as described above and performs processing corresponding to the user's operation. For example, filter selection, display of the image list section 252 according to the filter condition, display according to check on/off of the thumbnail, and the like are performed. Furthermore, in response to the operation of the import button 254, the terminal apparatus 22 also performs processing of importing the image data corresponding to the thumbnail checked on at that time from the camera 21.

Furthermore, in response to the operation of the return button 51, the terminal apparatus 22 returns from step S222 to step S200 and returns to the display of the device screen 230.

Note that the terminal apparatus 22 can transfer the image imported from the camera 21 by the view/import screen 250 to the server system 1 and store the image in the storage 11. For example, an image imported by the terminal apparatus 22 into the camera 21 may be automatically uploaded also to the storage 11, and may be stored in a synchronized state between the terminal apparatus 22 and the storage 11. The term "synchronization" as used herein means that the image data stored in the terminal apparatus 22 and the image data stored in the storage 11 are maintained so as to have the same data content. Note that it is also conceivable to synchronize the above-described equipment information.

Alternatively, the image imported by the terminal apparatus 22 into the camera 21 may not be automatically uploaded, but may be transmitted from the terminal apparatus 22 to the server system 1 according to user's selection, upload operation, or the like, and stored in the storage 11.

In a case where the operation of the remote button 235 is detected on the device screen 230, the terminal apparatus 22 proceeds from step S203 to step S230, checks the communication state with the camera 21, and determines the camera 21 to be the remote operation target.

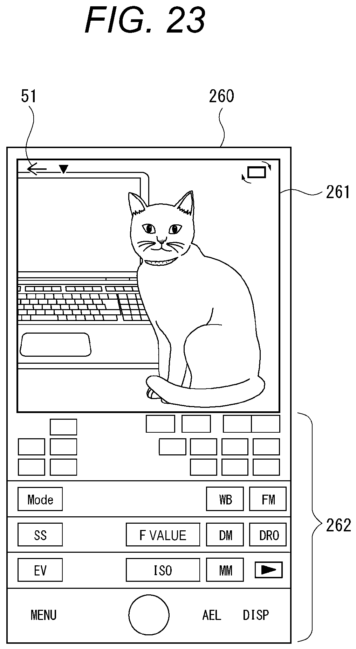

In step S231, the terminal apparatus 22 determines the usable function according to the model of the camera 21 to be remotely operated. Then, in step S232, the terminal apparatus 22 displays a remote operation screen 260 as illustrated in Fig. 23 according to the operation function for each model of the camera 21.

The remote operation screen 260 is a screen including a monitor section 261 and an operation section 262.

The monitor section 261 displays image contents displayed on a viewfinder or a monitor screen of the target camera 21. That is, the user can confirm an image similar to that when using the camera 21 from the image of the monitor section 261. Specifically, a through image (captured image), a menu screen, various icons, and the like in the camera 21 are displayed similarly to the camera 21. The image to be displayed is received from the camera 21 by communication.

Various operation elements for the camera 21 are displayed on the operation section 262. For example, basic operation buttons such as a shutter button, a focus button, and a zoom button, and operators such as a shutter speed, EV, an F value, ISO sensitivity, white balance, and an imaging mode are displayed. In this case, since the operation function varies depending on the model of the camera 21, the operator to be displayed varies depending on the model of the remote operation target.

For example, there are functions that may or may not be provided depending on the model, such as a special zoom function such as a stepwise zoom function and a tracking focus function. Therefore, an operator for a function operable in the model is displayed in accordance with the model.

As a result, the operation section 262 is displayed as an operator group matching the operation target camera 21, and it is possible to provide an operation environment with good usability for the user.

Some specific processing methods for displaying the remote operation screen 260 are assumed.

For example, it is assumed that the terminal apparatus 22 transmits model information of the camera 21 as a remote operation target to the server system 1, and receives and displays information of the remote operation screen 260 corresponding to the camera 21 from the server system 1.

Alternatively, the terminal apparatus 22 can also store the operation function for each model of the camera 21, and set the content of the operation section 262 according to the model of the camera 21 when the camera 21 to be remotely operated is determined.

Alternatively, the terminal apparatus 22 can transmit model information of the camera 21 to be remotely operated to the server system 1, receive information of the operation function of the camera 21 from the server system 1, and set the content of the operation section 262 according to the information.

As the processing of step S232, the terminal apparatus 22 displays the remote operation screen 260 corresponding to the model of the camera 21 as described above, and transmits the operation information to the camera 21 according to the user's operation on the operator of the operation section 262.

Furthermore, in response to the operation of the return button 51, the terminal apparatus 22 returns from step S233 to step S200 and returns to the display of the device screen 230.

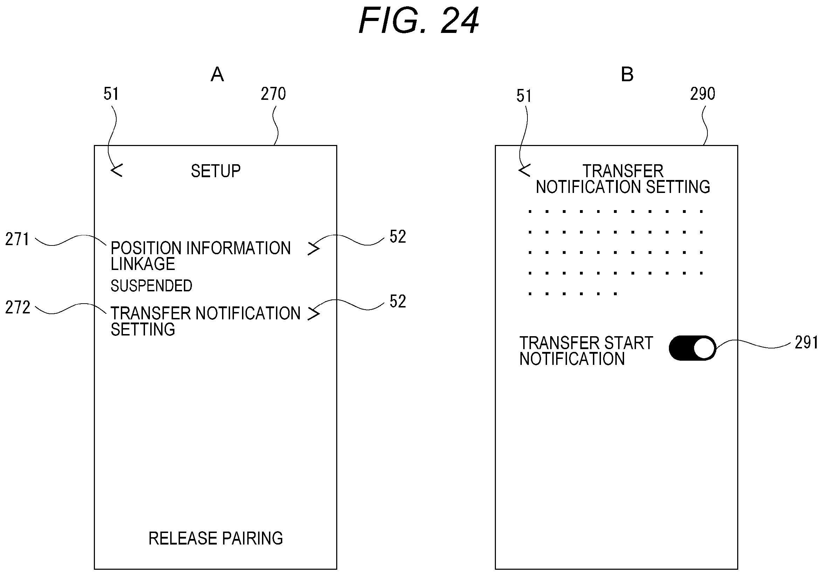

In a case where the operation of the setup button 237 is detected on the device screen 230, the terminal apparatus 22 proceeds from step S204 to step S240 and displays the camera setup screen 120 as illustrated in Fig. 24A.

In step S240, the terminal apparatus 22 confirms the communication connection state with the camera 21, and displays the position information linkage setting unit 271 and the transfer notification setting unit 272 as the setup screen 270 during the communication connection.

Furthermore, in a case where the forward button 52 of the transfer notification setting unit 272 is operated, the terminal apparatus 22 displays the transfer notification setting screen 290 of Fig. 24B. The transfer notification setting screen 290 is a screen for performing setting for notifying the terminal apparatus 22 in a case where the camera 21 is selected and image transfer is performed, and a transfer start notification setting button 291 is displayed. As a result, the user can select on/off of the transfer start notification.

When the return button 51 on the transfer notification setting screen 290 is operated, the terminal apparatus 22 returns to the setup screen 270 in Fig. 24A.

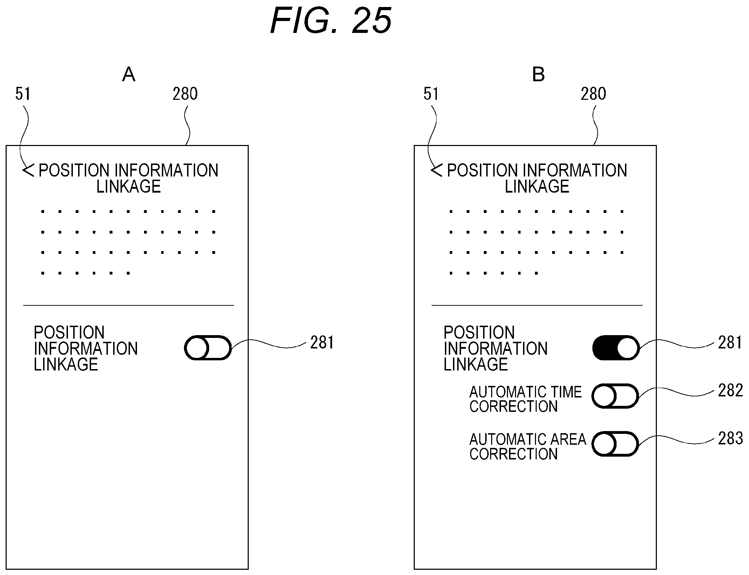

Furthermore, in a case where the forward button 52 of the position information linkage setting unit 271 is operated, the terminal apparatus 22 displays the position information linkage setting screen 280 in Fig. 25A. The position information linkage setting screen 280 is a screen for performing setting to link the position information of the terminal apparatus 22 with the camera 21, and a position information linkage setting button 281 is displayed.

When the user turns on the position information linkage setting button 281, the terminal apparatus 22 further displays an automatic time correction button 282 and an automatic area correction button 283 as illustrated in Fig. 25B. Thus, the user can select on/off of the functions of the automatic time correction and the automatic area correction.

When the return button 51 on the position information linkage setting screen 280 is operated, the terminal apparatus 22 returns to the setup screen 270 in Fig. 24A.

In step S240, the terminal apparatus 22 performs screen display, screen transition, and processing of changing the setting of the camera 21 according to the operation as described above, that is, transmission of information of the setting change to the camera 21, and the like.

With such processing, the user can change the setting of the camera 21 using the terminal apparatus 22 having better operability than the camera 21. Note that the position information linkage setting and the transfer notification setting have been described as setting items that can be changed from the setup screen 270, but other items may be set.

In response to the operation of the return button 51 on the setup screen 270, the terminal apparatus 22 returns from step S241 to step S200 and returns to the display of the device screen 230.

In a case where the operation of the camera addition icon 232 is detected on the device screen 230, the terminal apparatus 22 proceeds from step S205 to step S250 in Fig. 18 and performs the pairing processing. Similarly to step S103 in Fig. 9, the terminal apparatus 22 in this case first searches for the communicable camera 21, that is, the camera 21 existing around the terminal apparatus 22 and having the wireless communication function. Then, in step S251 of Fig. 18, the camera selection screen 100 described in Fig. 12A is displayed, and a list of the searched communicable cameras 21 is displayed.

Then, for example, in response to the user operating the pairing button 102, the terminal apparatus 22 performs processing of adding the selected camera 21 as registered equipment. That is, the terminal apparatus 22 proceeds from step S252 to step S253, transmits the device information of the selected camera 21 to the server system 1, and registers the equipment information in association with the user in the storage 11.

Note that, in a case where information on the lens barrel and peripheral equipment is also obtained by communication with the camera 21, the equipment information may also be transmitted to the server system 1 and registered in the storage 11.

In response to the user performing an operation of closing the camera selection screen 100 or the screen notifying the registration, the terminal apparatus 22 returns from step S254 to step S200 in Fig. 17, and returns to the display of the device screen 230.

Note that, although not described above in the description of Fig. 9, in a case where pairing with the camera 21 is performed in step S103 of Fig. 9 and the camera 21 is unregistered, the terminal apparatus 22 may transmit the equipment information of the camera 21 to the server system 1 after the sign-in, and register the device information in association with the user in the storage 11.

Moreover, in a case where the newly paired camera 21 is unregistered during sign-in, the terminal apparatus 22 may transmit the equipment information of the camera 21 to the server system 1 and register the device information in association with the user in the storage 11.

That is, equipment registration may be performed automatically instead of operating the camera addition icon 232.

Of course, when equipment registration is automatically performed, a screen asking the user whether or not to perform registration may be displayed, and processing may be performed according to the answer.

In a case where the device screen 230 is displayed, or the like, the terminal apparatus 22 determines whether or not the main body software for the device has been updated. For example, the terminal apparatus 22 acquires the main body software information from the camera 21 being connected for communication displayed on the device screen 230. Then, the terminal apparatus 22 transmits the main body software information to the server system 1 and requests confirmation of the latest main body software. In a case where the latest main body software to be updated is present, the server system 1 notifies the terminal apparatus 22 of the presence of the latest main body software. In a case where it is determined that there is the new main body software by such processing, the terminal apparatus 22 proceeds from step S206 to step S260 in Fig. 18 and performs the update notification.

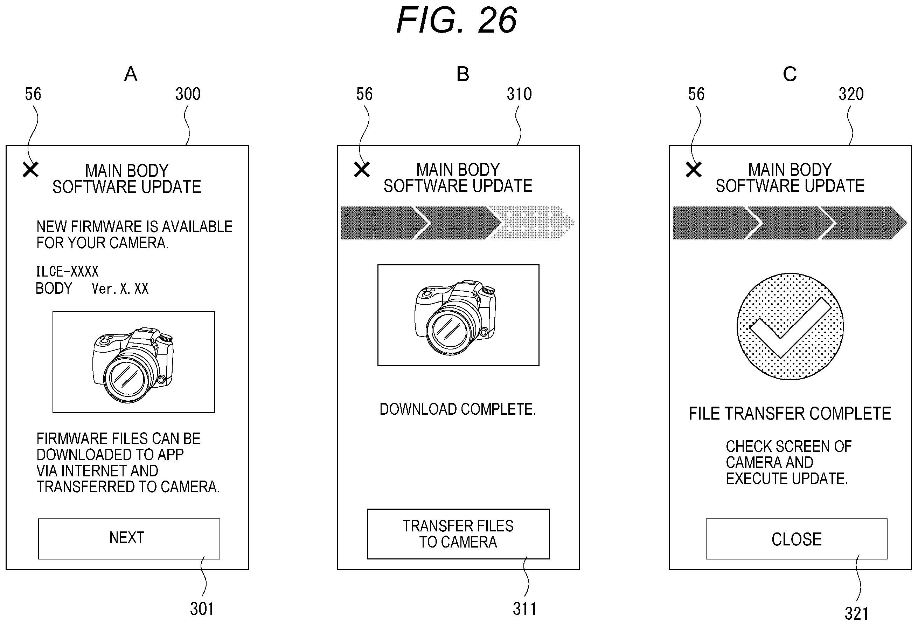

For example, the terminal apparatus 22 displays an update notification screen 300 of Fig. 26A to notify the user that the camera 21 can be updated. The update notification screen 300 includes a next button 301, and enables the user to perform an update execution operation.

In step S261, the terminal apparatus 22 determines whether downloading is performed according to the user operation. In a case where the user operates the close button 56 on the update notification screen 300, the terminal apparatus 22 returns from step S261 to step S200 of Fig. 17 without executing download.

In a case where the user operates the next button 301 on the update notification screen 300, the terminal apparatus 22 proceeds from step S261 to step S262 in Fig. 18 and performs download processing. That is, the main body software to be updated is downloaded from the server system 1. The terminal apparatus 22 displays a download screen during download, and displays a download completion screen 310 in Fig. 26B in response to download completion. The download completion screen 310 includes a transfer button 311.

In step S263, the terminal apparatus 22 determines whether or not to execute transfer of the main body software as upload data. In a case where the user operates the close button 56 on the download completion screen 310, the terminal apparatus 22 returns from step S263 to step S200 of Fig. 17 without executing transfer.

In a case where the user operates the transfer button 311 on the download completion screen 310, the terminal apparatus 22 proceeds from step S263 to step S264 in Fig. 18, and performs processing of transferring the downloaded main body software to the camera 21.

Then, the terminal apparatus 22 displays the update completion screen 320 of Fig. 26C in step S265 according to the transfer completion.

When the user operates the close button 321 or the close button 56 on the update completion screen 320, the terminal apparatus 22 returns from step S266 to step S200 of Fig. 17.

In a case where the operation of the self-diagnosis button 238 is detected on the device screen 230, the terminal apparatus 22 proceeds from step S207 to step S270 in Fig. 19, and performs processing of transmitting a diagnosis request to the server system 1. That is, the terminal apparatus 22 transmits the equipment log acquired from the camera 21 being connected for communication and the equipment information (model name, manufacturer name, etc.) of the camera 21 to the server system 1.

When receiving the diagnosis request in step S301, the server apparatus 10 acquires equipment information and an equipment log of the camera 21 in step S302, and performs diagnosis processing in step S303. The server apparatus 10 generates information of a diagnosis result, information of a necessary coping method, information of a repair recommendation, or the like on the basis of an error record of an equipment log or the like. In the server apparatus 10, diagnosis can also be performed using the image data captured and uploaded by the diagnosis target camera 21.

Then, in step S304, the server apparatus 10 transmits the diagnosis result to the terminal apparatus 22.

The terminal apparatus 22 receives the diagnosis result in step S271, and displays the diagnosis result in step S272. In this case, a diagnosis result, a coping method, and the like are displayed to the user. In this case, display of the chatbot function 30c2 for inquiry, display of a help button, or the like may be performed, and cooperation with the chatbot function 30c2 or the help function 30c3 described in Fig. 5 may be performed according to the operation.

In response to the user performing the operation of closing the presentation screen of the diagnosis result, the terminal apparatus 22 returns from step S273 to step S200 in Fig. 17.

In this manner, by providing the self-diagnosis button 238 on the device screen 230 and displaying the diagnosis result, the user can easily confirm the state of the camera 21 to be used using the user interface of the terminal apparatus 22.

### [3-4: Processing of store screen]

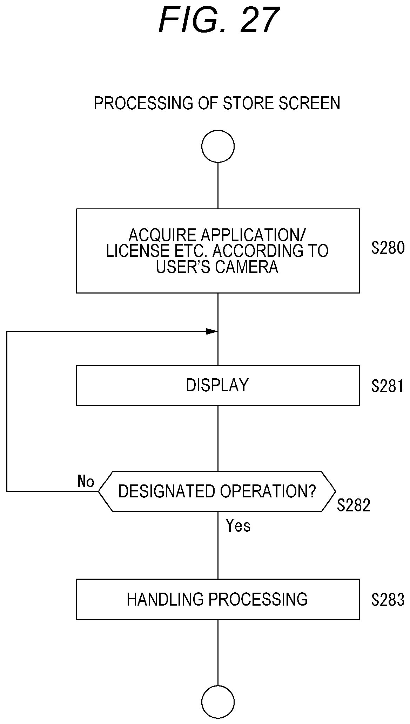

Subsequently, processing in a case where transition is made from step S112 of Fig. 10 to the store screen 340 (Fig. 28) will be described with reference to Fig. 27. Note that the screen may proceed from a screen other than the home screen 200 (device screen 230, storage screen 350, screen of network service 31, and the like) to the store screen 340.

The store screen 340 is a screen on which goods can be bought and sold. The store screen 340 may be a screen presented in the portal service 30 in cooperation with the marketplace 32, or may be a screen displayed by transitioning from the portal service 30 to the marketplace 32.

The terminal apparatus 22 proceeds from step S112 in Fig. 10 to step S280 in Fig. 27 in response to the transition operation to the store screen 340 on the home screen 200, for example, and acquires the information of the goods according to the camera 21 registered for the sign-in user. That is, the terminal apparatus 22 requests the server apparatus 10 for goods information regarding the camera 21, the lens barrel, and the peripheral equipment registered for the user, and receives the corresponding information.

The goods information mentioned here includes, for example, software goods such as an application program and a license adapted to the camera 21 owned by the user. Furthermore, a substance such as peripheral equipment of the camera 21 or a compatible lens barrel may be goods.

Moreover, a project (image collection) of another person generated by the network service 31 to be described later may be goods. In the case of a project, for example, a recommended project may be selected as goods to be presented according to the preference or genre of the sign-in user.

In step S281, the terminal apparatus 22 displays the store screen 340. Fig. 28 illustrates an example of the store screen 340.

On the store screen 340, the display mode of the app icon 62 is made different from the others, and it is indicated that the screen is currently the store screen 340 and screen transition by the operation of the app icon 62 is not performed.

On the store screen 340, for example, an application program as goods is presented as the application list 341. Furthermore, a license as goods is presented in the license list 342.

In addition, a project list, a related article list, and the like may be displayed.

The terminal apparatus 22 proceeds from step S282 to step S283 according to the user's operation on the application program or the like presented as goods, and performs handling processing.

As the handling processing, for example, display of detailed information, display of information of a seller, purchase processing, settlement processing, and the like are assumed. The handling processing may be processing executed by transitioning to the marketplace 32.

### [3-5: Processing of storage screen]

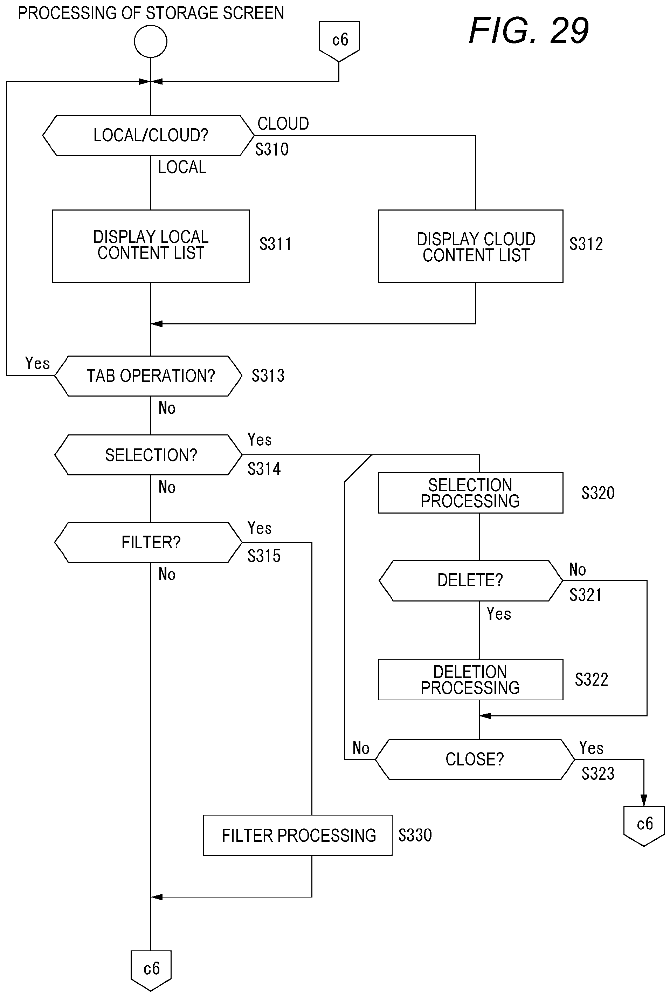

Next, processing in a case where the transition is made from step S113 of Fig. 10 to the storage screen 350 (Fig. 30A, Fig. 30B) will be described with reference to Fig. 29. Note that the screen may proceed from a screen other than the home screen 200 (device screen 230, store screen 340, screen of network service 31, and the like) to the storage screen 350. The storage screen 350 is a screen that presents the stored image.

For example, the terminal apparatus 22 proceeds from step S113 in Fig. 10 to step S310 in Fig. 29 according to the transition operation to the storage screen 350 on the home screen 200, determines whether the current presentation target is the local storage or the cloud storage, and then proceeds to step S311 or step S312.

In a case where the current setting (the initial setting or the last setting at the time of the previous display) is the local storage, the terminal apparatus 22 proceeds to step S311 and displays a list of images imported from the camera 21 to the terminal apparatus 22. For example, the storage screen 350 is displayed as illustrated in Fig. 30A.

The storage screen 350 is provided with a local tab 351 and a cloud tab 352, and in step S311, the storage screen 350 is displayed in a state where the local tab 351 is selected.

Furthermore, in a case where the current setting is the cloud storage in step S310, the terminal apparatus 22 proceeds to step S312 and displays a list of the images uploaded to the server system 1. For example, the storage screen 350 is displayed in a state where the cloud tab 352 is selected as illustrated in Fig. 30B.

On the storage screen 350, when a tab operation is detected, the terminal apparatus 22 returns from step S313 to step S310, and proceeds to step S311 or step S312 according to the selected tab. Therefore, the state of Fig. 30A and the state of Fig. 30B are switched according to the operations of the local tab 351 and the cloud tab 352.

On the storage screen 350, the display mode of the storage icon 63 is made different from the others, and it is indicated that the screen is currently the storage screen 350 and screen transition by the operation of the storage icon 63 is not performed.

In a list section 353 on the storage screen 350, image data is displayed in a list by thumbnails. Furthermore, a format (RAW data, JPEG data, etc.) and a file name of the image data are displayed together with each thumbnail.

The image displayed in the list section 353 can be extracted by setting filter conditions. The condition displaying section 354 displays filter conditions. For example, imaging date and time, a range of imaging date and time, a data format, and the like are displayed as conditions. A filter condition is selected according to the operation of the filter button 355. Furthermore, the number of images 357 of the images displayed in the list section 353 is also displayed.

A selection button 356 is provided on the storage screen 350, and in a case where the operation of the selection button 356 is detected, the terminal apparatus 22 proceeds from step S314 to step S320. In step S320, the terminal apparatus 22 performs selection processing.

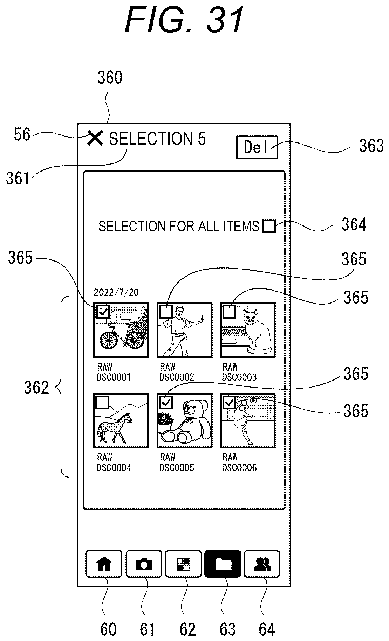

For example, in step S320, the terminal apparatus 22 displays an image selection screen 360 as illustrated in Fig. 31.

In the image selection screen 360, a check box 365 is displayed for each image in the list section 353, and all selection boxes 364 for all items are also displayed.

Furthermore, a delete button 363 and a selection number 361 are displayed on the image selection screen 360.

In step S320, the terminal apparatus 22 performs processing of setting and displaying the check on/off of the check box 365 according to the user's operation on the image.

Furthermore, the terminal apparatus 22 collectively sets and displays check on/off of the check boxes 365 of all images according to the user's operation of the all selection boxes 364.

As a result, the user can arbitrarily select an image in the local storage or the cloud storage. The terminal apparatus 22 displays the number of selected images by the selection number 361.

In step S321, the terminal apparatus 22 monitors the operation of the delete button 363. In a case where the operation of the delete button 363 is detected, the terminal apparatus 22 proceeds to step S322 and performs deletion processing.

In a case where the processing proceeds to step S320 by operating the selection button 356 in a state where the local tab 351 is opened, selection is performed on the list section 353 of the local tab 351 on the image selection screen 360. In this case, in a case where the operation of the delete button 363 is detected, the terminal apparatus 22 performs deletion processing on the image stored in the terminal apparatus 22 in step S322.

On the other hand, in a case where the processing proceeds to step S320 by operating the selection button 356 while the cloud tab 352 is open, selection is performed on the list section 353 of the cloud tab 352 on the image selection screen 360. In this case, in a case where the operation of the delete button 363 is detected, the terminal apparatus 22 transmits a deletion request of the selected image to the server apparatus 10 in step S322, and the selected image is deleted in the storage 11.

In a case where the user operates the close button 56 on the image selection screen 360, the terminal apparatus 22 returns from step S323 to step S310, and returns to the storage screen 350 in step S311 or step S312.

In a case where the operation of the filter button 355 is detected on the storage screen 350, the terminal apparatus 22 proceeds from step S315 to step S330 and performs filter processing. For example, the terminal apparatus 22 performs processing such as setting of a filter condition according to a user operation, execution of filter processing, and display update in the list section 353 by the extracted image.

Note that, although not illustrated in Fig. 29, for example, at the stage of the storage screen 350, an operation of uploading all or a part of the image of the local tab 351 to the server system 1 may be enabled. For example, an operation method is conceivable in which an upload button is provided on the image selection screen 360 of Fig. 31 for the local tab 351, and the selected image is uploaded according to the operation of the upload button.

Furthermore, on the storage screen 350, an image list stored in the camera 21 being connected, an image list stored in the terminal apparatus 22, and an image list stored in the storage 11 may be displayed as a camera tab, a local tab, and a cloud tab, respectively.

Furthermore, as described above, in a case where images stored in the terminal apparatus 22 and the storage 11 are synchronized with each other, the local tab and the cloud tab do not need to be distinguished.

### [3-6: Processing of top screen of network service]

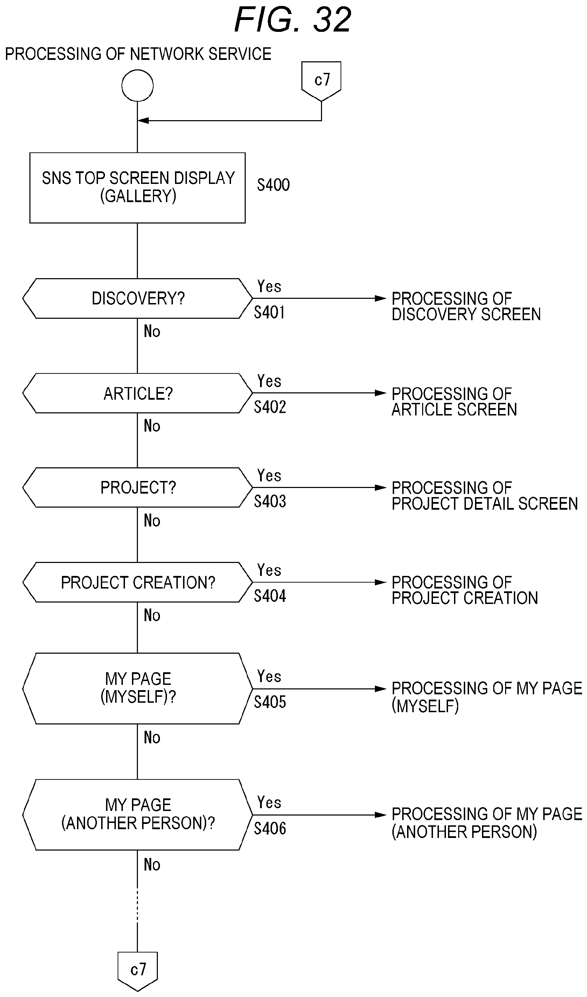

Next, processing in a case where transition is made from step S114 of Fig. 10 to the screen of the network service 31 will be described with reference to Fig. 32.

Note that Fig. 32 illustrates processing of the terminal apparatus 22 in the case of transitioning to the network service 31, but does not illustrate all the processing, and illustrates only the extracted processing as a description of the embodiment.

For example, in a case where the process proceeds from step S114 in Fig. 10 to step S400 in Fig. 32, the terminal apparatus 22 displays the top screen of the network service 31. For example, a gallery screen 400 in Fig. 33 is a top screen of the network service 31.

Note that the screen may proceed from a screen other than the home screen 200 (the device screen 230, the store screen 340, the storage screen 350, another screen of the network service 31, and the like) to the gallery screen 400.

The network service 31 has a function as an SNS as described above, and the gallery screen 400 is a top screen for the user who is signed in.

Note that each screen of the network service 31 described below is an example of an image corresponding to a relatively wide display screen such as a PC or a tablet for the sake of description. However, it goes without saying that a vertically long screen such as a smartphone may be used. Similarly, each screen of the portal service 30 described above is an example of a vertically long screen assuming a smartphone, but there is also an example of a horizontally long screen using a display unit such as a PC.

Each screen by the network service 31 described below is configured by the server apparatus 10 using the equipment information, the image information, and the user information for each user stored in the storage 11, and is provided to the terminal apparatus 22. That is, information registered by the portal service 30 or the marketplace 32 is also reflected on the screen.

Note that each screen by the network service 31 includes a gallery screen 400, a discovery screen 410, an article screen 430, a project detail screen 450, a project creation screen 480, a project editing screen 500, a My Page screen 600, a My Page screen 640, and the like.

Furthermore, a user icon 54, a notification icon 55, a home icon 60, a camera icon 61, an app icon 62, a storage icon 63, and a network icon 64 are also displayed on each screen of the network service 31 described below, and screen transition is enabled by these operations.

On these screens of the network service 31, the display mode of the network icon 64 is made different from the others, and it is indicated that the screen is currently the screen of the network service 31 or that screen transition by the operation of the network icon 64 is not performed.

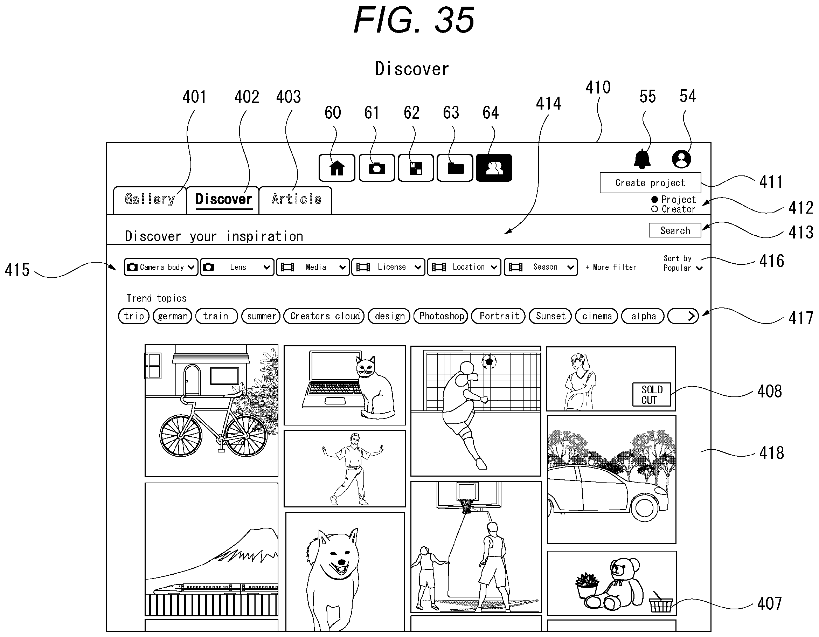

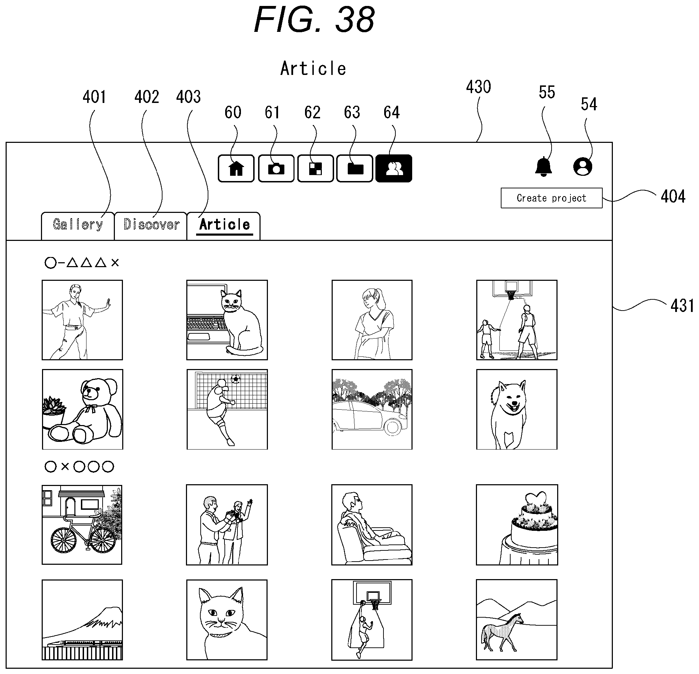

On the screen of the network service 31, a gallery tab 401, a discovery tab 402, and an article tab 403 are displayed, and screens are switched among the gallery screen 400 in Fig. 33, the discovery screen 410 in Fig. 35, and the article screen 430 in Fig. 38.

Fig. 33 illustrates the gallery screen 400 in a state where the gallery tab 401 is selected. When the user operates the discovery tab 402, the terminal apparatus 22 proceeds from step S401 in Fig. 32 to the processing of the discovery screen 410. Furthermore, when the user operates the article tab 403, the terminal apparatus 22 proceeds from step S402 to the processing of the article screen 430.

On the gallery screen 400 in Fig. 33, a project creation button 404 is displayed. Furthermore, on the gallery screen 400, areas such as a pickup gallery 405 and a recommended selection 406 are prepared, and content such as an image and a project are displayed.

For example, the pickup gallery 405 displays a project or content of a popular creator, a project or content that is a topic, or the like.

Furthermore, in the recommended selection 406, a project or content recommended to the user who is signed in is displayed. For example, it is conceivable to display a project of a creator of the same genre as the user, a project of a creator using the same camera 21, or the like.

Furthermore, for example, an icon 57 of the creator is displayed for the project. When a mouse cursor is hovered on a project, a title, a number of likes, an author name, a number of views, and the like are displayed.

Through the pickup gallery 405, the recommended selection 406, and the like, it is possible to introduce projects and the like of other creators to the browsing user.

Furthermore, in a case where the displayed project or the like is to be sold in the marketplace 32, sales information such as an in-sales icon 407 and a sales end icon 408 is displayed.

In step S400 of Fig. 32, the terminal apparatus 22 performs these displays on the basis of the information transmitted from the server apparatus 10.

The terminal apparatus 22 performs the processing from step S401 to step S406 in Fig. 32 on the gallery screen 400, and transitions to the discovery screen 410 and the article screen 430 in steps S401 and S402 according to the tab operation as described above.

On the gallery screen 400, an all browse button 409 is displayed for the pickup gallery 405 and the recommended selection 406, and the screen transitions from step S401 to the discovery screen 410 also by operating the all browse button 409.

In a case where the operation of designating the project displayed on the gallery screen 400 (for example, clicking of the project) is detected, the terminal apparatus 22 proceeds from step S403 of Fig. 32 to processing of a project detail screen 450 to be described later.

In a case where the operation of the project creation button 404 is detected on the gallery screen 400, the terminal apparatus 22 proceeds from step S404 to processing of the project creation screen 480 to be described later.

In a case where the operation of the user icon 54 is detected on the gallery screen 400, the terminal apparatus 22 proceeds from step S405 to the processing of the My Page screen 600. The My Page screen 600 is a page that displays the user's own profile and the like.

For example, in a case where the operation of the icon 57 of another person displayed accompanying the project on the gallery screen 400 is detected, the terminal apparatus 22 proceeds from step S406 to the processing of the My Page screen 640. The My Page screen 600 is a page that displays a profile or the like of another person for the browsing user.

### [3-7: Processing of discovery screen]

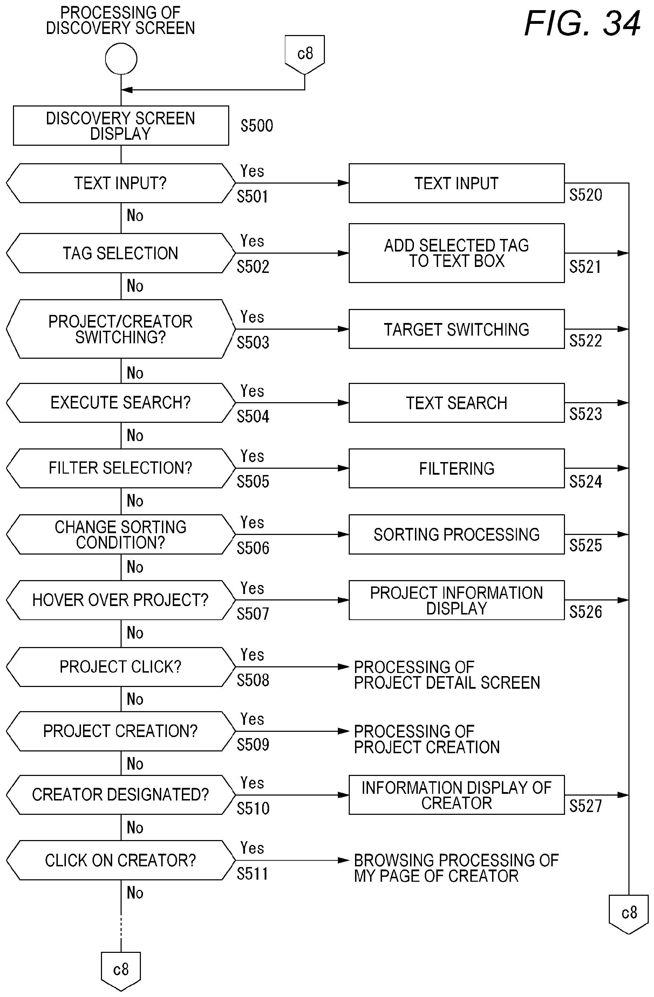

Processing of the discovery screen 410 will be described with reference to Fig. 34. For example, in a case where the process proceeds from step S401 in Fig. 32 to step S500 in Fig. 34, the terminal apparatus 22 performs display processing of the discovery screen 410 as illustrated in Fig. 35. Then, operation monitoring such as step S501 to step S511 in Fig. 34 is performed.

On the discovery screen 410, the projects extracted under the filter condition in the project list 418 are displayed.

The filter condition can be set by the user on the discovery screen 410. Alternatively, in a case where a transition is made from the gallery screen 400 by the all browse button 409 in Fig. 33, the filter condition set in the pickup gallery 405 or the recommended selection 406 corresponding to the all browse button 409 is initially validated, and the extracted projects are displayed in the project list 418.

That is, the discovery screen 410 is a screen suitable for the user who is signed in to search for a favorite project.

Note that, similarly to the gallery screen 400, for each project displayed in the project list 418, an icon 57 of the creator is displayed, or when a mouse cursor is hovered on a project, a title, the number of likes, an author name, the number of views, and the like are displayed.

Furthermore, for the project, the in-sales icon 407 and the sales end icon 408 are displayed according to the sales status.

Furthermore, here, the project list 418 is displayed as an example, but a creator list may be displayed, or the project list 418 and the creator list may be switched.

On the discovery screen 410, the project creation button 411, the project/creator selection section 412, the search button 413, the text box 414, the filter button 415, the sort button 416, the tag 417, and the like are displayed.

The user can input arbitrary characters in the text box 414. In a case where the processing for the text box 414 is detected, the terminal apparatus 22 proceeds from step S501 to step S520, and performs the character input processing according to the operation.

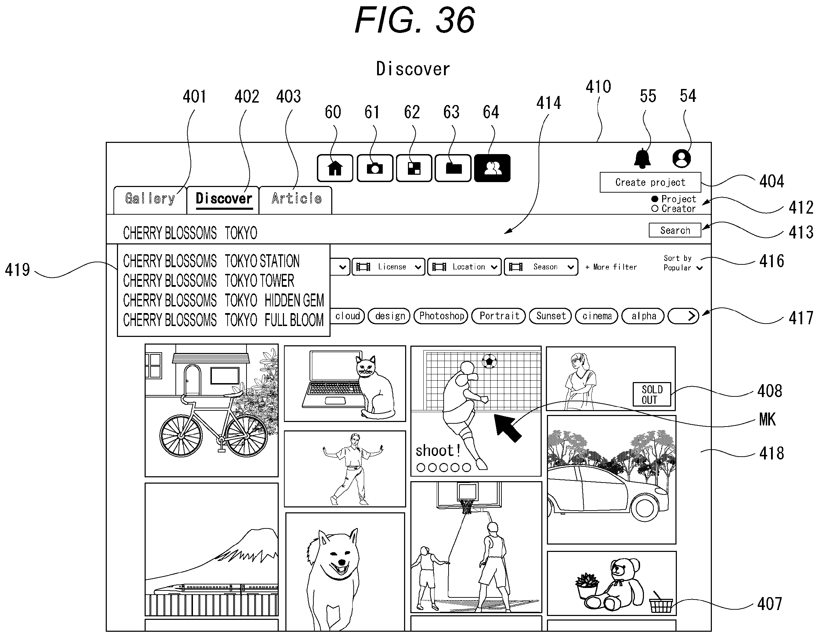

The terminal apparatus 22 displays and stores a character string in the text box 414 according to direct character input by the user, for example. Furthermore, the terminal apparatus 22 displays a candidate window 419 that displays candidates of frequently searched keywords as illustrated in Fig. 36 during character input into the text box 414. As a result, character input by the user can be assisted. As described above, the terminal apparatus 22 performs processing such as sequential character input to the text box 414 and selection of the candidate character string from the candidate window 419 in step S520, and returns to step S500.

Various keywords are presented as the tag 417 on the discovery screen 410. Commonly used words, words frequently used by the user, and the like are displayed in the processing of step S500 while being sequentially updated as the tag 417. The tag 417 is used for input to the text box 414.

In a case where the user operates one of the tags 417, the terminal apparatus 22 proceeds from step S502 to step S521, performs processing of adding the character string of the selected tag 417 to the text box 414, and returns to step S500.

For example, in a case where the user selects the tag 417 "car", "car" is added to the character string of the text box 414.

The project/creator selection section 412 on the discovery screen 410 is an operator that selects whether the search target is a project or a creator. The user can arbitrarily select either one.

When detecting the operation of the project/creator selection section 412, the terminal apparatus 22 proceeds from step S503 to step S522, and sets the search target as a project or a creator. Then, the process returns to step S500.

In the case of detecting the operation of the search button 413 by the user, the terminal apparatus 22 proceeds from step S504 to step S523 and executes text search processing. That is, a search for a project or a creator is performed using the character string input in the text box 414.

Specifically, in step S523, the terminal apparatus 22 transmits the character string input in the text box 414 and the search target selected by the project/creator selection section 412 to the server system 1. In response to this, the server apparatus 10 searches for a project or a creator (registered user) stored in the storage 11 by a character string. The search for a project or a creator uses tag information or the like added to the project or the creator. For example, for a project, "title", "outline description", "tag", "gear information (exchangeable image file format (Exif))", "description text", and the like are set as search targets. For the creator, "avatar name", "avatar ID", "self-introduction text", "camera and lens barrel being displayed", "interested object (imaging genre)", "activity base", "imaging level", and the like are set as search targets.

In the server system 1, the search is performed in this manner, and the result information is transmitted to the terminal apparatus 22. The terminal apparatus 22 receives information of a search result by the server system 1.

When the terminal apparatus 22 acquires the information of the search result by performing such processing in step S523, the process returns to step S500 to update the discovery screen 410. That is, the search result project or the project created by the creator of the search result is displayed in the project list 418.

Furthermore, in a case where a creator list is displayed, the creator of the search result is displayed.

Note that, in this example, the search is performed by operating the search button 413, but an incremental search may be performed every time a character is input into the text box 414.

Filter conditions are set for the filter buttons 415 on the discovery screen 410. For example, a camera, a lens, ISO, a shutter speed, an F value, a focal length, and the like are prepared as types of filters, and these types and values can be set as filter conditions.

In a case where the operation of the filter button 415 is detected, the terminal apparatus 22 proceeds from step S505 to step S524, and performs filtering according to the condition setting of the operated filter button 415. That is, the terminal apparatus 22 filters the projects displayed in the project list 418, and returns to step S500 to display the project list 418 corresponding to the filtering result.

The sort button 416 is an operator for performing sorting under various conditions.

In a case where the operation of the sort button 416 is detected, the terminal apparatus 22 proceeds from step S506 to step S525, and sorts the project list 418 under the selected sorting condition. That is, the order setting is performed on the projects displayed in the project list 418 under the sorting condition. Then, the terminal apparatus 22 returns to step S500 and displays the project list 418 according to the sorting result.

As the sorting condition, in the case of the project list 418, an order of creation date and time, an order of upload, an order of a large number of "likes", an order of projects by creators having a large number of followers, and the like are assumed. Furthermore, in the case of displaying a creator list, the order of the number of followers is assumed.

In a case where the user detects an operation of hovering the mouse cursor for a certain project in the project list 418, the terminal apparatus 22 proceeds from step S507 to step S526 and performs project information display processing.

For example, as described above, the title, the number of likes, the author name, the number of views, and the like are displayed. Sales information such as the in-sales icon 407 and the sales end icon 408 may be displayed. Then, the process returns to step S500.

Note that Fig. 36 illustrates an example in which information such as an author name and a title is displayed for a project in which a mouse cursor MK is hovering.

In a case where a selection operation such as clicking on the project by the user is detected, the terminal apparatus 22 proceeds from step S508 to the processing of the project detail screen 450.

In a case where the operation of the project creation button 411 is detected on the discovery screen 410, the terminal apparatus 22 proceeds from step S509 to processing of the project creation.

In a case where a creator list is displayed on the discovery screen 410, in a case where an operation of hovering the mouse cursor with respect to a certain creator is detected, the terminal apparatus 22 proceeds from step S510 to step S527, and performs information display processing of the creator. For example, names, genres, activity bases, the number of posts, and the like of creators are displayed. Then, the process returns to step S500.

In a case where a creator list is displayed on the discovery screen 410, in a case where a selection operation such as clicking on a certain creator is detected, the terminal apparatus 22 proceeds from step S511 to the browsing processing of the My Page screen 640 of the creator. This is browsing processing of the My Page screen 640 to be described later for the terminal apparatus 22 of the user who is signed in.

### [3-8: Processing of article screen]

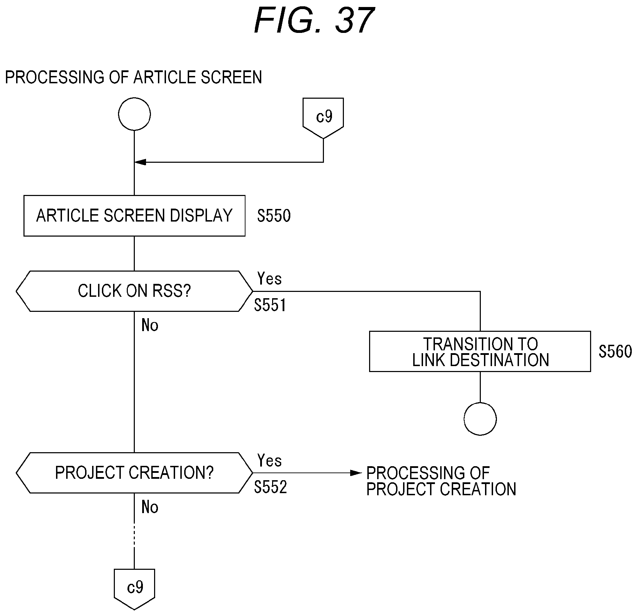

For example, in a case where the process proceeds from step S402 in Fig. 32 to step S550 in Fig. 37, the terminal apparatus 22 performs display processing of the article screen 430 as illustrated in Fig. 38. Then, operation monitoring such as steps S551 and S552 is performed.

A list section 431 is provided on the article screen 430, and a list of contents such as images (moving images/still images) and articles provided by the sales company is displayed. For example, display based on rich site summary (RSS) of content is performed.

When the user performs an operation of designating content, the terminal apparatus 22 proceeds from step S551 to step S560 in Fig. 37, and performs processing such as activating a browser and transitioning to a link destination.

Furthermore, the project creation button 404 is displayed on the article screen 430. In a case where it is detected that the user has operated the project creation button 404, the terminal apparatus 22 proceeds from step S552 to the processing of the project creation.

### [3-9: Processing of project detail screen]

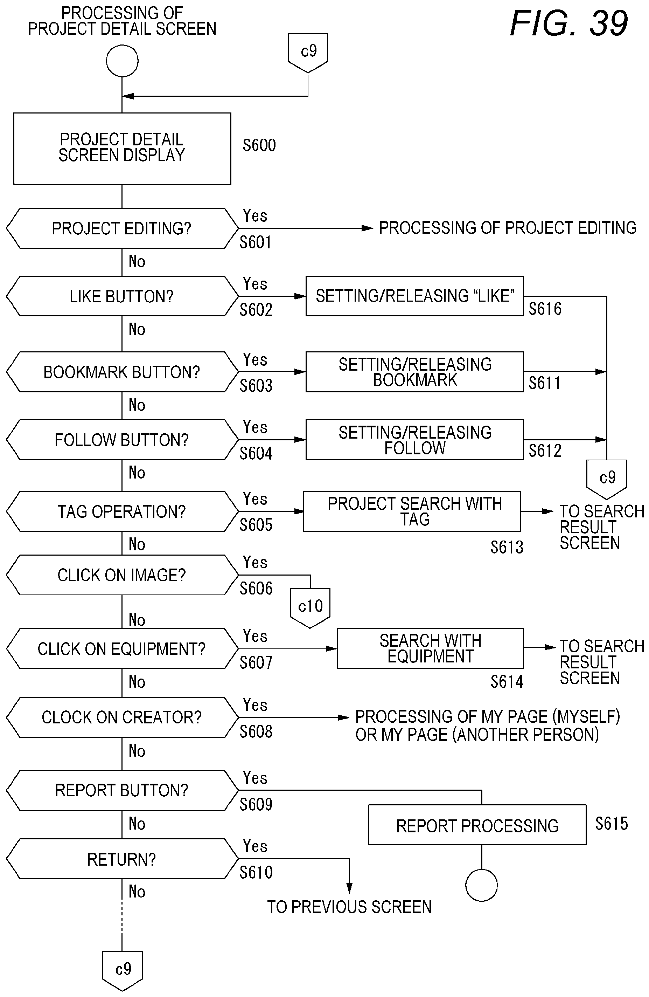

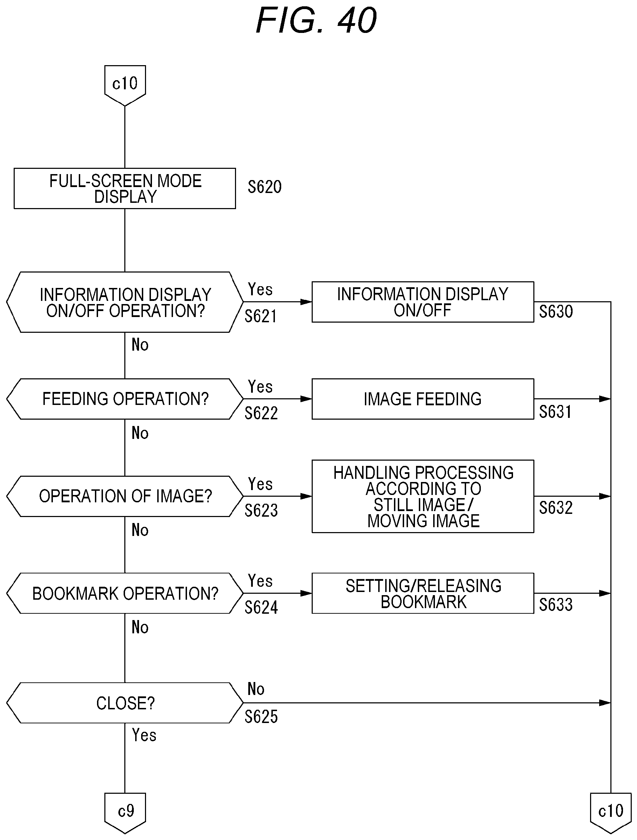

The processing of the project detail screen 450 will be described with reference to Figs. 39 and 40.

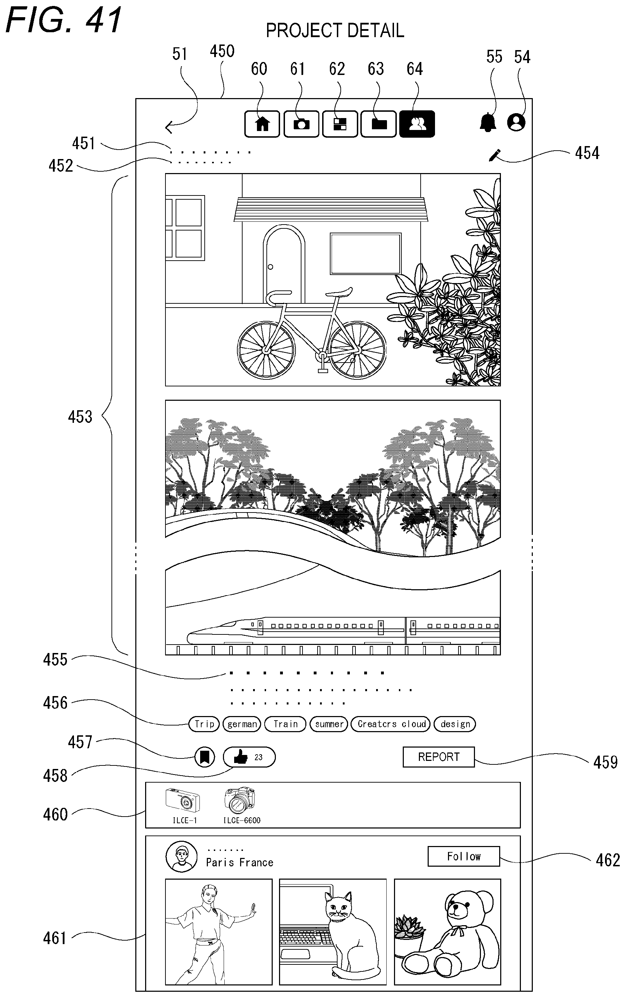

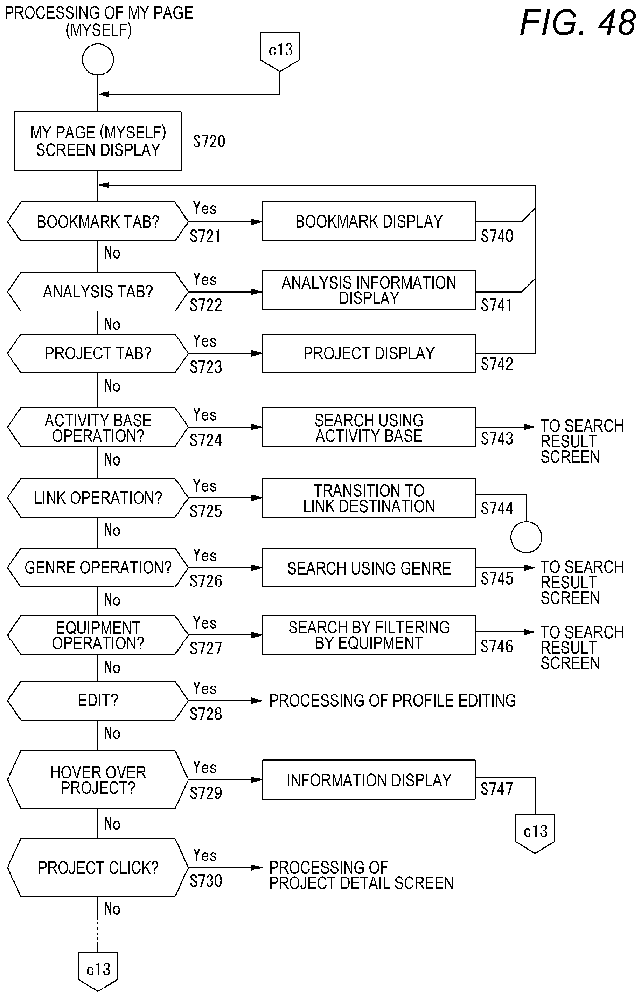

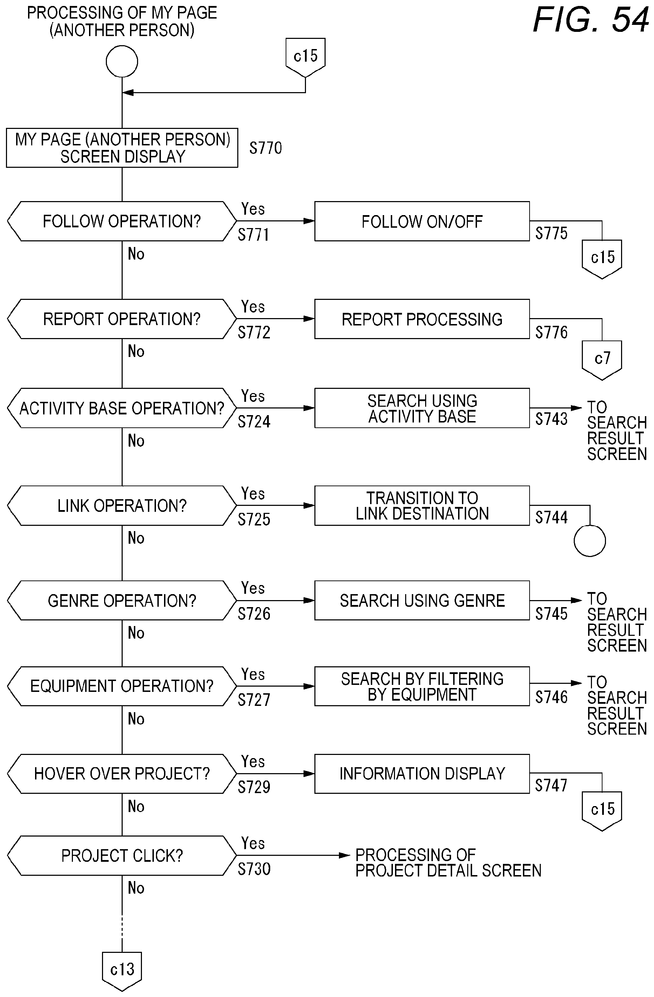

In the case of proceeding from step S403 in Fig. 32 or step S508 in Fig. 34 to step S600 in Fig. 39, the terminal apparatus 22 performs display processing of the project detail screen 450 as illustrated in Fig. 41. Note that step S730 in Fig. 48 or step S730 in Fig. 54 described later may proceed to step S600 in Fig. 39. That is, the display may transition from the gallery screen 400, the discovery screen 410, or the My Page screen 600 and the My Page screen 640 to be described later to the display of the project detail screen 450.

On the project detail screen 450, a project title 451 and an author name 452 of the selected project are displayed.

Furthermore, on the project detail screen 450, one or a plurality of images (moving image and still image) constituting the project is displayed on the image display section 453. As described above, the project in the present disclosure has a property as an image collection in which a creator arranges content (a link to a still image, a moving image, or a specific moving image in an external video site, or the like) according to a theme, for example, and the content of the image display section 453 can be said to be the main body of the project.

On the image display section 453, a still image as content, a representative image of a moving image, an image corresponding to a link, and the like are displayed in an order determined by the creator.

In the description text 455, a description or the like input by the creator for the project is displayed.

As the tag 456, a tag of contents related to the project or contents set by the creator is displayed.

In a gear information section 460, equipment such as the camera 21 used for capturing an image of this project is displayed.

A creator information section 461 displays information on the creator of the project. For example, an icon, a name, a base (country), a link to a representative project, and the like of the creator are displayed.

Furthermore, an edit button 454, a bookmark button 457, a like button 458, a report button 459, a follow button 462, and the like are displayed on the project detail screen 450.

However, the project detail screen 450 has a case where the user who is signed in browses the project detail screen 450 of the project created by the user himself/herself and a case where the user browses the project detail screen 450 created by another creator. For example, in the transition from the My Page screen 600, details of its own project are browsed, and in the transition from the My Page screen 640, details of a project of another person are browsed. In the transition from the gallery screen 400 or the discovery screen 410, details of the project of the user himself/herself or another person are browsed by selecting the presented project.

Then, there is a difference in display content between the display of the project detail screen 450 of the project created by itself and the project detail screen 450 of the project created by another creator.

For example, the terminal apparatus 22 displays the edit button 454 only when the user who is signed in browses the project detail screen 450 of his/her project.

Furthermore, the terminal apparatus 22 displays the bookmark button 457, the like button 458, the report button 459, and the follow button 462 only when browsing the project detail screen 450 of the project of another person.

Note that the project detail screen 450 of the user's own project may display the number of likes instead of the like button 458.

Although Fig. 41 illustrates all these for the sake of explanation, the display content is changed depending on whether the project is of the user or of another person.

When displaying the project detail screen 450 as described above in step S600 of Fig. 39, the terminal apparatus 22 performs operation monitoring in steps S601 to S610 and the like.

In a case where the operation of the edit button 454 by the user who is browsing the project detail screen 450 of the own project is detected, the terminal apparatus 22 proceeds from step S601 in Fig. 39 to the project editing processing.

In a case where the operation of the like button 458 by the user who is browsing the project detail screen 450 of the project of another person is detected, the terminal apparatus 22 proceeds from step S602 to step S616 and performs processing of setting or releasing "like". Then, the terminal apparatus 22 returns to step S600 and updates the displayed "like" number.

The user can set "like" by operating the like button 458 and cancel "like" by operating the like button 458 again.

In a case where the operation of the bookmark button 457 by the user who is browsing the project detail screen 450 of the project of another person is detected, the terminal apparatus 22 proceeds from step S603 to step S611, and performs processing of setting or releasing the bookmark. Then, the terminal apparatus 22 returns to step S600.

The user can save or cancel the bookmark of the project by operating the bookmark button 457.

In a case where the operation of the follow button 462 by the user who is browsing the project detail screen 450 of the project of another person is detected, the terminal apparatus 22 proceeds from step S604 to step S612, and performs processing of setting or releasing the follow for the creator of the project. Then, the terminal apparatus 22 returns to step S600.

The user can follow or cancel the creator of interest by operating the follow button 462.

In a case where the operation of the tag 456 by the user is detected, the terminal apparatus 22 proceeds from step S605 to step S613, performs project search with the content of the operated tag 456, and transitions to a search result screen.

For example, the terminal apparatus 22 transmits information of the tag 456 to the server system 1, and receives a project search result using the information of the tag from the server system 1. Then, the search result is displayed.

The user can perform an operation such as clicking on the image displayed on the image display section 453. In a case where the click operation on the image is detected, the terminal apparatus 22 proceeds from step S606 to step S620 in Fig. 40, and performs full-screen mode display processing.

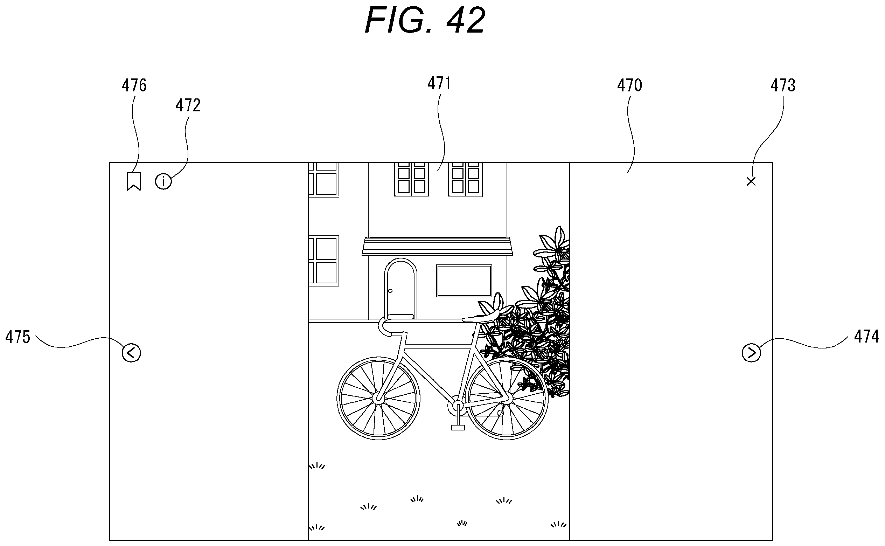

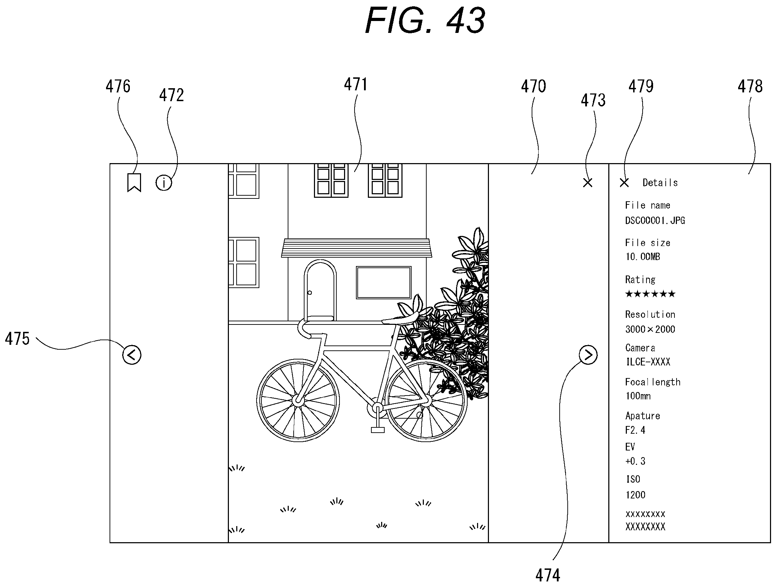

Figs. 42 and 43 illustrate examples of a full display screen 470 of an image in a full-screen mode.

Fig. 43 illustrates a state in which an image information section 478 is displayed, and Fig. 42 illustrates a state in which the image information section 478 is not displayed.

On the full display screen 470, the image 471 is mainly displayed large on the screen. Furthermore, an information button 472, a bookmark button 476, a close button 473, a next image button 474, a previous image button 475, an information close button 479, and the like are displayed.

Note that the image 471 is displayed as it is in the case of a still image, but in the case of a moving image, for example, a reproduction/stop button, a progress bar, and the like are displayed so that the user can arbitrarily reproduce the moving image.

The terminal apparatus 22 performs operation monitoring from step S621 to step S625 in a state where the display of the full display screen 470 of the image is executed in step S620 of Fig. 40.

The information button 472 is an operator for displaying detailed information on an image, and the information close button 479 is an operator for ending the display of the detailed information.

In a case where the operation of the information button 472 or the information close button 479 is detected, the terminal apparatus 22 proceeds from step S621 to step S630, and turns on/off the information display. That is, when the information button 472 is operated in the state of Fig. 42, the terminal apparatus 22 displays the detailed information on the image on the image information section 478 as illustrated in Fig. 43. Furthermore, when the information close button 479 or the information button 472 is operated in the state of Fig. 43, the terminal apparatus 22 terminates the display of the image information section 478 and returns to the state of Fig. 42. After the above processing, the terminal apparatus 22 returns to step S620.

As the detailed information to be displayed on the image information section 478, for example, a file name of an image, a file size, rating information, resolution, information on the camera 21 that captured an image, a focal length, an F value, an EV value, an ISO value, and the like are assumed. Such information is suitable, for example, when a user (creator) who is browsing refers to imaging of another creator.

In a case where the operation of the next image button 474 or the previous image button 475 is detected, the terminal operation proceeds from step S622 to step S631 as an image feeding operation, and an image feeding process is performed. That is, the terminal apparatus 22 displays the next image in the project in the case of the operation of the next image button 474, and displays the previous image in the project in the case of the operation of the previous image button 475. Then, the terminal apparatus 22 returns to step S620.

Note that the operation is not limited to the operation of the next image button 474 or the previous image button 475, and for example, in a case where a smartphone or the like is assumed as the terminal apparatus 22, the previous image or the next image may be displayed by a swipe operation or the like.

In a case where an operation such as clicking or reproducing/stopping the image 471 is detected, the terminal apparatus 22 proceeds from step S623 to step S632, performs the handling processing, and returns to step S620.

For example, in step S632, the terminal apparatus 22 performs processing of alternately switching between enlarged display and full screen fit display in response to a click on the still image or the like. Note that the terminal apparatus 22 also performs processing of changing the display position by a drag operation on the image 471 during enlarged display (in a case where it does not fit in the screen).

Furthermore, the terminal apparatus 22 also performs a process of starting reproduction in response to a reproduction operation on a moving image, a process of stopping reproduction in response to a stop operation, a process of changing a reproduction position by designating a position of a progress bar, or the like.

Note that the terminal apparatus 22 may perform processing of switching the resolution of an image according to a predetermined operation on a still image or a moving image.

In a case where the operation of the bookmark button 476 is detected, the terminal apparatus 22 proceeds from step S624 to step S633, performs processing of setting or releasing the bookmark for the image being displayed, and returns to step S620.

The user can save or cancel a bookmark for an individual image in a project by operating the bookmark button 476.

Note that, similarly to the project detail screen 450, in the case of displaying an image in a project posted by the user himself/herself who is sign-in, the bookmark button 476 is hidden.

In a case where the operation of the close button 473 is detected, the terminal apparatus 22 returns from step S625 to step S600 of Fig. 39, and returns to the display of the project detail screen 450.

In the case of detecting an operation such as clicking on equipment displayed on the gear information section 460 on the project detail screen 450, the terminal apparatus 22 proceeds from step S607 to step S614 in Fig. 39, and performs a search using the equipment as a filter condition. For example, the terminal apparatus 22 transmits information of the designated equipment to the server system 1. In response to this, the server apparatus 10 searches for the project, the image, and the creator stored in the storage 11 using the equipment information as a key. Then, the search result information is transmitted to the terminal apparatus 22. The terminal apparatus 22 receives the information of the search result by the server system 1 and displays the information as a search result screen.

For example, an image using the designated equipment, a project including an image using the designated equipment, a creator who has registered the designated equipment as his/her own gear, or the like is displayed as a search result screen.

As a result, the viewer can browse works and users according to the model of the camera 21 and the like, and information useful for the creator can be presented.

In the case of detecting an operation such as clicking on the icon or the like of the creator displayed in the creator information section 461 on the project detail screen 450, the terminal apparatus 22 proceeds from step S608 of Fig. 39 to processing of the My Page screen 600 or processing of the My Page screen 640 to be described later.

In a case where the operation of the report button 459 by the user who is browsing the project detail screen 450 of the project of another person is detected, the terminal apparatus 22 proceeds from step S609 to step S615 and performs report processing. For example, the terminal apparatus 22 transitions to a report screen to enable reporting. Note that it is conceivable to hide the reported project from the user who has reported.

In the case of detecting the operation of the return button 51 on the project detail screen 450, the terminal apparatus 22 returns to the processing of the previous screen from step S610 in Fig. 39.

For example, in a case where the screen transitions from the gallery screen 400 to the project detail screen 450, the screen returns to the gallery screen 400. In a case where the screen display has transitioned from the discovery screen 410 to the project detail screen 450, the screen display returns to the discovery screen 410. In a case where the screen transitions from the My Page screen 600 and the My Page screen 640 to be described later, the screen is returned to those screens.

Note that, although not illustrated, the in-sales icon 407, the sales end icon 408, and the like as illustrated in Fig. 33 may be displayed as the sales information for the project on the project detail screen 450.

Furthermore, although the example in which the information button 472 and the bookmark button 476 are displayed on the full display screen 470 in Figs. 42 and 43 has been described, the information button 472 and the bookmark button 476 may be displayed for each image on the project detail screen 450, and the detailed information display and the bookmark processing may be performed according to the operation.

### [3-10: Processing of project creation screen]

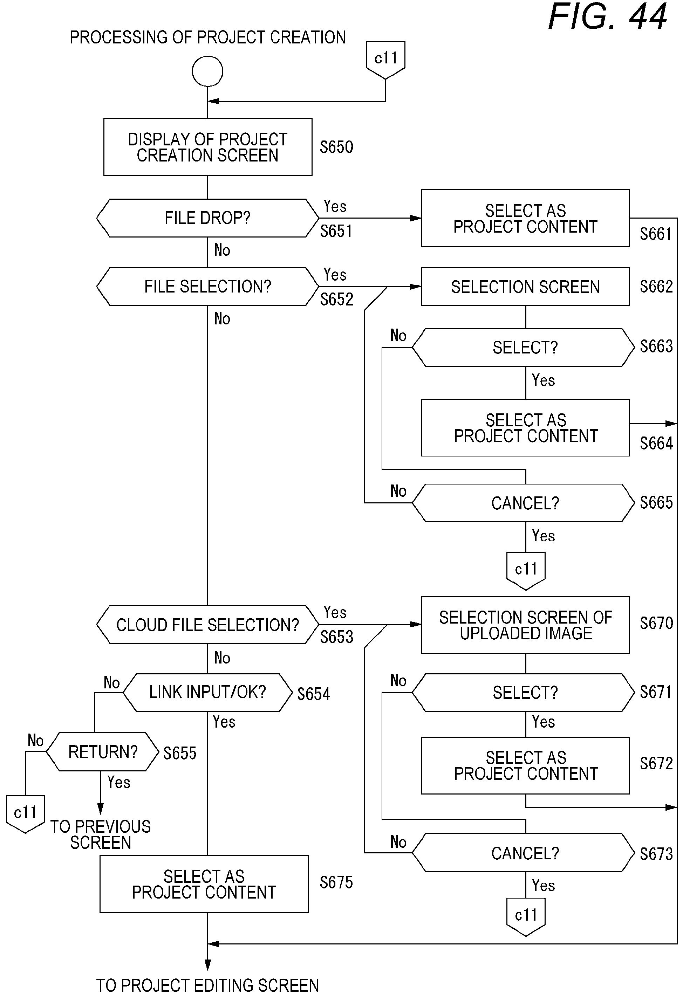

The processing of the project creation screen 480 will be described with reference to Fig. 44.

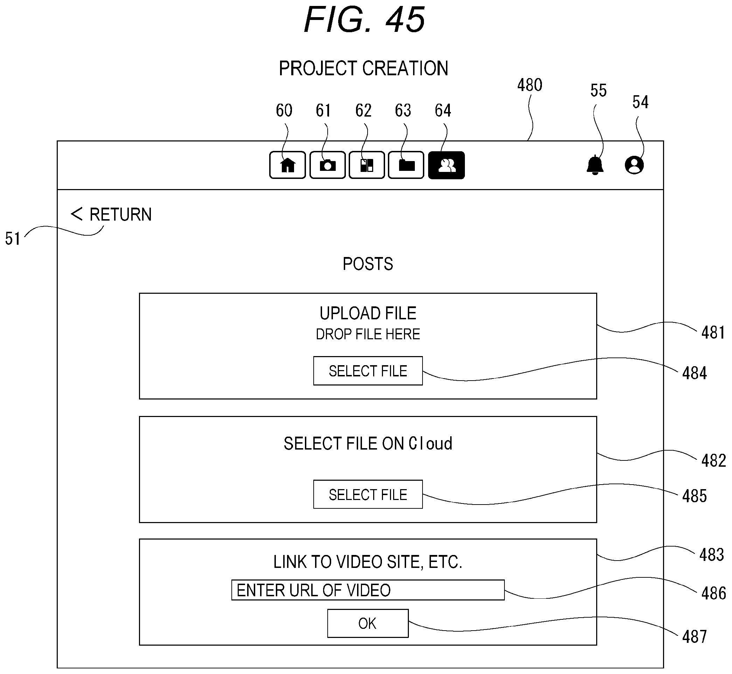

In the case of proceeding from step S404 in Fig. 32 or step S509 in Fig. 34 to step S650 in Fig. 44, the terminal apparatus 22 performs display processing of the project creation screen 480 as illustrated in Fig. 45. That is, the display transitions from the gallery screen 400 and the discovery screen 410 to the display of the project creation screen 480.

Then, the terminal apparatus 22 performs operation monitoring from step S651 to step S655 in Fig. 44 in a state where the display processing of the project creation screen 480 is performed.

On the project creation screen 480, a file upload section 481, a cloud file selection section 482, and a link input section 483 are prepared as three routes for specifying content (images and links) to be incorporated into a new project.

The file upload section 481 is an area for selecting an image file from a local storage of the terminal apparatus 22. The user can drag an image file (still image/moving image) stored in the storage unit in the terminal apparatus 22 and drop the image file into the file upload section 481.

In a case where the drop operation is detected, the terminal apparatus 22 proceeds from step S651 to step S661, and performs processing of selecting the dropped image file as project content and transitioning to a project editing screen 500 to be described later.

Furthermore, a selection button 484 is prepared in the file upload section 481. In a case where the operation of the selection button 484 is detected, the terminal apparatus 22 proceeds from step S652 to step S662, and displays an image file selection screen.

One or a plurality of image files (still images and moving images) can be selected on the selection screen. Furthermore, a cancel operation can be performed.

In a case where the user performs the cancel operation, the terminal apparatus 22 returns from step S665 to step S650.

In a case where the user performs the selection operation of one or more image files, the terminal apparatus 22 proceeds from step S663 to step S664, and performs processing of selecting the selected one or more image files as project content and transitioning to the project editing screen 500 to be described later.

The cloud file selection section 482 is an area for selecting an image file stored in the storage 11. A selection button 485 is prepared in the cloud file selection section 482. In a case where the operation of the selection button 485 is detected, the terminal apparatus 22 proceeds from step S653 to step S670, communicates with the server system 1, and displays a selection screen of an image file uploaded by the user to the server system 1 in the past.

Also on this selection screen, one or a plurality of image files (still images and moving images) can be selected. Furthermore, a cancel operation can be performed.

In a case where the user performs the cancel operation, the terminal apparatus 22 returns from step S673 to step S650.

In a case where the user performs the selection operation of one or more image files, the terminal apparatus 22 proceeds from step S671 to step S672, and performs processing of selecting the selected one or more image files as project content and transitioning to the project editing screen 500 to be described later.

The link input section 483 is an area for inputting a link such as an external video site, and a uniform resource locator (URL) input section 486 and an OK button 487 are displayed.

When the user inputs a link (URL) by the URL input section 486 and operates the OK button 487, the terminal apparatus 22 proceeds from step S654 to step S675, and performs processing of selecting the link as project content and transitioning to the project editing screen 500 to be described later.

In the case of detecting the operation of the return button 51 on the project creation screen 480, the terminal apparatus 22 returns to the processing of the previous screen from step S655 in Fig. 44.

For example, in a case where the screen transitions from the gallery screen 400 to the project creation screen 480, the screen returns to the gallery screen 400. In a case where the screen has transitioned from the discovery screen 410 to the project creation screen 480, the screen is returned to the discovery screen 410.

### [3-11: Processing of project editing screen]

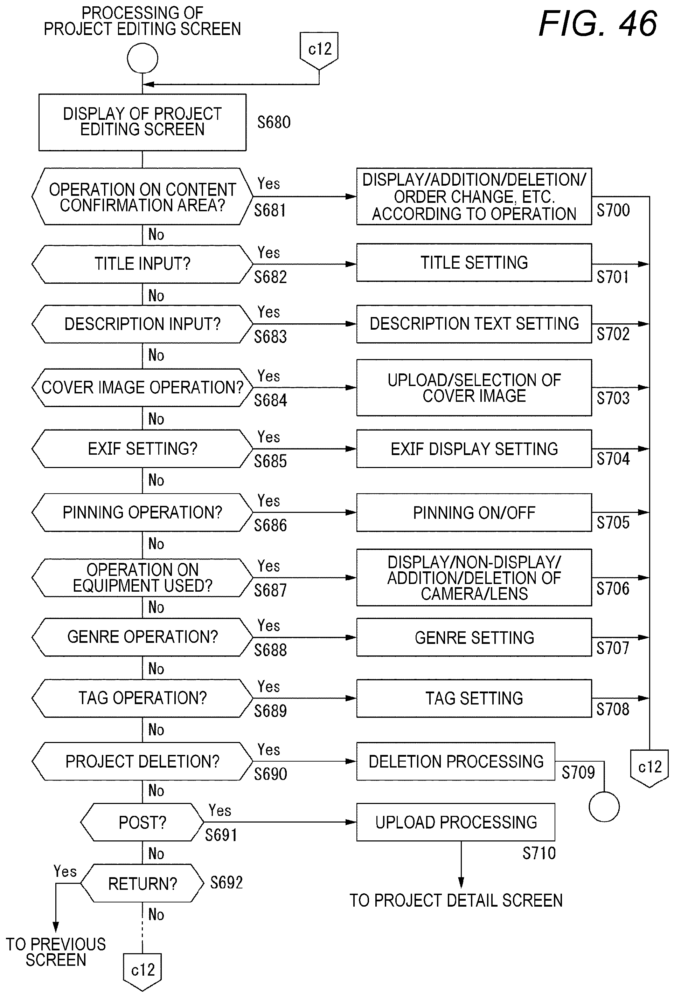

The processing of the project editing screen 500 will be described with reference to Fig. 46.

In the case of proceeding from step S601 in Fig. 39 or steps S661, S664, S672, and S675 in Fig. 44 to step S680 in Fig. 46, the terminal apparatus 22 performs display processing of the project editing screen 500 as illustrated in Fig. 47. That is, transition is made from the project detail screen 450 and the project creation screen 480 to the display of the project editing screen 500.

Then, the terminal apparatus 22 performs operation monitoring from step S681 to step S692 in Fig. 46 in a state where the display processing of the project editing screen 500 is performed.

On the project editing screen 500, an image of content (moving image, still image, and link) currently included in the project is displayed in the content confirmation area 501.

In the content confirmation area 501, a forward button 502, a return button 503, a content list 504, file addition buttons 505 and 506, a link addition button 507, a delete button 508, and an enlarged image 509 are displayed.

In the content list 504, thumbnail images of contents included in the project are displayed side by side, and one of the thumbnail images is displayed as an enlarged image 509. The enlarged image 509 can be switched to the preceding and subsequent images in the content list 504 by the forward button 502 and the return button 503.

In a case where the operation on the content confirmation area 501 is detected, the terminal apparatus 22 proceeds from step S681 to step S700 in Fig. 46, performs processing according to the operation, and returns to step S680. The processing in step S700 in this case is as follows.

A delete button 508 is displayed for each thumbnail image of the enlarged image 509 and the content list 504. In a case where the delete button 508 is operated, the terminal apparatus 22 performs processing of excluding the content from the project.

In a case where the forward button 502 or the return button 503 is operated, the terminal apparatus 22 performs processing of switching the enlarged image 509 back and forth.

Furthermore, in response to the operation of clicking the thumbnail image in the content list 504, the terminal apparatus 22 displays the image of the content as the enlarged image 509.

The terminal apparatus 22 performs processing of changing the order of the content in the project according to the drag operation of the thumbnail image in the content list 504.

The file addition buttons 505 and 506 and the link addition button 507 are operators for adding an image file and a link to a project by the operation similar to the project creation screen 480 in Fig. 45.

In response to the operation of the file addition button 505, the terminal apparatus 22 displays the image file selection screen of the local storage, and performs processing of adding the selected one or more image files to the project in response to the selection operation of the user.

In response to the operation of the file addition button 506, the terminal apparatus 22 displays a selection screen of the uploaded image file in the storage 11, and performs processing of adding the selected one or more image files to the project in response to the selection operation of the user.

In response to the operation of the link addition button 507, the terminal apparatus 22 displays the link input screen and performs processing of adding the link input by the operation of the user to the project.

These added contents are displayed as thumbnails in the content list 504.

In this manner, the user can confirm, add, delete, change the order, and the like of the content to be included in the project by the operation on the content confirmation area 501.

On the project editing screen 500, a title input section 510 is provided to enable text input. In a case where the text input to the title input section 510 is detected, the terminal apparatus 22 proceeds from step S682 to step S701, and performs processing of saving the input text as the title of the project. Then, the process returns to step S680.

On the project editing screen 500, a description text input section 511 is provided to enable text input. In a case where the text input to the description text input section 511 is detected, the terminal apparatus 22 proceeds from step S683 to step S702, and performs processing of saving the input text as a project description. Then, the process returns to step S680.

On the project editing screen 500, a cover image selection section 512 is provided. In the cover image selection section 512, an upload button 513, a return button 514, a forward button 515, and a content list 516 are displayed. An image included in the project is displayed in the content list 516. The images displayed in the content list 516 can be sequentially sent by a return button 514 and a forward button 515, and one can be set to a selected state. The selected image is set as the cover image by the upload button 513.

When detecting the operation on the cover image selection section 512, the terminal apparatus 22 proceeds from step S684 to step S703, performs the processing related to the cover image, and returns to step S680. That is, in step S703, the terminal apparatus 22 performs transmission of an image according to the return button 514 and the forward button 515, setting processing of a cover image according to the operation of the upload button 513, and the like.

Note that trimming or the like may be performed on the image to be the cover image.

On the project editing screen 500, an EXIF information selection section 520 is provided, and "display" and "not display" can be selected. In the case of detecting the operation of the EXIF information selection section 520, the terminal apparatus 22 proceeds from step S685 to step S704, performs the display setting of the EXIF information, and returns to step S680.

On the project editing screen 500, a pinning setting section 521 is provided, and it is possible to set whether or not to display (pin) the project at a predetermined position on the My Page screen 600. In a case where the operation of the pinning setting section 521 is detected, the terminal apparatus 22 proceeds from step S686 to step S705, performs on/off processing of the pinning setting, and returns to step S680.

On the project editing screen 500, an equipment setting section 530 is provided, and the camera 21, the lens barrel, and the like are displayed. In the case of detecting the operation on the equipment setting section 530, the terminal apparatus 22 proceeds from step S687 to step S706, performs processing such as display/non-display, addition, and deletion of the equipment according to the operation, and returns to step S680.

As a result, the user can set equipment to be displayed on the gear information section 460 of the project detail screen 450.

On the project editing screen 500, a genre setting section 540 is provided, and the user can check one or a plurality of genres. In a case where the operation on the genre setting section 540 is detected, the terminal apparatus 22 proceeds from step S688 to step S707, and sets the genre of the project according to the operation. Then, the process returns to step S680.

Thus, the user can arbitrarily set the category of the content of the project.

On the project editing screen 500, a tag input section 541 is provided, and the user can input one or a plurality of tags. The tag can be added by, for example, free text, and when a line is entered by a comma or an enter operation, the input text is tagged. Furthermore, a delete button is displayed for the tag so that the tag can be deleted.

In a case where the operation on the tag input section 541 is detected, the terminal apparatus 22 proceeds from step S689 to step S708, performs processing of tag setting and deletion to be added to the project according to the operation, and returns to step S680. As a result, the user can set a character string to be displayed as the tag 456 on the project detail screen 450.

On the project editing screen 500, a delete button 542 and a post button 543 are provided. In a case where the operation of the delete button 542 is detected, the terminal apparatus 22 proceeds from step S690 to step S709, and performs processing of deleting the project being edited. If a new project is being created, the project data is discarded as it is. If editing is being performed, the server system 1 is requested to delete the project.

In a case where the project is deleted in this manner, it is conceivable that the terminal apparatus 22 returns to the gallery screen 400 or the like, for example.

In a case where the operation of the post button 543 is detected, the terminal apparatus 22 proceeds from step S691 to step S710, and performs processing of uploading data of the project being edited to the server system 1. That is, the content of the project is updated. Then, the screen shifts to the project detail screen 450 of the project.

In the case of detecting the operation of the return button 51 on the project editing screen 500, the terminal apparatus 22 returns to the processing of the previous screen from step S692 in Fig. 46.

For example, the screen returns to the project detail screen 450 or the project creation screen 480.

Through the above processing of the project editing screen 500, the user can perform various types of editing on his/her own project.

Note that various editing items are assumed in addition to the examples such as enabling selection of the background color of the project.

### [3-12: Processing of My Page]

Next, the processing of My Page will be described. Note that the processing of My Page includes processing of the My Page screen 600 in a case where the sign-in user browses his/her page and processing of the My Page screen 640 in a case where the sign-in user browses a page of another creator. First, the processing of the My Page screen 600 of the user will be described.

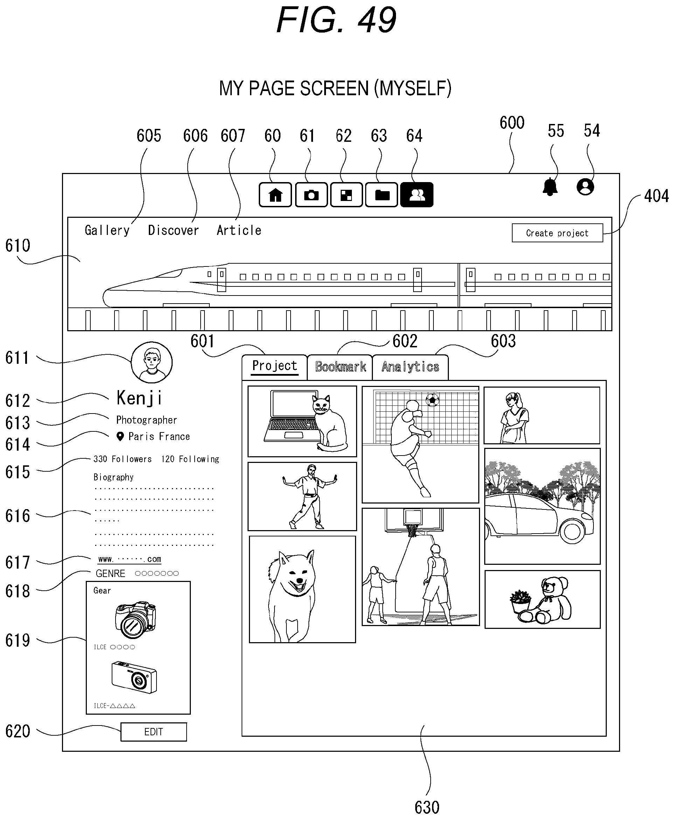

In step S405 of Fig. 32, the terminal apparatus 22 proceeds to step S720 of Fig. 48 from the gallery screen 400 or in response to the operation of the user icon 54 such as the discovery screen 410 or the project detail screen 450. In step S720, the terminal apparatus 22 displays the My Page screen 600 as illustrated in Fig. 49.

Then, processing of operation monitoring such as steps S721 to S730 is performed.

The information to be displayed on the My Page screen 600 is acquired from the user information, the image information, and the equipment information stored in the storage 11. The server apparatus 10 provides the My Page screen 600 to the terminal apparatus 22 on the basis of the information stored in the storage 11.

On the My Page screen 600, an image selected by the user as the header image 610 is displayed.

Furthermore, the My Page screen 600 is provided with a gallery button 605, a discover button 606, and an article button 607. Although not illustrated in Fig. 48, the terminal apparatus 22 transitions to the gallery screen 400, the discovery screen 410, and the article screen 430 in response to these operations.

The My Page screen 600 is provided with a project tab 601, a bookmark tab 602, and an analysis tab 603.

For example, the project tab 601 is initially selected, and in this case, the project of the user is displayed in the main area 630 as illustrated in Fig. 49.

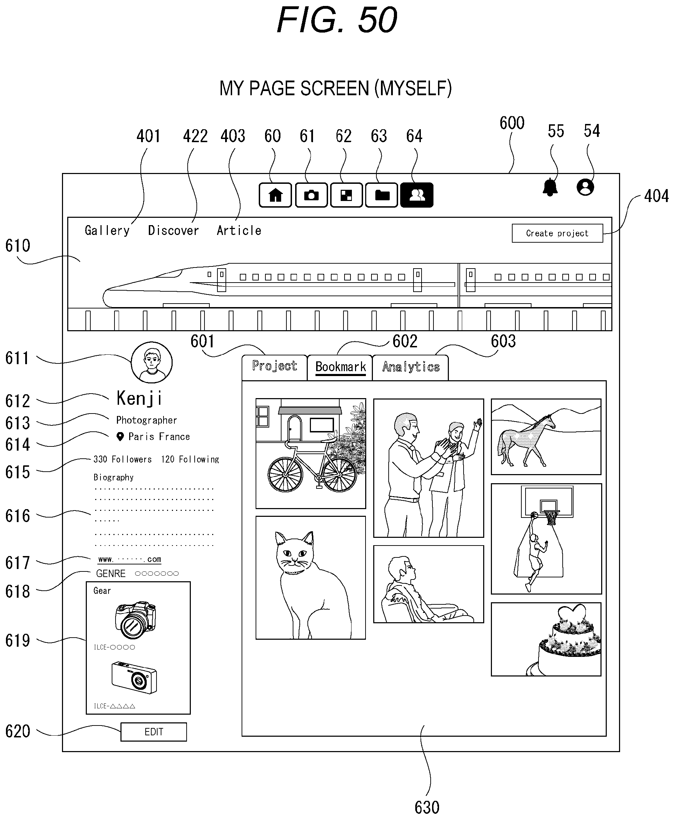

In a case where the bookmark tab 602 is selected, the terminal apparatus 22 proceeds from step S721 to step S740 in Fig. 48, and a project or content of another person bookmarked by the user is displayed in the main area 630 as illustrated in Fig. 50.

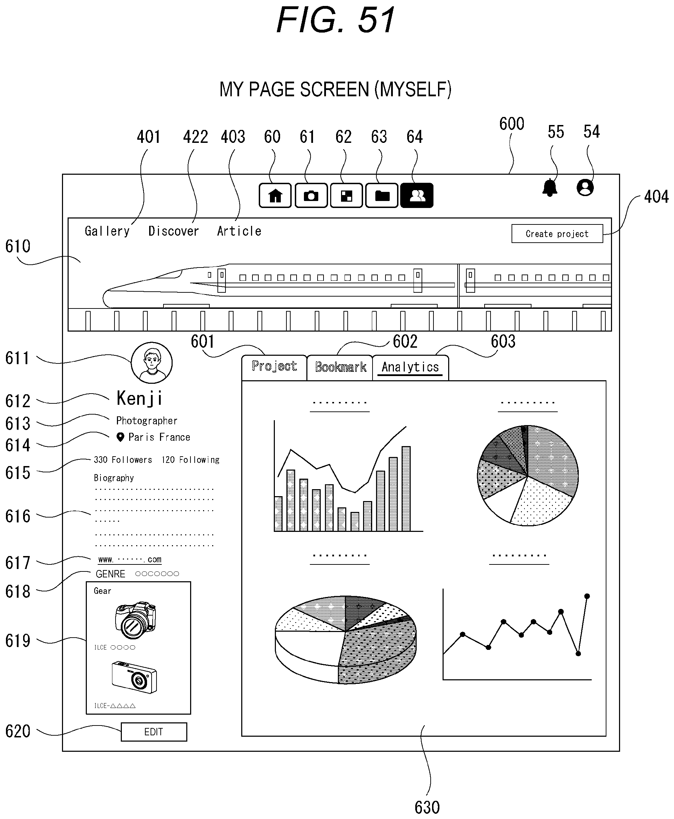

In a case where the analysis tab 603 is selected, the terminal apparatus 22 proceeds from step S722 to step S741 in Fig. 48, and the analysis information about the user is displayed in the main area 630 as illustrated in Fig. 51.

In a case where the project tab 601 is selected from the state of Fig. 50 or 51, the terminal apparatus 22 proceeds from step S723 to step S742 of Fig. 48, and returns to the display of the project of the user in the main area 630 as illustrated in Fig. 49.

In the project tab 601 as illustrated in Fig. 49, in the main area 630, a project list posted by the browsing user himself/herself is displayed, for example, in order of latest project posting date and time. However, the project set to be pinned is displayed first.

In the bookmark tab 602 as illustrated in Fig. 50, for example, the projects and the contents are displayed in a new order of the bookmarked date and time. The project and the content may be displayed in different display modes or in different areas.

A lead from the content to the project or a lead from the project to the content may be set.

In the analysis tab 603 as illustrated in Fig. 51, for example, the number of posts, the number of followers, the number of accesses, the number of views for each image, the number of views of the user's profile, and the like analyzed as weekly display or the like are displayed.

On the My Page screen 600, an avatar image 611, a name 612, an occupation 613, an activity base 614, follow information 615, a self-introduction text 616, a link 617, a genre 618, and an equipment section 619 are displayed.

The profile of the user is displayed as the avatar image 611, the name 612, the occupation 613, and the activity base 614, and the number of followers and the number of followers of the user are indicated by the follow information 615. Furthermore, the self-introduction sentence input by the user is displayed by the self-introduction text 616.

As the link 617, a link to a blog, a moving image, or the like in an external site of the user is displayed.

The activity base 614 is also a search button, and in the case of detecting the operation of the activity base 614, the terminal apparatus 22 proceeds from step S724 to step S743, performs a search using the activity base as a key, and transitions to a search result screen.

For example, the terminal apparatus 22 transmits information such as a country, a region, and a city name indicated by the activity base 614 to the server system 1, causes the server system 1 to execute project search and creator search using the information, and receives a result. Then, the search result is displayed.

In a case where the operation of the link 617 is detected, the terminal apparatus 22 proceeds from step S725 to step S744 and transitions to the website of the link destination.

The genre 618 is also a search button, and in a case where the operation of the genre 618 is detected, the terminal apparatus 22 proceeds from step S726 to step S745, performs a search using the genre as a key, and transitions to a search result screen.

For example, the terminal apparatus 22 transmits genre information to the server system 1, causes the server system 1 to execute project search and creator search using the information, and receives a result. Then, the search result is displayed.

Equipment such as a camera 21 and a lens barrel of the user registered in the portal service 30 is displayed on the equipment section 619. Note that the user can set the registered equipment information (see Fig. 7) to be published/not published, and only the equipment information set to be published is displayed in the equipment section 619.

The equipment to be displayed is also a search button, and in the case of detecting an operation on the equipment displayed in the equipment section 619, the terminal apparatus 22 proceeds from step S727 to step S746, performs a search using the equipment as a key, and transitions to a search result screen.

For example, the terminal apparatus 22 transmits a search request using the equipment information as a key to the server system 1, causes the server system 1 to execute project search or creator search, and receives a result. Then, the search result is displayed.

On the My Page screen 600, an edit button 620 is displayed. In a case where the operation of the edit button 620 is detected, the terminal apparatus 22 transitions from step S728 to processing of profile editing.

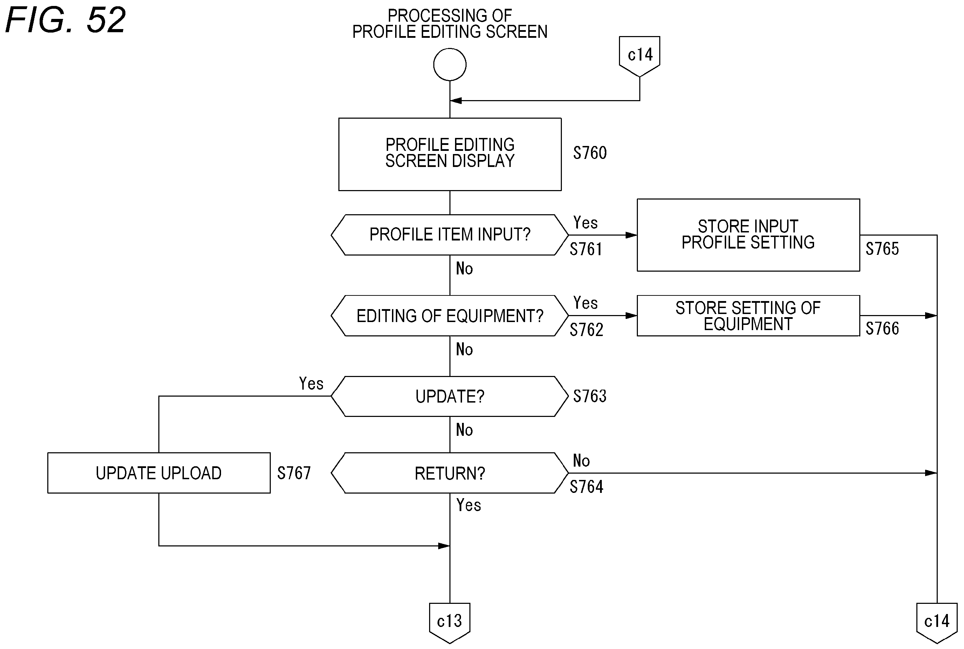

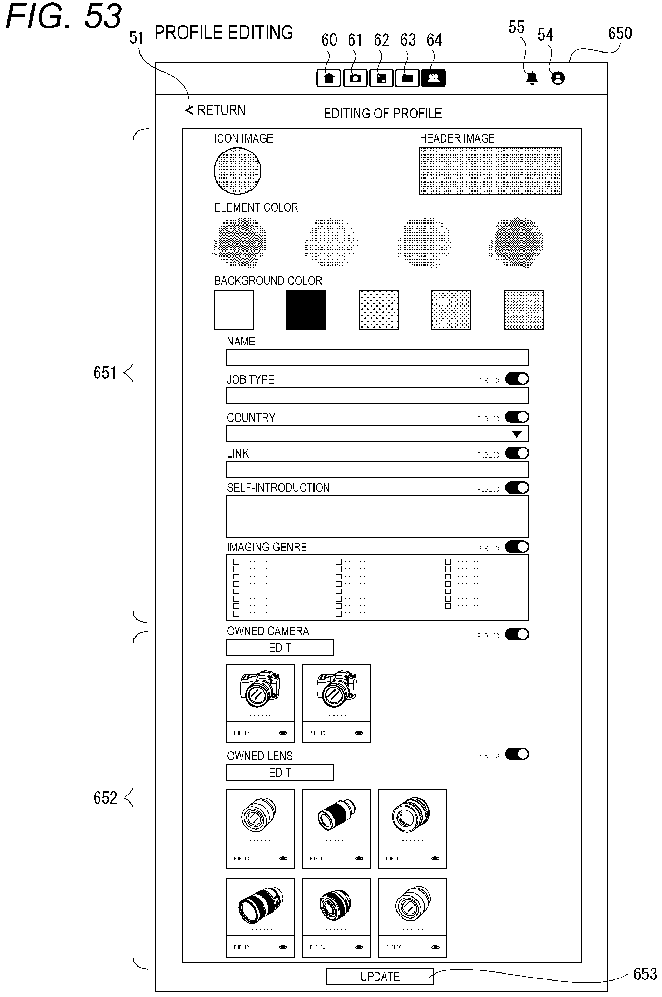

As the processing of profile editing, the terminal apparatus 22 proceeds to step S760 in Fig. 52 and displays a profile editing screen 650 as illustrated in Fig. 53.

The profile editing screen 650 is provided with a profile item input section 651, an equipment setting section 652, and an update button 653.

As the profile item input section 651, an icon image, a header image, an element color, a background color, a name, a job type, an activity base (country), a link, a self-introduction text, an imaging genre, and the like can be input/updated. That is, the items are displayed on the My Page screen 600. A pull-down menu may be displayed for some items.

In response to the operation on the profile item input section 651, the terminal apparatus 22 proceeds from step S761 to step S765 in Fig. 52, stores the input content, and returns to step S760.

In the equipment setting section 652, the camera 21, the lens barrel, and the like based on the equipment information registered in association with the user are displayed, and it is possible to select whether or not to display these on the My Page screen 600. That is, the equipment is displayed on the basis of the equipment information of Fig. 7, and the settings thereof can be changed. Note that registered equipment may be added or deleted by an operation on the equipment setting section 652.

In response to the operation on the equipment setting section 652, the terminal apparatus 22 proceeds from step S762 to step S766, stores the setting based on the input content, and returns to step S760. The setting includes display/non-display of each equipment.

In response to the operation of the update button 653, the terminal apparatus 22 proceeds from step S763 to step S767, and uploads the information input on the profile editing screen 650 at that time to the server system 1 as update information. In the server system 1, the information input on the profile editing screen 650 is updated as the user information.

As a result, the profile contents of the My Page screen 600 and the information of the equipment to be displayed are updated. Then, the terminal apparatus 22 returns to step S720 in Fig. 48. In this case, the updated new My Page screen 600 is displayed.

In a case where the user operates the return button 51 on the profile editing screen 650, the terminal apparatus 22 returns from step S764 to step S720 in Fig. 48. In this case, no update is performed.

On the My Page screen 600, projects and contents are displayed on the project tab 601 in Fig. 49 and the bookmark tab 602 in Fig. 50, but information is displayed by hovering a mouse cursor over a project or the like.

When detecting the hover, the terminal apparatus 22 proceeds from step S729 to step S747 in Fig. 48, performs processing of displaying information such as the project, and returns to step S720. For example, the terminal apparatus 22 displays the title of the project, the number of likes, the number of comments, and the like.

Furthermore, in a case where an operation such as clicking on the project is detected, the terminal apparatus 22 transitions from step S730 to the processing of the project detail screen 450 (see Fig. 39).

Next, the processing of the My Page screen 640 of another person will be described.

The terminal apparatus 22 proceeds from step S406 in Fig. 32, step S511 in Fig. 34, and the like to step S770 in Fig. 54, and may display the My Page screen 640.

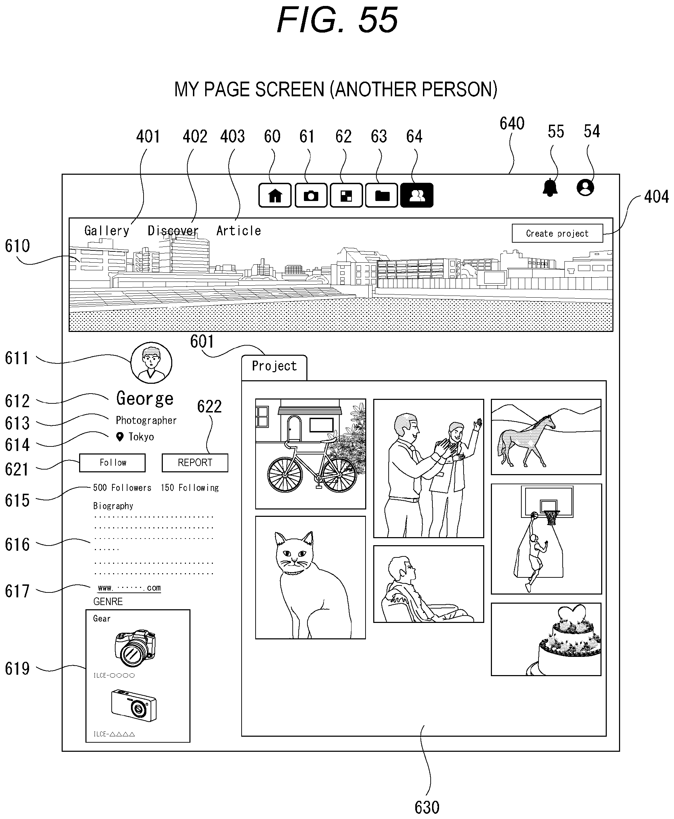

In this case, in a state where the My Page screen 640 as illustrated in Fig. 55 is displayed, operation monitoring processing such as steps S771 to S730 is performed. Note that the same step numbers are assigned to the same processing as that in Fig. 48.

The My Page screen 640 of another person in Fig. 55 differs from the My Page screen 600 of another person in the following points.

On the My Page screen 640 of another person, the tab is only the Project tab 601.

On the My Page screen 640 of another person, a follow button 621 and a report button 622 are provided.

Furthermore, the My Page screen 640 of another person is not provided with the edit button 620 illustrated in the My Page screen 600.

In the case of detecting the operation of the follow button 621 on the My Page screen 640, the terminal apparatus 22 proceeds from step S771 to step S775 in Fig. 54, and performs processing of setting or releasing the bookmark on the My Page screen 640. As a result, the user can set a bookmark of the My Page screen 640 of the creator of interest.

In a case where the operation of the report button 622 is detected, the terminal apparatus 22 proceeds from step S772 to step S776 and performs report processing. For example, the terminal apparatus 22 transitions to a report screen to enable reporting. Note that it is conceivable to hide the creator of the My Page screen 640 that has been reported from the user who has reported. In a case where the report is made, it is conceivable that the terminal apparatus 22 transitions to step S400 in Fig. 32, for example.

In Fig. 54, the processing in response to the operation detection in step S724 to step S730 by the terminal apparatus 22 is similar to that in Fig. 48, and thus redundant description is avoided.

Note that, in the processing in step S747 according to the hover for the project, the terminal apparatus 22 may display sales information (such as the in-sales icon 407 and the sales end icon 408) for the project.

### <4. Summary and modification example>

According to the above-described embodiments, the following effects can be obtained.

The information processing apparatus 70 as the terminal apparatus 22 of the embodiment includes a control unit (service-enabled control unit 71a) that acquires predetermined information from the storage 11 that commonly manages predetermined information used in a plurality of services each of which can browse information via application software or a website, and executes information presentation using the predetermined information by each of the plurality of services. For example, the terminal apparatus 22 used by the user performs processing of presenting screens of a plurality of services such as the portal service 30, the network service 31, the marketplace 32, and the content creation tool 33 to the user. The predetermined information used for the information presentation in the plurality of services is acquired from, for example, the storage 11 managed by the server apparatus 10.

Furthermore, it can also be said that the information processing apparatus 70 as the server apparatus 10 of the embodiment includes a similar control unit (service-enabled control unit 71a). For example, the server apparatus 10 provides (transmits) and presents screens of a plurality of services to the terminal apparatus 22 on the user side. The predetermined information used for the information presentation in the plurality of services is acquired from the storage 11.

With these configurations, the information processing apparatus 70 functioning as the terminal apparatus 22 or the server apparatus 10 according to the present embodiment can utilize predetermined information stored in the storage 11 in various functions between a plurality of services. Therefore, it is possible to promote efficient information management and information provision for various functions of various services.

In the embodiment, each of the plurality of services is a service having a function related to the camera 21, and the equipment information of the camera 21 and the related equipment registered for each user is exemplified as the predetermined information stored in the storage 11.

As information used in a plurality of services related to the camera 21, the storage 11 stores information (equipment information) of the camera 21, a lens barrel as related equipment, and another peripheral equipment for each user (see Fig. 7). As a result, the equipment information regarding the sign-in user is made common, and information regarding the camera 21 or the like of each user can be presented in various services.

In the embodiment, the image information registered in association with the user is taken as an example of the predetermined information stored in the storage 11.

Image data of a still image or a moving image captured and uploaded by the user with the camera 21 is stored in the storage 11 (see Fig. 7). Such image information is used among a plurality of services in relation to the user. For example, the content is used as display on the network service 31, project creation, display on the home screen 200 of the portal service 30, sales content on the marketplace 32, and the like. The image data uploaded by the user in this manner can be effectively used across various services. Therefore, there is no need to sequentially upload image data for each service.

Furthermore, a project that is image information is used not only in the network service 31 but also in the marketplace 32, the content creation tool 33, and the like.

In the embodiment, the user information registered in association with an individual user is taken as an example of the predetermined information stored in the storage 11.

User's own information input by the user on, for example, the profile editing screen 650 is stored in the storage 11 as user information (see Fig. 7). As a result, the user information can be used in various functions of the portal service 30, the network service 31, the marketplace 32, and the like, and accurate information presentation about the user (viewer, author of project, seller, etc.) can be performed. Of course, there is no need to request input of user information for each service.

The portal service 30 of the embodiment has a function of performing initial setting of the camera 21 connected for communication. Then, the terminal apparatus 22 presents the initial setting screen in the portal service 30, and performs processing of transferring the initial setting information to the camera 21 connected for communication according to the input.

For example, the camera setup screen 120, the date and time/display setting screen 130, the equipment name setting screen 140, and the like in Figs. 13 and 14 are displayed as initial setting screens, and initial setting of the camera 21 can be executed according to the input (see Fig. 11). As a result, the user can perform initial setting of the camera 21 by operating the terminal apparatus 22 instead of the operator of the camera 21. The user can easily perform an operation for initial setting of the camera 21.

Note that the terminal apparatus 22 may perform processing for initial setting for the peripheral equipment of the camera 21.

The portal service 30 of the embodiment has a function of updating a program of the camera 21 connected for communication. Then, the terminal apparatus 22 performs update necessity determination processing, download processing of the update program, or transfer processing of the update program to the imaging apparatus connected for communication.

For example, notification by the update notification screen 300 of Fig. 26, download of the main body software, transfer of the main body software to the camera 21 according to the transfer operation, and the like are performed (see steps 260 to 266 of Fig. 18).

As a result, the user can know and execute the update of the camera 21 owned by the terminal apparatus 22, and convenience is improved.

Note that the terminal apparatus 22 may perform only the necessity determination processing of updating the main body software of the camera 21, or may perform only the download and transfer processing of the update program.

Furthermore, the terminal apparatus 22 may perform processing related to update of peripheral equipment of the camera 21.

The portal service 30 of the embodiment has a diagnostic processing function of the camera 21 connected for communication, and the terminal apparatus 22 and the server apparatus 10 perform any of the transmission processing of the information of the camera 21 to be diagnosed, the diagnostic processing based on the information of the camera 21, and the reception and presentation processing of the diagnostic result.

As in the example of Fig. 19, for example, the terminal apparatus 22 transmits information of the camera 21 to the server apparatus 10, and the server apparatus 10 performs diagnosis processing. The terminal apparatus 22 receives and presents a diagnosis result from the server apparatus 10. As a result, the user can confirm the diagnosis result of the owned camera 21, and can take appropriate measures as necessary. A function extremely useful for the user using the camera 21 is provided by the portal service 30.

The portal service 30 of the embodiment has a function of remotely operating imaging of the camera 21 connected for communication, and the terminal apparatus 22 performs display processing of an operation image based on registered information of the camera 21 connected for communication.

For example, the terminal apparatus 22 displays an image (the remote operation screen 260) indicating an operator according to determination of an executable function according to the camera information of the camera 21 as the processing from step S230 to step S233 in Fig. 17.

As a result, it is possible to provide the user with the remote operation screen 260 adapted to the camera 21 to be operated, that is, the camera 21 being connected for communication, and it is possible to improve the operability of the user.

The portal service 30 of the embodiment has a function of presenting notifications related to a plurality of services, and the terminal apparatus 22 performs processing of collectively presenting notifications related to a plurality of services.

For example, in the terminal apparatus 22, in the processing of step S130 of Fig. 10, related notifications in a plurality of services are collectively presented on the announcement screen 210 of Fig. 16. For example, the notification is a notification such as "like" in the network service 31 or a notification regarding sales in the marketplace 32. As a result, the user can collectively confirm notifications for a plurality of services, and usability is improved.

In the embodiment, the portal service 30 has a function of managing the camera 21 and related equipment of an individual user, and the terminal apparatus 22 performs processing of presenting a list of the camera 21 and related equipment registered to the individual user.

For example, in the terminal apparatus 22, a list of the registered cameras 21 and the like is presented on the owned equipment list screen 240 in Fig. 21 in the processing from step S210 to step S212 in Fig. 17. As a result, the registration state of the camera 21 and the like owned by the user can be confirmed. Furthermore, by updating the registration information by editing, adding, deleting, or the like, it is possible to realize the registration of the gear according to the user's intention. In particular, it is effective for registration maintenance of camera information as information that can be used among a plurality of services.

In the embodiment, the portal service 30 has a function of managing the camera 21 and related equipment of an individual user, and the terminal apparatus 22 performs processing of additionally registering information of the camera 21 or the related equipment being connected for communication.

For example, in the terminal apparatus 22, the equipment information of the camera 21 being paired is added in the processing from step S250 to step S254 in Fig. 18. As a result, the user can easily register the equipment information.

In the embodiment, the network service 31 has a function of causing a user to create a project including image content. Furthermore, as the terminal apparatus 22, an example has been described in which processing of causing the user to select image data included in image information stored in the storage 11 in association with the user and processing of incorporating the selected image data into a project are performed.

For example, in the terminal apparatus 22, in the processing of Fig. 44 (in particular, steps S670 to S673), the user is caused to select the uploaded image using the project creation screen 480 of Fig. 45, and the selected image is processed as content for posting, that is, content included in the project. As a result, the user can use the image uploaded by the function of the portal service 30 also for project creation in the network service 31, and can effectively use the upload image.

Regarding the network service 31 of the embodiment, an example has been described in which the terminal apparatus 22 performs processing of associating information of the used camera 21 and related equipment with a project.

For example, in the terminal apparatus 22, in step S706 of Fig. 46, the camera 21 and the lens barrel are associated with the project according to the input regarding the use equipment of the user. As a result, the use equipment can also be displayed at the time of browsing the project, and the content of the project browsed by the user can be enriched.

Regarding the network service 31 of the embodiment, an example has been described in which the terminal apparatus 22 performs processing of displaying a list of projects for each user and processing of displaying details of individual projects.

For example, the terminal apparatus 22 displays a list of projects on the gallery screen 400 in Fig. 33, the discovery screen 410 in Fig. 35, the My Page screen 600 in Fig. 49, the My Page screen 640 in Fig. 55, and the like. This allows the viewer to easily check his/her own project, another person's project, a recommended project, and the like.

Furthermore, the terminal apparatus 22 displays details of each project on the project detail screen 450 in Fig. 41. As a result, the user can confirm details of the project of interest.

Regarding the network service 31 of the embodiment, an example has been described in which the terminal apparatus 22 performs processing of displaying individual projects with the sales information added thereto.

For example, the in-sales icon 407, the sales end icon 408, and the like for the project clearly indicate the sales in the marketplace 32, the sales end, and the like. As a result, the user who has browsed can easily know the sales situation. It is also useful for the user to determine browsing of the marketplace 32.

Regarding the network service 31 of the embodiment, an example has been described in which the terminal apparatus 22 performs processing of displaying the information of the camera 21 and the related equipment stored in the storage 11 in association with the user individual on the user individual page.

For example, the terminal apparatus 22 displays the user personal page as the My Page screen 600 in Fig. 49, the My Page screen 640 in Fig. 55, or the like. In these user personal pages, information of the camera 21 and the lens barrel registered for the user is displayed. As a result, the use gear of the user can be known by browsing the user personal page. This makes it possible to provide other creators with information that serves as a reference for project creation and the like.

The marketplace 32 of the embodiment is a service having a function of displaying a sales page for selling goods, and the terminal apparatus 22 performs processing of displaying goods selected according to predetermined information.

For example, in the terminal apparatus 22, goods (application software or a license) corresponding to the equipment information of the browsing user (the user who signs in) are displayed on the store screen 340 in Fig. 28. Furthermore, a project marked with a bookmark or the like by a browsing user may be displayed as goods. A project or the like selected according to information such as a genre in the user information of the user who is browsing may be displayed as goods.

In this way, by introducing the camera information or the user information of the sign-in user, a project of another person in which the sign-in user pays attention, or the like as goods, the marketplace 32 in which goods suitable for the user are displayed can be formed in cooperation of a plurality of services.

The server system 1 of the embodiment includes the storage 11 that commonly manages predetermined information used in a plurality of services each of which can browse information via application software or a website, and the server apparatus 10 that acquires predetermined information from the storage 11 and executes information presentation using the predetermined information by each of the plurality of services. As a result, the information processing apparatus 70 functioning as the server apparatus 10 of the present embodiment is realized.

Note that each processing described as processing of the terminal apparatus 22 in the embodiment can also be read as processing of the server apparatus 10. That is, the server apparatus 10 provides and displays a screen of each service on the terminal apparatus 22 by the application program or web browsing by the terminal apparatus, and causes the terminal apparatus 22 to execute a function requested via a user interface by the screen. In this sense, each processing of Figs. 9, 10, 11, 17, 18, 19, 27, 29, 32, 34, 37, 39, 40, 44, 46, 48, 52, and 54 can be understood as processing of the server apparatus 10 that causes the terminal apparatus 22 to execute display or processing of a predetermined function.

The program of the embodiment is a program for executing processing of the terminal apparatus 22 and the server apparatus 10. For example, the program is a program for causing an information processing apparatus such as a CPU or a DSP, or a device including the information processing apparatus to execute processing illustrated in Figs. 9, 10, 11, 17, 18, 19, 27, 29, 32, 34, 37, 39, 40, 44, 46, 48, 52, and 54.

That is, the program of the embodiment is a program for causing an information processing apparatus to execute: processing of acquiring predetermined information from a specific storage that commonly manages the predetermined information used in a plurality of services each of which is capable of browsing information via application software or a website; and control processing of causing each of the plurality of services to execute information presentation using the predetermined information.

With such a program, screen display by a plurality of services such as the portal service 30 and the network service 31, execution of a function including cooperation with the camera 21, effective use of information by commonization of the storage 11, and the like can be realized in, for example, a portable terminal apparatus, a personal computer, or another equipment capable of executing information processing.

Such a program can be recorded in advance in an HDD as a recording medium built in equipment such as a computer device and the like, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as what is called package software.

Furthermore, such a program may be installed from the removable recording medium into a personal computer and the like, or may be downloaded from a download site through a network such as a local area network (LAN) or the Internet.

Furthermore, such a program is suitable for providing the terminal apparatus 22 and the server apparatus 10 of the embodiment in a wide range. For example, by downloading the program to a mobile terminal apparatus such as a smartphone or a tablet, an imaging apparatus, a mobile phone, a personal computer, a still camera, a video camera, game equipment, video equipment, a personal digital assistant (PDA), or the like, the smartphone or the like can be caused to function as the terminal apparatus 22 or the server apparatus 10 of the present disclosure.

Note that the effects described in the present specification are merely examples and are not limited, and other effects may be provided.

Note that the present technology can also have the following configurations.
(1) An information processing apparatus including
   a control unit that acquires predetermined information from a specific storage that commonly manages the predetermined information used in a plurality of services each of which is capable of browsing information via application software or a website, and executes information presentation using the predetermined information by each of the plurality of services.
(2) The information processing apparatus according to (1) described above, in which
   each of the plurality of services includes a service having a function related to an imaging apparatus, and
   the predetermined information includes information on an imaging apparatus or related equipment registered for each user.
(3) The information processing apparatus according to (1) or (2) described above, in which
   the predetermined information includes image information registered in association with a user.
(4) The information processing apparatus according to any one of (1) to (3) described above, in which
   the predetermined information includes user information registered in association with an individual user.
(5) The information processing apparatus according to any one of (1) to (4) described above, in which
   one of the plurality of services includes a service having a function of performing initial setting of an imaging apparatus connected for communication, and
   regarding the service, the control unit presents an initial setting screen, and performs processing of transferring initial setting information to the imaging apparatus connected for communication according to an input.
(6) The information processing apparatus according to any one of (1) to (5) described above, in which
   one of the plurality of services includes a service having a function of updating a program of an imaging apparatus connected for communication, and
   regarding the service, the control unit performs any one of update necessity determination processing, download processing of an update program, or transfer processing of an update program to the imaging apparatus connected for communication.
(7) The information processing apparatus according to any one of (1) to (6) described above, in which
   one of the plurality of services includes a service having a diagnosis processing function of an imaging apparatus connected for communication, and
   regarding the service, the control unit performs any one of transmission processing of information on an imaging apparatus to be diagnosed, diagnosis processing based on the information on the imaging apparatus, or reception and presentation processing of a diagnosis result.
(8) The information processing apparatus according to any one of (1) to (7) described above, in which
   one of the plurality of services includes a service having a function of remotely operating imaging of an imaging apparatus connected for communication, and
   regarding the service, the control unit performs display processing of an operation image based on registered information about the imaging apparatus connected for communication.
(9) The information processing apparatus according to any one of (1) to (8) described above, in which
   one of the plurality of services includes a service having a function of presenting notifications related to the plurality of services, and
   regarding the service, the control unit performs processing of collectively presenting the notifications related to the plurality of services.
(10) The information processing apparatus according to any one of (1) to (9) described above, in which
   the predetermined information includes information on an imaging apparatus or related equipment registered for each user,
   one of the plurality of services includes a service having a function of managing an imaging apparatus or related equipment of an individual user, and
   regarding the service, the control unit performs processing of presenting a list of imaging apparatuses or related equipment registered for the individual user.
(11) The information processing apparatus according to any one of (1) to (10) described above, in which
   the predetermined information includes information on an imaging apparatus or related equipment registered for each user,
   one of the plurality of services includes a service having a function of managing an imaging apparatus or related equipment of an individual user, and
   regarding the service, the control unit performs processing of additionally registering information on an imaging apparatus or related equipment being connected for communication.
(12) The information processing apparatus according to any one of (1) to (11) described above, in which
   the predetermined information includes image information registered in association with a user,
   one of the plurality of services includes a service having a function of causing the user to create a project including image content, and
   regarding the service, the control unit performs processing of causing the user to select image data included in the image information stored in the specific storage in association with the user, and processing of incorporating the selected image data into the project.
(13) The information processing apparatus according to any one of (1) to (12) described above, in which
   one of the plurality of services includes a service having a function of causing a user to create a project including image content, and
   regarding the service, the control unit performs processing of associating information on a used imaging apparatus and related equipment with the project.
(14) The information processing apparatus according to any one of (1) to (13) described above, in which
   one of the plurality of services includes a service having a function of causing a user to create a project including image content, and
   regarding the service, the control unit performs processing of displaying a list of projects for each user and processing of displaying details of individual projects.
(15) The information processing apparatus according to (14) described above, in which
   the control unit performs processing of adding and displaying sales information for the individual projects.
(16) The information processing apparatus according to any one of (1) to (15) described above, in which
   the predetermined information includes information on an imaging apparatus or related equipment registered for each user,
   one of the plurality of services includes a service having a function of displaying a user personal page, and
   regarding the service, the control unit performs processing of displaying, on the user personal page, information on the imaging apparatus or the related equipment associated with an individual user and stored in the specific storage.
(17) The information processing apparatus according to any one of (1) to (16) described above, in which
   the predetermined information includes information on an imaging apparatus or related equipment registered for each user, image information registered in association with a user, or user information registered in association with an individual user,
   one of the plurality of services includes a service having a function of displaying a sales page for selling goods, and
   regarding the service, the control unit performs processing of displaying goods selected according to the predetermined information.
(18) An information processing apparatus including:
   a specific storage that commonly manages predetermined information used in a plurality of services each of which is capable of browsing information via application software or a website; and
   a control unit that acquires the predetermined information from the specific storage and causes each of the plurality of services to execute information presentation using the predetermined information.
(19) An information processing method including:
   acquisition processing of acquiring predetermined information from a specific storage that commonly manages the predetermined information used in a plurality of services each of which is capable of browsing information via application software or a website; and
   control processing of causing each of the plurality of services to execute information presentation using the predetermined information,
   the acquisition processing and the control processing being performed by an information processing apparatus.
(20) A program for causing an information processing apparatus to execute:
   processing of acquiring predetermined information from a specific storage that commonly manages the predetermined information used in a plurality of services each of which is capable of browsing information via application software or a website; and
   control processing of causing each of the plurality of services to execute information presentation using the predetermined information.

### REFERENCE SIGNS LIST

- 1: Server system
- 2: User equipment
- 10: Server apparatus
- 11: Storage
- 21: Camera
- 22: Terminal apparatus
- 30: Portal service
- 31: Network service
- 32: Marketplace
- 33: Content creation tool
- 34: Remote imaging function
- 35: Camera self-diagnosis function
- 36: Camera initial setting function
- 37: Camera update function
- 38: Image transfer function
- 70: Information processing apparatus
- 71: CPU
- 71a: Service-enabled control unit

## Claims

1. An information processing apparatus comprising
a control unit that acquires predetermined information from a specific storage that commonly manages the predetermined information used in a plurality of services each of which is capable of browsing information via application software or a website, and executes information presentation using the predetermined information by each of the plurality of services.

2. The information processing apparatus according to claim 1, wherein
each of the plurality of services includes a service having a function related to an imaging apparatus, and
the predetermined information includes information on an imaging apparatus or related equipment registered for each user.

3. The information processing apparatus according to claim 1, wherein
the predetermined information includes image information registered in association with a user.

4. The information processing apparatus according to claim 1, wherein
the predetermined information includes user information registered in association with an individual user.

5. The information processing apparatus according to claim 1, wherein
one of the plurality of services includes a service having a function of performing initial setting of an imaging apparatus connected for communication, and
regarding the service, the control unit presents an initial setting screen, and performs processing of transferring initial setting information to the imaging apparatus connected for communication according to an input.

6. The information processing apparatus according to claim 1, wherein
one of the plurality of services includes a service having a function of updating a program of an imaging apparatus connected for communication, and
regarding the service, the control unit performs any one of update necessity determination processing, download processing of an update program, or transfer processing of an update program to the imaging apparatus connected for communication.

7. The information processing apparatus according to claim 1, wherein
one of the plurality of services includes a service having a diagnosis processing function of an imaging apparatus connected for communication, and
regarding the service, the control unit performs any one of transmission processing of information on an imaging apparatus to be diagnosed, diagnosis processing based on the information on the imaging apparatus, or reception and presentation processing of a diagnosis result.

8. The information processing apparatus according to claim 1, wherein
one of the plurality of services includes a service having a function of remotely operating imaging of an imaging apparatus connected for communication, and
regarding the service, the control unit performs display processing of an operation image based on registered information about the imaging apparatus connected for communication.

9. The information processing apparatus according to claim 1, wherein
one of the plurality of services includes a service having a function of presenting notifications related to the plurality of services, and
regarding the service, the control unit performs processing of collectively presenting the notifications related to the plurality of services.

10. The information processing apparatus according to claim 1, wherein
the predetermined information includes information on an imaging apparatus or related equipment registered for each user,
one of the plurality of services includes a service having a function of managing an imaging apparatus or related equipment of an individual user, and
regarding the service, the control unit performs processing of presenting a list of imaging apparatuses or related equipment registered for the individual user.

11. The information processing apparatus according to claim 1, wherein
the predetermined information includes information on an imaging apparatus or related equipment registered for each user,
one of the plurality of services includes a service having a function of managing an imaging apparatus or related equipment of an individual user, and
regarding the service, the control unit performs processing of additionally registering information on an imaging apparatus or related equipment being connected for communication.

12. The information processing apparatus according to claim 1, wherein
the predetermined information includes image information registered in association with a user,
one of the plurality of services includes a service having a function of causing the user to create a project including image content, and
regarding the service, the control unit performs processing of causing the user to select image data included in the image information stored in the specific storage in association with the user, and processing of incorporating the selected image data into the project.

13. The information processing apparatus according to claim 1, wherein
one of the plurality of services includes a service having a function of causing a user to create a project including image content, and
regarding the service, the control unit performs processing of associating information on a used imaging apparatus and related equipment with the project.

14. The information processing apparatus according to claim 1, wherein
one of the plurality of services includes a service having a function of causing a user to create a project including image content, and
regarding the service, the control unit performs processing of displaying a list of projects for each user and processing of displaying details of individual projects.

15. The information processing apparatus according to claim 14, wherein
the control unit performs processing of adding and displaying sales information for the individual projects.

16. The information processing apparatus according to claim 1, wherein
the predetermined information includes information on an imaging apparatus or related equipment registered for each user,
one of the plurality of services includes a service having a function of displaying a user personal page, and
regarding the service, the control unit performs processing of displaying, on the user personal page, information on the imaging apparatus or the related equipment associated with an individual user and stored in the specific storage.

17. The information processing apparatus according to claim 1, wherein
the predetermined information includes information on an imaging apparatus or related equipment registered for each user, image information registered in association with a user, or user information registered in association with an individual user,
one of the plurality of services includes a service having a function of displaying a sales page for selling goods, and
regarding the service, the control unit performs processing of displaying goods selected according to the predetermined information.

18. An information processing apparatus comprising:
a specific storage that commonly manages predetermined information used in a plurality of services each of which is capable of browsing information via application software or a website; and
a control unit that acquires the predetermined information from the specific storage and causes each of the plurality of services to execute information presentation using the predetermined information.

19. An information processing method comprising:
acquisition processing of acquiring predetermined information from a specific storage that commonly manages the predetermined information used in a plurality of services each of which is capable of browsing information via application software or a website; and
control processing of causing each of the plurality of services to execute information presentation using the predetermined information,
the acquisition processing and the control processing being performed by an information processing apparatus.

20. A program for causing an information processing apparatus to execute:
processing of acquiring predetermined information from a specific storage that commonly manages the predetermined information used in a plurality of services each of which is capable of browsing information via application software or a website; and
control processing of causing each of the plurality of services to execute information presentation using the predetermined information.
